# EUROPÄISCHE PATENTSCHRIFT

(11) **EP 3 080 227 B1**
(45) Veröffentlichungstag und Bekanntmachung des Hinweises auf die Patenterteilung: **27.12.2017**
(21) Anmeldenummer: 14809822.1
(22) Anmeldetag: 05.12.2014
(51) Int. Cl.: C09K 8/588, C08F 220/56, C08L 33/26

(54) **VERFAHREN ZUR ERDÖLFÖRDERUNG**
METHOD FOR TRANSPORTING CRUDE OIL
PROCÉDÉ D'EXTRACTION DE PÉTROLE

(30) Priorität: 13.12.2013 EP 13197065
(43) Veröffentlichungstag der Anmeldung: 19.10.2016
(73) Patentinhaber: BASF SE, 67056 Ludwigshafen am Rhein (DE)
(72) Erfinder: LANGLOTZ, Björn, 83308 Trostberg (DE); ZIMMERMANN, Tobias, 83278 Traunstein (DE); REICHENBACH-KLINKE, Roland, 83278 Traunstein (DE); BITTNER, Christian, 64625 Bensheim (DE)
(74) Vertreter: BASF IP Association
(86) Internationale Anmeldenummer: PCT/EP2014/076772
(87) Internationale Veröffentlichungsnummer: WO 2015/086468

(56) Entgegenhaltungen:
- WO-A1-2006/002936
- WO-A1-2011/015520
- WO-A1-2012/069477
- WO-A1-2012/069478

## Beschreibung

Die vorliegende Erfindung betrifft ein Verfahren zur Förderung von Erdöl aus unterirdischen Erdöllagerstätten, bei dem man eine wässrige Formulierung umfassend mindestens ein wasserlösliches, hydrophob assoziierendes Copolymer durch mindestens eine Injektionsbohrung in eine Erdöllagerstätte mit einer Lagerstättentemperatur von 20 °C bis 120 °C einpresst und der Lagerstätte durch mindestens eine Produktionsbohrung Rohöl entnimmt, wobei das wasserlösliche Copolymer mindestens Acrylamid und/oder Derivate davon sowie eine Mischung mindestens zweier amphiphiler Makromonomere umfasst.

In natürlichen Erdölvorkommen liegt Erdöl in den Hohlräumen poröser Speichergesteine vor, welche zur Erdoberfläche hin von undurchlässigen Deckschichten abgeschlossen sind. Bei den Hohlräumen kann es sich um sehr feine Hohlräume, Kapillaren, Poren oder dergleichen handeln. Feine Porenhälse können beispielsweise einen Durchmesser von nur ca. 1 µm aufweisen. Neben Erdöl, inklusive Anteilen von Erdgas enthält eine Lagerstätte außerdem in der Regel mehr oder weniger stark salzhaltiges Wasser.

Sofern eine Erdöllagerstätte einen ausreichenden Eigendruck aufweist, strömt Erdöl nach dem Anbohren der Lagerstätte aufgrund des Eigendrucks von selbst durch das Bohrloch an die Oberfläche (primäre Erdölförderung). Selbst wenn zunächst ein ausreichender Eigendruck vorhanden ist, lässt der Eigendruck der Lagerstätte bei Entnahme von Erdöl aber in der Regel relativ schnell nach, so dass auf diese Art und Weise je nach Lagerstättentyp meist nur geringe Mengen der in Lagerstätte vorhandenen Erdölmenge gefördert werden können.

Es ist daher bekannt, bei Nachlassen der primären Förderung zusätzlich zu den Bohrlöchern, welche der Förderung des Erdöls dienen, den sogenannten Produktionsbohrungen, weitere Bohrlöcher in die erdölführende Formation zu bohren. Durch diese sogenannten Injektionsbohrungen wird Wasser in die Lagerstätte eingepresst, um den Druck aufrechtzuerhalten oder wieder zu erhöhen. Durch das Einpressen des Wassers wird das Erdöl durch die Hohlräume in der Formation langsam von der Injektionsbohrung ausgehend in Richtung der Produktionsbohrung gedrückt. Diese Technik ist als Wasserfluten bekannt und gehört zu den Techniken der so genannten sekundären Ölförderung. Beim Wasserfluten besteht aber immer die Gefahr, dass das dünnflüssige Wasser nicht gleichmäßig durch die Formation strömt und dabei Öl mobilisiert, sondern vor allem auf Wegen mit geringem Strömungswiderstand von der Injektionsbohrung zur Produktionsbohrung fließt ohne Öl zu mobilisieren, während Bereiche der Formation mit hohem Strömungswiderstand nicht oder nur wenig durchflossen werden. Man erkennt dies daran, dass der Anteil des Wassers, welches über die Produktionsbohrung gefördert wird, immer weiter zunimmt. Mittels primärer und sekundärer Förderung sind im Regelfalle nicht mehr als ca. 30 bis 35 % der in der Lagerstätte vorhandenen Erdölmenge zu fördern.

Es ist bekannt, Techniken der tertiären Erdölförderung (auch bekannt als *"Enhanced Oil Recovery (EOR)")* zur Steigerung der Ölausbeute einzusetzen, falls eine wirtschaftliche Förderung mittels primärer oder sekundärer Erdölförderung nicht oder nicht mehr möglich ist. Zur tertiären Erdölförderung gehören Verfahren, bei denen man geeignete Chemikalien, wie Tenside und/oder Polymere als Hilfsmittel zur Ölförderung einsetzt. Eine Übersicht zur tertiären Ölförderung unter Einsatz von Chemikalien findet sich beispielsweise im Artikel von D. G. Kessel, Journal of Petroleum Science and Engineering, 2 (1989) 81 - 101*.*

Zu den Techniken der tertiären Erdölförderung gehört das so genannte "Polymerfluten". Beim Polymerfluten presst man durch die Injektionsbohrungen eine wässrige Lösung eines verdickend wirkenden Polymers in die Erdöllagerstätte ein, wobei die Viskosität der wässrigen Polymerlösung an die Viskosität des Erdöls angepasst ist. Durch das Einpressen der Polymerlösung wird das Erdöl wie beim Wasserfluten durch die genannten Hohlräume in der Formation von der Injektionsbohrung ausgehend in Richtung der Produktionsbohrung gedrückt, und das Erdöl wird über die Produktionsbohrung gefördert. Dadurch dass die Polymerformulierung in etwa die gleiche Viskosität aufweist wie das Erdöl wird die Gefahr verringert, dass die Polymerformulierung ohne Effekt zur Produktionsbohrung durchbricht. Somit erfolgt die Mobilisierung des Erdöls viel gleichmäßiger als bei der Verwendung von dünnflüssigem Wasser und zusätzliches Erdöl kann in der Formation mobilisiert werden. Einzelheiten zum Polymerfluten sowie hierzu geeigneter Polymere sind beispielsweise in *"*Petroleum, Enhanced Oil Recovery, Kirk-Othmer, Encyclopedia of Chemical Technology, Online-Ausgabe, John Wiley & Sons, 2010*"* offenbart.

Es ist bekannt hydrophob assoziierende Copolymere zum Polymerfluten einzusetzen. Unter "hydrophob assoziierenden Copolymeren" versteht der Fachmann wasserlösliche Polymere, welche seiten- oder endständig hydrophobe Gruppen aufweisen, wie beispielsweise längere Alkylketten. In wässriger Lösung können derartige hydrophobe Gruppen mit sich selbst oder mit anderen hydrophobe Gruppen aufweisenden Stoffen assoziieren. Hierdurch wird ein assoziatives Netzwerk gebildet, welches eine (zusätzliche) verdickende Wirkung hervorruft. Einzelheiten zur Verwendung hydrophob assoziierender Copolymere zur tertiären Erdölförderung sind beispielsweise im Übersichtsartikel von Taylor, K.C. und Nasr-El-Din, H.A. in J. Petr. Sci. Eng. 1998, 19, 265-280 beschrieben.

WO 85/03510 A1 offenbart wasserlösliche, hydrophob assoziierende Copolymere mit einem gewichtsmittleren Molekulargewicht M_{w} von 800 000 g/mol bis 3 Mio g/mol sowie deren Verwendung zur tertiären Erdölförderung. Die Copolymere umfassen 40 bis 99,9 mol% Acrylamid, 0 bis 50 mol% Acrylsäure und 0,1 bis 10 mol% des Makromonomers H₂C=CH-COO-(EO)₅₋₄₀-R, wobei EO für Ethylenoxygruppen und R für einen Alkylrest mit 8 bis 16 Kohlenstoffatomen steht.

WO 2006/002936 A1 offenbart wasserlösliche Copolymere bestehend aus (Meth)acrylamid, mit Sulfonsäuregruppen modifiziertem (Meth)acrylamid wie beispielsweise ATBS sowie Polyalkoxygruppen umfassenden Acrylaten bzw. Allylethern. Die Polyalkoxygruppen können eine terminale Kohlenwasserstoffgruppe mit 10 bis 40 Kohlenstoffatomen umfasssen. Die Schrift offenbart weiterhin die Verwendung derartiger Copolymere als Zusatz für wässrige Baustoffsysteme, wie beispielsweise Zement, Kalk oder Gips.

WO 2010/133527 A2 offenbart hydrophob assoziierende Copolymere sowie deren Verwendung für die tertiäre Erdölförderung. Die Copolymere umfassen 25 bis 99,9 Gew.-% monoethylenisch ungesättigter, hydrophiler Monomere wie beispielsweise Acrylamid oder Acrylsäure sowie 0,1 bis 20 Gew.-% mindestens eines Makromonomers der allgemeinen Formel H₂C=CH-R-O-(EO)₁₀₋₁₅₀(AO)₅₋₁₅R', wobei EO für Ethylenoxygruppen, AO für Alkylenoxygruppen mit mindestens 4 Kohlenstoffatomen, R für eine verknüpfende Gruppe und R' für H oder einen Kohlenwasserstoffrest mit 1 bis 30 Kohlenstoffatomen steht. WO 2011/015520 A1 offenbart ein Verfahren zum Herstellen derartiger hydrophob assoziierender Copolymere durch Polymerisation in wässriger Lösung in Gegenwart von Tensiden.

WO 2012/069477 A1 offenbart ein Verfahren zur tertiären Erdölförderung aus Erdölformationen mit einer Lagerstättentemperatur von 35 bis 120 °C, bevorzugt 40 °C bis 90 °C, bei dem man ein hydrophob assoziierendes Copolymer einsetzt, welches 0,1 bis 15 Gew.-% des oben beschriebenen Makromonomers H₂C=CH-R-O-(EO)₁₀₋₁₅₀(AO)₅₋₁₅R' sowie 85 bis 99,9 Gew.-% Acrylamid bzw. Acrylamid-Derivate und monoethylenisch ungesättigte Monomere mit COOH-, SO₃H- oder PO₃H₂-Gruppen umfasst. EO, AO, R und R' haben die Bedeutung wie oben definiert. Das gewichtsmittlere Molekulargewicht M_{w} des Copolymers beträgt 1 Mio bis 3 Mio g/mol. Besonders bevorzugt handelt es sich um ein Copolymer, welches Acrylamid, 2-Acrylamido-2-methylpropansulfonsäure (ATBS) sowie das besagte Makromonomer umfasst.

WO 2012/069478 A1 offenbart ein Verfahren zur tertiären Erdölförderung, bei dem man das von WO 2012/069477 A1 beschriebene Copolymer einsetzt. Die eingesetzte Formulierung weist eine Viskosität von mindestens 5 mPas auf und wird mit einer Scherrate von mindestens 30 000 s⁻¹ in die Formation injiziert.

Unsere ältere europäische Anmeldung WO 2014/095608 A1offenbart ein Verfahren zur Herstellung von Makromonomeren H₂C=CH-R-O-(EO)₁₀₋₁₅₀(AO)₅₋₂₅(EO)₀₋₁₅R', wobei EO für Ethylenoxygruppen, AO für Alkylenoxygruppen mit mindestens 4 Kohlenstoffatomen, R für eine verknüpfende Gruppe und R' für H oder einen Kohlenwasserstoffrest mit 1 bis 4 Kohlenstoffatomen steht. Bei dem Verfahren wird ein Alkohol H₂C=CH-R-OH unter Verwendung eines basischen Katalysators enthaltend KOMe und/oder NaOMe ethoxyliert und alkoxyliert, wobei die Alkoxylierung mit Alkylenoxiden bei einer Temperatur kleiner oder gleich 135 °C durchgeführt wird und die Menge an K⁺-Ionen nicht mehr als 0,9 mol% bezüglich des Alkohols beträgt. Hierbei werden Makromonomere mit besonders geringen Anteilen vernetzend wirkender Nebenprodukte erhalten. Die Anmeldung offenbart weiterhin ein Makromonomer, welches mittels des Verfahrens erhältlich ist, Copolymere, welche das Makromonomer enthalten sowie deren Verwendung für Ölfeldanwendungen.

Unsere ältere europäische Anmeldung WO 2014/095621 A1 offenbart hydrophob assoziierende Copolymere, welche 25 bis 99,9 Gew.-% mindestens eines hydrophilen Monomers, beispielsweise Acrylamid und/oder Acrylsäure sowie 0,1 bis 20 Gew.-% mindestens eines Makromonomers H₂C=CH-R-O-(EO)₂₃₋₂₆(CH₂CH(R"))_{8,5-17,25}(EO)₀₋₁₅R' enthalten, wobei EO für Ethylenoxygruppen, R für eine verknüpfende Gruppe, R' für H oder einen Kohlenwasserstoffrest mit 1 bis 4 Kohlenstoffatomen steht, und R" für einen Kohlenwasserstoffrest mit mindestens 2 Kohlenstoffatomen steht mit der Maßgabe, dass die Summe der Kohlenstoffatome in allen Resten R" 25,5 bis 34,5 beträgt. Hierbei ist das Makromonomer mittels des in der WO 2014/095608 A1 beschriebenen Verfahrens erhältlich und die Polymerisation wird in Gegenwart eines einer nicht polymerisierbaren, oberflächenaktiven Komponente durchgeführt. WO 2014/095621 A1 offenbart weiterhin die Verwendung derartiger Copolymere für die tertiäre Erdölförderung, offenbart aber keine Details von EOR-Verfahren. Aufgrund der Verwendung von Makromonomeren mit besonders geringen Anteilen vernetzend wirkender Nebenprodukte werden Copolymere mit sehr geringen Gelanteilen erhalten.

Beim Polymerfluten handelt es sich um ein großtechnisches Verfahren. Zwar werden die verwendeten Polymere nur als verdünnte Lösungen eingesetzt, aber die pro Tag injizierten Volumina sind hoch und die Injektion wird typischerweise über Monate bis zu mehreren Jahren fortgesetzt. Der Polymerbedarf für ein durchschnittliches Ölfeld kann durchaus 5000 bis 10 000 t Polymer pro Jahr betragen. Für ein wirtschaftliches Verfahren ist daher eine möglichst hohe Viskositätseffizienz, d.h. Viskosität pro Stoffmenge von großer Bedeutung. Schon eine geringe Verbesserung der Viskositätseffizienz kann zu einer signifikanten Verbesserung der Wirtschaftlichkeit führen.

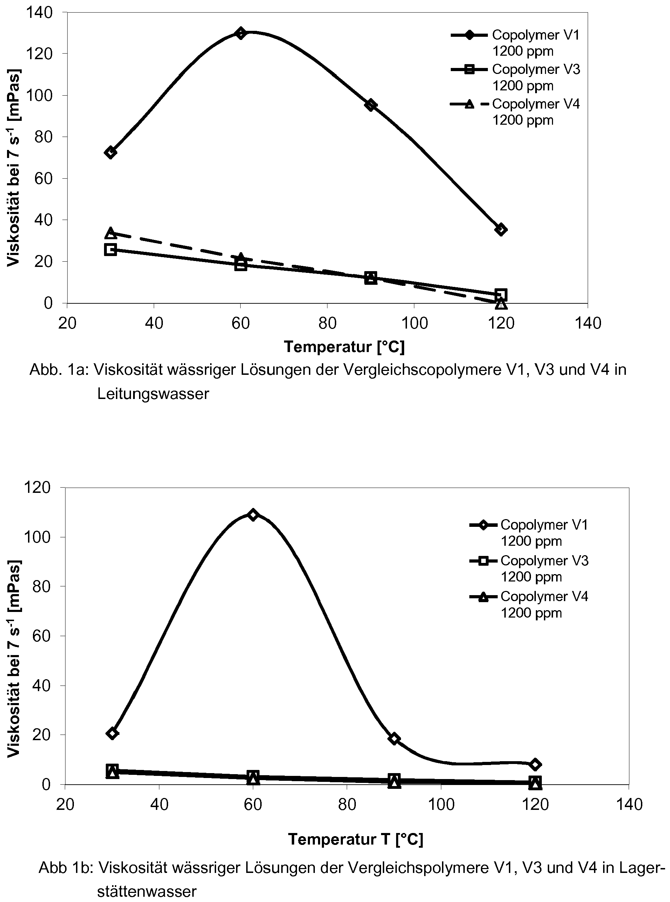

Wässrige Lösungen der assoziativen Copolymere gemäß WO 2012/069477 A1 mit den Makromonomeren H₂C=CH-R-O-(EO)₁₀₋₁₅₀(AO)₅₋₁₅R' weisen einen charakteristischen Verlauf der Viskosität in Anhängigkeit von der Temperatur ab. Abbildungen 1a und 1b der vorliegenden Anmeldung zeigen jeweils die Abhängigkeit der Viskosität wässriger Lösungen verschiedener Copolymere von der Temperatur auf, und zwar die Viskosität zweier handelsüblicher, nicht assoziativer Copolymere, nämlich eines Copolymers aus ca. 50 Gew.-% Acrylamid und ca. 50 Gew.-% Natrium-ATBS (Copolymer V3), (ATBS = Natriumsalz der 2-Acrylamido-2-methylpropansulfonsäure) eines Copolymers aus 75 mol% Acrylamid und 25 mol% Natriumacrylat (Copolymer V4) sowie weiterhin eines assoziativen Copolymers aus ca. 50 Gew.-% Acrylamid, ca. 48 Gew.-% Natrium-ATBS sowie 2 Gew.-% des besagten Makromonomers (Copolymer V1). Bei den beiden handelsüblichen, nicht assoziativen Copolymeren nimmt die Viskosität mit zunehmender Temperatur ab. Bei dem assoziativen Copolymer nimmt die Viskosität der wässrigen Lösungen zunächst deutlich zu, verläuft bei ca. 60 °C durch ein Maximum und nimmt danach wieder ab. Wässrige Lösungen der assoziativen Copolymere gemäß WO 2012/069477 A1 weisen also im Bereich um 60 °C eine hohe Viskositätseffizienz auf und erlauben daher bei Lagerstätten mit Lagerstättentemperaturen um 60 °C eine besonders wirtschaftliche Durchführung des Polymerflutens.

Es gibt aber Lagerstätten mit noch höheren Lagerstättentemperaturen. Beim Polymerfluten in derartigen Lagerstätten unter Verwendung der beschriebenen Copolymere wird Viskositätseffizienz schlechter. Es wäre daher wünschenwert, verdickende Copolymere zu Verfügung zu haben, welche auch noch bei höheren Lagerstättentemperaturen mit einer hohen Viskositätseffizienz einzusetzen sind.

Ein ganz besonderer Bedarf besteht darin, Acrylamid-Natriumacrylat-Copolymere zu verbessern. Sulfonsäuregruppen enthaltende Copolymere, beispielsweise ATBS enthaltende Copolymere, weisen deutlich höhere Viskositäten bei Verwendung in salzhaltiger Umgebung, ganz besonders bei Verwendung in hochsaliner Umgebung auf als Acrylsäure enthaltende Copolymere. Aus einer rein technischen Sicht sind daher ATBS enthaltende Copolymere Acrylsäure enthaltenden vorzuziehen. Nachteiligerweise ist aber das Monomer ATBS deutlich teurer als Acrylsäure. Acrylamid-Natriumacrylat-Copolymere finden dementsprechend aus wirtschaftlichen Gründen nach wie vor häufig Anwendung beim Polymerfluten, zumindest bei nicht zu stark salinen Lagerstätten. Es wäre daher wünschenswert, verdickende Copolymere des Acrylamid-Natriumacrylat-Typs mit einer deutlich verbesserten Viskositätseffizienz zur Verfügung zu haben.

Aufgabe der Erfindung war es daher, verbesserte verdickend wirkende Polymere zur Anwendung beim Polymerfluten zur Verfügung zu stellen.

Dementsprechend wurde ein Verfahren zur Förderung von Erdöl aus unterirdischen Erdöllagerstätten gefunden, bei dem man eine wässrige Formulierung umfassend mindestens ein verdickendes, wasserlösliches Copolymer (P) durch mindestens eine Injektionsbohrung in eine Erdöllagerstätte injiziert und der Lagerstätte durch mindestens eine Produktionsbohrung Rohöl entnimmt, wobei das wasserlösliche Copolymer (P) mindestens
(A) 30 bis 99,99 Gew.-% mindestens eines neutralen, monethylenisch ungesättigten, hydrophilen Monomers (A), ausgewählt aus der Gruppe von (Meth)acrylamid, N-Methyl(meth)acrylamid, N,N'-Dimethyl(meth)acrylamid oder N-Methylol(meth)acrylamid umfasst, sowie
(B) 0,01 bis 15 Gew.-% mindestens eines monoethylenisch ungesättigten Makromonomers (B), mindestens umfassend -neben der monoethylenisch ungesättigten Gruppe- eine hydrophile Gruppe und eine hydrophobe Gruppe,
   und wobei es sich bei mindestens einem Makromonomer (B) um eine Mischung umfassend Makromonomere (B1) und (B2) der allgemeinen Formeln
(B1)

   H₂C=C(R¹)-R²-O-(R³O)ₐ-(R⁴O)_{b}-[-(R⁴O)_{c}(R⁵O)_{d}]-H (I)

   sowie
(B2)

   H₂C=C(R¹)-R²-O-(R³O)ₐ-(R⁴O)_{b}-H (II),

   handelt, wobei die Mengenangaben jeweils auf die Gesamtmenge aller Monomere im Copolymer (P) bezogen sind, der molare Anteil x der Makromonomere (B1) bezüglich der Summe von (B1) und (B2) 0,1 bis 0,99 beträgt, und wobei die Reste und Indices die folgende Bedeutung haben:
   - R¹:: H oder Methyl,
   - R²:: eine Einfachbindung oder eine zweiwertige verknüpfende Gruppe -OR³⁵-, wobei R³⁵ für eine Alkylengruppe mit 1 bis 6 Kohlenstoffatomen steht,
   - R³:: unabhängig voneinander Ethylengruppen -CH₂CH₂-, 1,2-Propylengruppen oder Alkylengruppen R⁴, mit der Maßgabe, dass es sich bei mindestens 90 mol% der Reste R³ um Ethylengruppen handelt,
   - R⁴:: unabhängig voneinander Alkylengruppen -CR⁶(R⁷)-CR⁸(R⁹)-, wobei die Reste R⁶, R⁷, R⁸ und R⁹ unabhängig voneinander für H oder einen linearen oder verzweigten Alkylrest mit 1 bis 8 Kohlenstoffatomen stehen, mit der Maßgabe, dass nicht alle Reste für H stehen und die Summe der Kohlenstoffatome der Reste R⁶, R⁷, R⁸ und R⁹ 2 bis 8 beträgt,
   - R⁵: eine Ethylengruppe -CH₂CH₂-,
   - a: eine Zahl von 10 bis 35,
   - b: eine Zahl von 5 bis 30,
   - c: eine Zahl von 0 bis 2,
   - d: eine Zahl von 1 bis 15
   und wobei weiterhin
   - das Copolymer ein gewichtsmittleres Molekulargewicht M_{W} von 1*10⁶ g/mol bis 30*10⁶ g/mol aufweist,
   - die Menge des Copolymers in der wässrigen Formulierung 0,02 bis 2 Gew.-% beträgt, und
   - die Temperatur der Erdöllagerstätte 20 °C bis 120 °C beträgt.

In einer Ausführungsform der Erfindung werden Copolymere eingesetzt, welche zusätzlich -SO₃H Gruppen umfassende Monomere umfassen.

In einer Ausführungsform der Erfindung werden Copolymere eingesetzt, welche zusätzlich -COOH Gruppen umfassende Monomere umfassen.

In einer Ausführungsform der Erfindung werden Copolymere eingesetzt, welche zusätzlich -SO₃H Gruppen und -COOH Gruppen umfassende Monomere umfassen.

Überraschenderweise wurde gefunden, dass der kurze, terminale Poly(ethylenoxid/alkylenoxid)-block in dem Makromonomeren (B1) das Assoziieren der Copolymere in wässriger Lösung nicht wesentlich beeinträchtigt, sondern im Gegenteil zu Copolymeren mit einem verbesserten Eigenschaftsprofil führt die sich besonders gut für die tertiäre Ölförderung eignen.

In einem zweiten Aspekt der Erfindung wurden wasserlösliche Copolymere (P) der oben beschriebenen Zusammensetzung gefunden.

In einem dritten Aspekt der Erfindung wurde ein Verfahren zur Herstellung derartiger Copolymere (P) gefunden.

Zu der Erfindung ist im Einzelnen das Folgende auszuführen:

### Wasserlösliche Copolymere (P)

Für das erfindungsgemäße Verfahren zur Erdölförderung wird eine wässrige Formulierung mindestens eines verdickenden, wasserlöslichen Copolymers (P) eingesetzt, durch eine Injektionsbohrung in eine Erdöllagerstätte injiziert und der Lagerstätte durch mindestens eine Produktionsbohrung Rohöl entnommen. Ein derartiges Verfahren wird auch als "Polymerfluten" bezeichnet.

Das erfindungsgemäße bzw. das erfindungsgemäß verwendete Copolymer (P) ist ein hydrophob assoziierendes Copolymer. Der Begriff "hydrophob assoziierende Copolymere" ist dem Fachmann prinzipiell bekannt. Es handelt sich hierbei um wasserlösliche Copolymere, welche neben hydrophilen Molekülteilen hydrophobe Gruppen aufweisen. In wässriger Lösung können die hydrophoben Gruppen mit sich selbst oder mit anderen, hydrophobe Gruppen aufweisenden Stoffen aufgrund zwischenmolekularer Kräfte assoziieren. Hierdurch entsteht ein durch zwischenmolekulare Kräfte geknüpftes polymeres Netzwerk, welches die viskositätserhöhende Wirkung der Copolymere verstärkt.

Im Idealfalle sollten die erfindungsgemäß verwendeten Copolymere in beliebigem Verhältnis mit Wasser mischbar sein. Erfindungsgemäß ist es aber ausreichend, wenn die Copolymere zumindest bei der gewünschten Einsatzkonzentration und beim gewünschten pH-Wert wasserlöslich sind. Im Regelfalle sollte die Löslichkeit in Wasser bei Raumtemperatur bei den Einsatzbedingungen mindestens 25 g/l betragen.

Erfindungsgemäß umfasst das wasserlösliche, hydrophob assoziierende Copolymer 30 bis 99,99 Gew.-% mindestens eines neutralen, monethylenisch ungesättigten, hydrophilen Monomers (A), bevorzugt Acrylamid sowie 0,01 bis 15 Gew.-% mindestens eines monoethylenisch ungesättigten, amphiphilen Makromonomers (B) umfassend -neben der monoethylenisch ungesättigten Gruppe- eine hydrophile und eine hydrophobe Gruppe. Darüber hinaus können selbstverständlich noch weitere ethylenisch ungesättigte Monomere, insbesondere monoethylenisch ungesättigte Monomere vorhanden sein.

Mittels weiterer Monomere lassen sich die Eigenschaften der wasserlöslichen Copolymere modifizieren und an den gewünschten Einsatzzweck anpassen. Der Fachmann trifft hinsichtlich weiterer, ethylenisch ungesättigter Monomere je nach den gewünschten Eigenschaften des Polymers eine geeignete Auswahl.

Bei weiteren ethylenisch ungesättigten Monomeren handelt es sich insbesondere um hydrophile, monoethylenisch ungesättige Monomere, bevorzugt um solche ausgewählt aus der Gruppe von hydrophilen, anionischen monoethylenisch ungesättigten Monomeren (C), umfassend mindestens eine saure Gruppe bzw. deren Salze sowie hydrophilen, kationischen, monoethylenisch ungesättigten Monomeren (D), umfassend mindestens eine Ammoniumgruppe.

### Monomere (A)

Erfindungsgemäß umfasst das Copolymer (P) mindestens ein neutrales, monethylenisch ungesättigtes, hydrophiles Monomer (A), ausgewählt aus der Gruppe von (Meth)acrylamid, N-Methyl(meth)acrylamid, N,N'-Dimethyl(meth)acrylamid oder N-Methylol(meth)acrylamid. Bevorzugt handelt es sich um (Meth)acrylamid, insbesondere um Acrylamid. Sofern Gemische verschiedener Monomere (A) eingesetzt werden, sollte es sich bei zumindest 50 mol% der Monomere (A) um (Meth)acrylamid, bevorzugt Acrylamid handeln.

Erfindungsgemäß beträgt die Menge der Monomere (A) 30 bis 99,99 Gew.-% bezüglich der Summe aller Monomere im Copolymer (P), bevorzugt 30 bis 99,9 Gew.-%, insbesondere 35 Gew.-% bis 99,5 Gew.-% und beispielsweise 45 bis 99,5 Gew.-%.

### Makromonomere (B)

Das Copolymer (P) umfasst mindestens ein amphiphiles, monoethylenisch ungesättigtes Makromonomer (B) umfassend -neben der monoethylenisch ungesättigten Gruppe- eine hydrophile Gruppe Y und eine hydrophobe Gruppe Z. Optional kann noch ein Spacer X zwischen der monoethylenischen Gruppe und der Gruppe Y vorhanden sein. Die Makromonomere B können insbesondere den nachfolgenden Aufbau H₂C=C(R¹)-X-Y-Z oder H₂C=C(R¹)-Y-Z aufweisen.

Erfindungsgemäß handelt es sich bei mindestens einem der Makromonomeren (B) um eine Mischung mindestens umfassend Makromonomere (B1) und (B2) der allgemeinen Formeln
(B1)

   H₂C=C(R¹)-R²-O-(R³O)ₐ-(R⁴O)_{b}-[-(R⁴O)_{c}(R⁵O)_{d}]-H (I)

   sowie
(B2)

   H₂C=C(R¹)-R²-O-(R³O)ₐ-(R⁴O)_{b}-H (II).

Die Reste und Indices in den Formeln (I) und (II) haben hierbei die nachfolgend geschilderte Bedeutung.

R¹ steht für H oder eine Methylgruppe, bevorzugt für H.

R² steht für eine Einfachbindung oder bevorzugt eine zweiwertige verknüpfende Gruppe -OR³⁵-, wobei R³⁵ für eine lineare oder verzweigte Alkylengruppe mit 1 bis 6 Kohlenstoffatomen steht. Bevorzugt handelt es sich bei R⁶ um eine lineare 1,ω-Alkylengruppe -(CH₂)ₖ-, bei k für 1 bis 6, bevorzugt 3 bis 6 und besonders bevorzugt für 4 steht.

Die Reste R³ stehen unabhängig voneinander Ethylengruppen -CH₂CH₂-, 1,2-Propylengruppen -CH₂CH(CH₃)- oder 1,2-Alkylengruppen R⁴, mit der Maßgabe, dass es sich bei mindestens 90 mol% der Reste R³ um Ethylengruppen handelt. Bevorzugt handelt es sich mindestens 95 mol% der Reste R³ um Ethylengruppen und ganz besonders bevorzugt handelt es sich bei den Resten R³ ausschließlich um Ethylengruppen. Bei -(R³O)ₐ- handelt es sich also um einen Block, welcher im Wesentlichen aus Ethylenoxygruppen besteht und daneben optional geringe Mengen an höheren Alkylenoxygruppen umfassen kann.

Der Index a steht für eine Zahl von 10 bis 35, bevorzugt 15 bis 30, besonders bevorzugt 20 bis 28 und beispielsweise 23 bis 26.

Die Reste R⁴ stehen unabhängig voneinander für Alkylengruppen -CR⁶R⁷-CR⁸R⁹-, wobei die Reste R⁶, R⁷, R⁸ und R⁹ unabhängig voneinander für H oder einen linearen oder verzweigten Alkylrest mit 1 bis 8 Kohlenstoffatomen, bevorzugt 1 bis 3 Kohlenstoffatomen stehen, mit der Maßgabe, dass nicht alle Reste für H stehen und die Summe der Kohlenstoffatome der Reste R⁶, R⁷, R⁸ und R⁹ 2 bis 8, bevorzugt 2 oder 3 beträgt. Bei den Resten kann es sich beispielsweise um Methyl-, Ethyl- oder Propylreste handeln. Bei -(R⁴O)_{b}- handelt es sich also um einen Block aus Alkylenoxygruppen, welche mindestens 4 Kohlenstoffatome umfassen.

In einer Ausführungsform der Erfindung stehen in den Resten R⁴ jeweils 2 oder 3, bevorzugt 3 der Reste R⁶, R⁷, R⁸ und R⁹ für H. In einer Ausführungsform stehen in den Resten R⁴ jeweils 2 oder 3, bevorzugt 3 der Reste R⁶, R⁷, R⁸ und R⁹ für H, wobei die Summe der Kohlenstoffatome der Reste R⁶, R⁷, R⁸ und R⁹ jeweils 2 oder 3 beträgt.

In einer Ausführungsform der Erfindung beträgt die Summe Kohlenstoffatome der Reste R⁶, R⁷, R⁸ und R⁹ jeweils 2, wobei bei mindestens 70 mol%, bevorzugt mindestens 80 mol% und besonders bevorzugt mindestens 95 mol% der Einheiten -CR⁶R⁷CR⁸R⁹- R⁶, R⁷ und R⁸ für H und R⁹ für Ethyl stehen. In dieser Ausführungsform handelt es sich bei -R⁴O- also um Butylenoxygruppen, bevorzugt um Butylenoxygruppen, die sich im Wesentlichen von 1,2-Butenoxid ableiten.

In einer Ausführungsform der Erfindung beträgt die Summe der Kohlenstoffatome der Reste R⁶, R⁷, R⁸ und R⁹ jeweils 3, wobei bei mindestens 70 mol%, bevorzugt mindestens 80 mol% und besonders bevorzugt mindestens 95 mol% der Einheiten -CR⁶R⁷CR⁸R⁹- R⁶, R⁷ und R⁸ für H und R⁹ für n-Propyl stehen. In dieser Ausführungsform handelt es sich bei -R⁴O- also um Pentylenoxygruppen, besonders bevorzugt für Pentylenoxygruppen, die sich im Wesentlichen von 1,2-Pentenoxid ableiten.

Der Index b steht für eine Zahl von 5 bis 30, insbesondere 5 bis 25, bevorzugt 7 bis 25, besonders bevorzugt 8 bis 20 und beispielsweise 8 bis 18 oder beispielsweise 12 bis 20.

R⁵ steht für eine Ethylengruppe -CH₂CH₂-.

In obiger Formel (I) steht -[(R⁴O)_{c}(R⁵O)_{d}]- für einen Alkylenoxidblock, welcher Ethylenoxyeinheiten -R⁵O- sowie optional Alkylenoxyeinheiten -R⁴O- wie oben definiert umfasst, wobei die Einheit -R⁵O- und -R⁴O- in aller Regel statistisch angeordnet sind, aber auch blockweise oder alternierend angeordnet sein können.

Der Index c steht für eine Zahl von 0 bis 2, insbesondere 0 bis 1,5 und beispielsweise 0,1 bis 1.

Der Index d steht für eine Zahl von 1 bis 15, bevorzugt 1,5 bis 10 und besonders bevorzugt 2 bis 5.

In Formel (I) sind die Gruppen -(R³O)ₐ-, -(R⁴O)_{b}- sowie -[(R⁴O)_{c}(R⁵O)_{d}]- in der in Formel (I) gezeigten Reihenfolge angeordnet und in Formel (II) sind die Gruppen -(R³O)ₐ- und -(R⁴O)_{b}- in der in den Formel (II) gezeigten Reihenfolge angeordnet.

Für den Fachmann auf dem Gebiet der Polyalkoxylate ist klar, dass bei einer Alkoxylierung eine Verteilung von Kettenlängen erhalten wird, und dass es sich bei den Indices a, b, c und d um Mittelwerte über alle Moleküle handelt. Die Indices a, b, c und d sind dementsprechend nicht natürliche Zahlen, sondern rationale Zahlen.

Für das Makromonomer (B1) bedeutet dies beispielsweise, dass auch bei Werten von c > 0 in der Mischung Makromonomere vorhanden sind, die keine Einheiten R⁴O aufweisen, während andere Makromonomere (B1) eine oder auch mehr als eine Einheit R⁴O aufweisen.

Erfindungsgemäß beträgt der molare Anteil x der Makromonomere (B1) bezüglich der Summe von (B1) und (B2) 0,1 bis 0,99, insbesondere 0,3 bis 0,99, bevorzugt 0,3 bis 0,95, besonders bevorzugt 0,45 bis 0,9, ganz besonders bevorzugt 0,5 bis 0,9 und beispielsweise 0,5 bis 0,8.

In einer bevorzugten Ausführungsform der Erfindung wird die Anzahl b+c der vorhandenen Reste R⁴O mit der Maßgabe gewählt, dass die Summe aller Kohlenstoffatome in allen vorhandenen Resten R⁶, R⁷, R⁸ und R⁹ zusammen 25 bis 50, bevorzugt 28 bis 46 beträgt Mit anderen Worten gesagt, ist bei dieser Ausführungsform die Anzahl der Reste R⁴O umso geringer, je mehr Kohlenstoffatome die Alkylenoxyeinheiten R⁴O umfassen.

In einer weiteren Ausführungsform der Erfindung stehen in R⁴ 2 oder 3, bevorzugt 3 der Reste R⁶, R⁷, R⁸ und R⁹ für H, wobei die Summe der Kohlenstoffatome der Reste R⁶, R⁷, R⁸ und R⁹ 2 oder 3, wobei die Anzahl b+c der vorhandenen Reste R⁴O mit der Maßgabe gewählt wird, dass die Summe aller Kohlenstoffatome in allen vorhandenen Resten R⁶, R⁷, R⁸ und R⁹ zusammen 25 bis 50, bevorzugt 28 bis 46 beträgt.

In einer bevorzugten Ausführungsform der Erfindung handelt es sich bei den Makromonomeren (B) um Makromonomere (B1) und (B2) bei denen R³ für Ethylengruppen steht und die Summe der Kohlenstoffatome der Reste R⁶, R⁷, R⁸ und R⁹ 2 beträgt, wobei bei mindestens 70 mol%, bevorzugt mindestens 80 mol% und besonders bevorzugt mindestens 95 mol% der Einheiten - CR⁶R⁷CR⁸R⁹- R⁶, R⁷ und R⁸ für H und R⁹ für Ethyl stehen. Mit anderen Worten gesagt handelt es sich bei den Resten R⁴ um Butylengruppen. Weiterhin steht a für eine Zahl von 20 bis 28, bevorzugt 23 bis 26, b für eine Zahl von 10 bis 25, bevorzugt 14 bis 23, besonders bevorzugt 14 bis 20, ganz besonders bevorzugt 14 bis 18, c für 0 bis 1,5 bevorzugt 0,5 bis 1,5, d für eine Zahl von 1,5 bis 10, bevorzugt 1,5 bis 5. Der molare Anteil x der Makromonomere (B1) beträgt bei dieser Ausführungsform insbesondere 0,3 bis 0,95, bevorzugt 0,45 bis 0,9 bezüglich der Summe der Monomere (B1) und (B2) zusammen.

In einer weiteren Ausführungsform der Erfindung handelt es sich bei den Makromonomeren (B) um Makromonomere (B1) und (B2) bei denen R³ für Ethylengruppen steht, die Summe der Kohlenstoffatome der Reste R⁶, R⁷, R⁸ und R⁹ 3 beträgt, wobei bei mindestens 70 mol%, bevorzugt mindestens 80 mol% und besonders bevorzugt mindestens 95 mol% der Einheiten - CR⁶R⁷CR⁸R⁹- R⁶, R⁷ und R⁸ für H und R⁹ für n-Propyl stehen. Mit anderen Worten gesagt handelt es sich bei den Resten R⁴ um Pentylengruppen. Weiterhin steht a für eine Zahl von 20 bis 28, bevorzugt 23 bis 26, b für eine Zahl von 5 bis 16, bevorzugt 8 bis 12, c für 0 bis 1,5 bevorzugt 0,5 bis 1,5, d für eine Zahl von 1,5 bis 10, bevorzugt 1,5 bis 5. Der molare Anteil x der Makromonomere (B1) beträgt bei dieser Ausführungsform insbesondere 0,3 bis 0,95, bevorzugt 0,45 bis 0,9 bezüglich der Summe der Monomere (B1) und (B2) zusammen.

Neben den Makromonomeren (B1) und (B2) können selbstverständlich noch weitere, davon verschiedene amphiphile, hydrophobe und hydrophile Gruppen umfassende Makromonomere vorhanden sein. Derartige Makromonomere sind dem Fachmann prinzipiell bekannt. Es kann sich dabei insbesondere um Derivate von Acrylamid, Acrylsäure, Maleinsäure, Vinyl- oder Allyleinheiten handeln. Beispiele umfassen insbesondere Makromonomere auf Basis von (Meth)acrylsäure der allgemeinen Formel H₂C=C(R¹⁸)-COO-(CH₂CH₂O)ₗ-R¹⁹, wobei R¹⁸ für H oder Methyl, I für eine Zahl von 5 bis 50 und R¹⁹ für eine Kohlenwasserstoffgruppe mit 8 bis 36 Kohlenstoffatomen steht. Weitere Beispiele umfassen kationische Monomere der allgemeinen Formel H₂C=C(R¹⁸)-CO-NH-R³⁶-N⁺(CH₃)₂R³⁷ X-, wobei R³⁶ für eine Alkylengruppe mit 2 bis 6 Kohlenstoffatomen, bevorzugt eine 1,ω-Alkylengruppe mit 2 bis 6 Kohlenstoffatomen, R³⁷ für eine Kohlenwasserstoffgruppe mit 8 bis 30 Kohlenstoffatomen und X⁻ für ein Anion steht.

Falls neben den Makromonomeren (B1) und (B2) noch weitere Makromonomere (B) vorhanden sind, sollte der Anteil an (B1) und (B2) mindestens 50 Gew.-% bezüglich der Summe aller eingesetzten Makromonomere betragen, bevorzugt mindestens 80 Gew.-%. Besonders bevorzugt sind ausschließlich Makromonomere (B1) und (B2) vorhanden.

Erfindungsgemäß beträgt die Menge der Makromonomere (B), bevorzugt die Gesamtmenge von (B1) und (B2) 0,01 bis 15 Gew.-% bezüglich der Summe aller Monomere im Copolymer (P), bevorzugt 0,1 bis 10 Gew.-%, besonders bevorzugt 0,5 bis 8 Gew.-%, ganz besonders bevorzugt 0,8 bis 5 Gew.-% und beispielsweise 1 bis 2,5 Gew.-%.

### Herstellung der Makromonomere (B1) und (B2)

Die Herstellung der Makromonomere (B1) und (B2) kann in prinzipiell bekannter Art und Weise durch Alkoxylierung eines monoethylenisch ungesättigten Alkohols der allgemeinen Formel H₂C=C(R¹)-R²-OH (III) erfolgen, wobei R¹ und R² die oben geschilderte Bedeutung haben.

Der Alkohol H₂C=C(R¹)-R²-OH (III) kann in einem dreistufigen Verfahren alkoxyliert werden.

In einem ersten Schritt (S1) wird zunächst mit der gewünschten Menge Ethylenoxid, optional mit einem Gemisch aus Ethylenoxid sowie nicht mehr als 10 mol% höheren Alkylenoxiden alkoxyliert. Hierbei entsteht ein alkoxylierter Alkohol der allgemeinen Formel H₂C=C(R¹)-R²-O-(R³O)ₐ-H (IV), wobei R³ die oben geschilderte Bedeutung hat.

In einem zweiten Schritt (S2) wird der alkoxylierte Alkohol H₂C=C(R¹)-R²-O-(R³O)ₐ-H (IV) mit Alkylenoxiden der allgemeinen Formel (V) 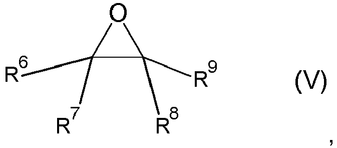 umgesetzt, wobei R⁶, R⁷, R⁸ und R⁹ die eingangs definierte Bedeutung haben. Bei dieser Alkoxylierung entsteht das bereits beschriebene Makromonomer (B2) der allgemeinen Formel H₂C=C(R¹)-R²-O-(R³O)ₐ-(R⁴O)_{b}-H (II).

Das Makromonomer (B2) wird in einem dritten Schritt (S3) mit Ethylenoxid umgesetzt, wobei die obige Mischung umfassend Makromonomere (B1) und (B2) entsteht.

Die Durchführung einer Alkoxylierung einschließlich der Herstellung von Blockcopolymeren aus verschiedenen Alkylenoxiden ist dem Fachmann prinzipiell bekannt. Es ist dem Fachmann ebenfalls bekannt, dass man durch die Reaktionsbedingungen, insbesondere die Wahl des Katalysators, die Molekulargewichtsverteilung der Alkoxylate sowie die Orientierung von Alkylenoxideinheiten in einer Polyetherkette beeinflussen kann.

Die Alkoxylierung kann insbesondere durch basenkatalysierte Alkoxylierung vorgenommen werden. Im ersten Schritt (S1) kann der als Ausgangsmaterial verwendete Alkohol in einem Druckreaktor mit Alkalihydroxiden, bevorzugt Kaliumhydroxid oder mit Alkalialkoholaten wie beispielsweise Natriummethylat versetzt werden. Durch verminderten Druck (bspw. <100 mbar) und/oder Erhöhung der Temperatur (30 bis 150 °C) kann noch in der Mischung vorhandenes Wasser entfernt werden. Der Alkohol liegt danach als das entsprechende Alkoholat vor. Anschließend wird mit Inertgas (z.B. Stickstoff) inertisiert und in einem ersten Schritt werden Ethylenoxid, optional im Gemisch mit geringen Mengen Propylenoxid und/oder höheren Alkylenoxiden bei Temperaturen von 120 bis 160 °C, bevorzugt 130 bis 150 °C schrittweise zugegeben. Die Zugabe erfolgt typischerweise innerhalb von 5 bis 15 h, ohne dass die Erfindung darauf beschränkt sein soll. Nach Beendigung der Zugabe lässt man das Reaktionsgemisch zweckmäßigerweise nachreagieren, beispielsweise für ½ h bis 1 h.

In einem zweiten Schritt (S2) dosiert man anschließend Alkylenoxide der allgemeinen Formel (IV) schrittweise zu. Die Reaktionstemperatur in der zweiten Stufe kann beibehalten werden oder auch verändert werden, wobei es sich bewährt hat, in der 2. Stufe eine Temperatur von 135 °C nicht zu überschreiten. Bei höheren Temperaturen besteht die Gefahr, insbesondere bei längeren Reaktionszeiten, dass bei der Alkoxylierung in geringen Mengen vernetzende Nebenprodukte gebildet werden. Derartige Nebenprodukte sind höchst unerwünscht, denn sie führen in der Polymerisation zu einem Anstieg von Gelanteilen im Polymer. Da das Polymer beim Polymerfluten durch Poren mit einer Größe von nur wenigen Mikrometern gepresst werden muss, sind bereits geringe Gelanteile äußert störend, weil sie zur Verstopfung der Formation führen können.

Im dritten Schritt (S3) gibt man dann nochmals Ethylenoxid zu. Der S3 erfolgt insbesondere ohne weitere Zugabe eines alkalischen Katalysators und wird insbesondere bei einem Druck im Bereich von 1*10⁵ Pa bis 7*10⁵ Pa, bevorzugt von 1*10⁵ Pa bis 5*10⁵ Pa , und einer Temperatur im Bereich von 120 °C bis 140 °C, besonders bevorzugt von 125 bis 135 °C, durchgeführt. Die Ethoxylierung in Schritt S3 erfolgt insbesondere über einen Zeitraum von 0,5 bis 7 h, insbesondere 0,5 bis 5 h, bevorzugt von 0,5 bis 4 h.

Die Alkoxylierung kann auch mittels Techniken vorgenommen werden, welche zu engeren Molekulargewichtsverteilungen führen als bei der basenkatalysierten Synthese. Hierzu können als Katalysator beispielsweise Doppelhydroxidtone wie in DE 43 25 237 A1 beschrieben eingesetzt werden. Die Alkoxylierung kann besonders bevorzugt unter Verwendung von Doppelmetallcyanid-Katalysatoren (DMC-Katalysatoren) erfolgen. Geeignete DMC-Katalysatoren sind beispielsweise in der DE 102 43 361 A1, insbesondere den Abschnitten [0029] bis [0041] sowie der darin zitierten Literatur offenbart. Beispielsweise können Katalysatoren vom Zn-Co-Typ eingesetzt werden. Zur Durchführung der Reaktion kann der als Ausgangsmaterial verwendete Alkohol mit dem Katalysator versetzt werden, die Mischung wie oben beschrieben entwässert und mit den Alkylenoxiden wie beschrieben umgesetzt werden. Üblicherweise werden nicht mehr als 250 ppm Katalysator bzgl. der Mischung eingesetzt, und der Katalysator kann aufgrund dieser geringen Menge im Produkt verbleiben.

Die Alkoxylierung kann weiterhin auch säurekatalysiert vorgenommen werden. Bei den Säuren kann es sich um Brönstedt- oder Lewissäuren handeln. Zur Durchführung der Reaktion kann der als Ausgangsmaterial verwendete Alkohol mit dem Katalysator versetzt, die Mischung wie oben beschrieben entwässert werden und mit den Alkylenoxiden wie beschrieben umgesetzt werden. Am Ende der Reaktion kann der saure Katalysator durch Zugabe einer Base, beispielsweise KOH oder NaOH neutralisiert und bei Bedarf abfiltriert werden. Im Fall von säurelabilen Vinylethern als Alkoholen der allgemeinen Formel (III) wird auf eine säurekatalysierte Alkoxylierung meist verzichtet.

Durch die geschilderte Durchführung der drei Schritte S1, S2 und S3 wird eine Mischung umfassend Makromonomere (B1) und (B2) im bereits geschilderten Mengenverhältnis erhalten. Die Bildung einer Mischung kann wie folgt erklärt werden: Nach dem zweiten Alkoxylierungsschritt (S2) mit Alkylenoxiden der Formel (V) werden zunächst Makromonomere (B2) der allgemeinen Formel H₂C=C(R¹)-R²-O-(R³O)ₐ-(R⁴O)_{b}-H (II) erhalten. In Formel (II) weist die Polyoxyalkylenkette je nach Art der eingesetzten Alkylenoxide eine sekundäre (oder sogar eine tertiäre) Alkoholgruppe als terminale Gruppe auf, nämlich eine Gruppe -CR⁶(R⁷)-CR⁸(R⁹)-OH. Beim weiteren Umsetzen mit Ethylenoxid in Schritt (S3) entstehen Moleküle mit terminalen, primären OH-Gruppen, nämlich -CR⁶(R⁷)-CR⁸(R⁹)-O-CH₂CH₂OH. Da primäre OH-Gruppen reaktiver sind als sekundäre oder tertiäre OH-Gruppen, reagieren die primären OH-Gruppen bevorzugt mit weiterem Ethylenoxid. Das in Schritt (II) zugegebene Ethylenoxid reagiert also nicht gleichmäßig mit den nach Schritt S2 vorhandenen Makromonomeren (B2) der allgemeinen Formel H₂C=C(R¹)-R²-O-(R³O)ₐ-(R⁴O)_{b}-H (II). Hat erst einmal ein Teil der Makromonomere (B2) mit Ethylenoxid zu H₂C=C(R¹)-R²-O-(R³O)ₐ-(R⁴O)_{b}-CH₂CH₂OH reagiert, dann reagieren diese Zwischenprodukte bevorzugt mit weiterem Ethylenoxid. Da die Menge an Ethylenoxid in Schritt S3 relativ gering ist, hat diese unterschiedliche Reaktivität zur Folge, dass ein Teil der (B2) Moleküle gar nicht reagieren, während andere überproportional reagieren. Gibt man also p Äquivalente Ethylenoxid zu und beträgt der Anteil der Anteil der Makromonomere (B1) im Gemisch x, dann lässt sich daraus der Wert von d = p/x errechnen. Selbstverständlich kann man d auch analytisch bestimmen.

Die Alkoxylierung in Schritt (S2) verläuft je nach Reaktionsbedingungen vollständig oder nicht vollständig, so dass geringe Menge der Alkylenoxide (V) im Reaktionsgemisch verbleiben können, ohne reagiert zu haben. Dies kann insbesondere bei der oben beschriebenen bevorzugten Alkoxylierung bei nicht mehr als 135 °C der Fall sein. Reste der Alkylenoxide (V) können vor der abschließenden Ethoxylierung selbstverständlich in üblicher Art und Weise abgetrennt werden. Es ist aber auch möglich, diese für die Alkoxylierung im Produkt zu belassen. Es wurde gefunden, dass sich die besagte Restmenge an Alkylenoxiden (V) im Zuge von Schritt S3 deutlich verringert. Mit anderen Worten wird ein Teil eventuell verbleibender Alkylenoxide (V) im Zuge von Schritt S3 in den terminalen Block -[(R⁴O)_{c}(R⁵O)_{d}]-H eingebaut, d.h. es kann sich dabei um einen Mischblock aus Alkylenoxyeinheiten R⁴O sowie Ethylenoxyeinheiten R⁵O handeln. Falls die Alkylenoxide in Schritt S2 vollständig reagieren oder danach in Schritt S2 abgetrennt werden, kann es sich bei dem terminalen Block auch um einen reinen Ethylenoxidblock handeln, d.h.c = 0.

### Bevorzugtes Herstellverfahren für die Makromonomere (B)

In einer vorteilhaften Ausführungsform kann man die Makromonomere (B) mittels des nachfolgend geschilderten, bevorzugten Verfahrens herstellen.

Hierbei wird Schritt S1 unter Zugabe eines alkalischen Katalysators K1 enthaltend KOMe und/oder NaOMe durchgeführt.

Schritt S2 wird unter Zugabe eines alkalischen Katalysators K2 vorgenommen, wobei die Konzentration an Kalium-Ionen bei der Umsetzung in Schritt S2 kleiner oder gleich 0,9 mol%, bevorzugt kleiner 0,9 mol%, bevorzugt im Bereich von 0,01 bis 0,9 mol%, insbesondere bevorzugt 0,01 bis 0,5 mol%, bezogen auf den eingesetzten Alkohol H₂C=C(R¹)-R²-O-(R³O)ₐ-H (IV) beträgt und wobei die Umsetzung in Schritt S2 bei einer Temperatur von kleiner oder gleich 135 °C, bevorzugt von kleiner 135 °C, besonders bevorzugt von kleiner oder gleich 130 °C, beispielsweise 120 °C bis 130 °C durchgeführt wird, wobei das Makromonomer (B2) erhalten wird.

In Schritt S3 wird ein Teils des Makromonomers (B2) mit Ethylenoxid umgesetzt, wobei die Mischung umfassend Makromonomere (B1) und (B2) entsteht.

Die im Folgenden genannten bevorzugten Bedingungen (z.B. Druck- und/oder Temperaturbereiche) bei den Umsetzungen in den Schritten S1, S2 und S3 bedeuten, dass der jeweilige Schritt ganz oder teilweise bei den angegebenen Bedingungen durchgeführt wird.

Bevorzugt umfasst Schritt S1 zunächst die Umsetzung des monoethylenisch ungesättigten Alkohols (III) mit dem alkalischen Katalysator K1. Typischerweise wird dazu der als Ausgangsmaterial verwendete Alkohol (III) in einem Druckreaktor mit einem alkalischen Katalysators K1 versetzt. Durch verminderten Druck von typischerweise kleiner 100 mbar, bevorzugt im Bereich von 30 bis 100 mbar und/oder Erhöhung der Temperatur typischerweise im Bereich von 30 bis 150 °C können noch in der Mischung vorhandenes Wasser und/oder Niedrigsieder abgezogen werden. Der Alkohol liegt danach im Wesentlichen als entsprechendes Alkoholat vor. Anschließend wird das Reaktionsgemisch typischerweise mit Inertgas (z.B. Stickstoff) behandelt.

Bevorzugt umfasst Schritt S1 die Zugabe von Ethylenoxid sowie optional geringen Mengen an höheren Alkylenoxiden zu der Mischung aus Alkohol (III) und alkalischem Katalysator K1. Nach Beendigung der Zugabe des Ethylenoxids sowie optional weiteren Alkylenoxiden lässt man das Reaktionsgemisch typischerweise nachreagieren. Die Zugabe inklusive optionaler Entspannungen (zwischenzeitliche Reduzierung des Druckes von beispielsweise 6*10⁵ Pa auf 3*10⁵ Pa absolut) sowie inklusive Nachreaktion erfolgt typischerweise über einen Zeitraum von 2 bis 36 h, bevorzugt von 5 bis 24 h, insbesondere bevorzugt von 5 bis 15 h, besonders bevorzugt von 5 bis 10 h.

Schritt S1 erfolgt typischerweise bei Temperaturen von 120 bis 160 °C, bevorzugt von 130 bis 150 °C, besonders bevorzugt von 140 bis 150 °C. Insbesondere umfasst Schritt S1 die Zugabe des Ethylenoxids sowie optional geringen Mengen weiterer Alkylenoxide zu der Mischung aus Alkohol (III) und alkalischem Katalysator K1 bei einer Temperatur von 120 bis 160 °C, besonders bevorzugt von 140 bis 150 °C.

Bevorzugt erfolgt die Zugabe des Ethylenoxids sowie optional geringen Mengen weiterer Alkylenoxide zu der Mischung aus Alkohol (III) und alkalischem Katalysator K1 bei einem Druck im Bereich von 1 bis 7 bar, bevorzugt im Bereich von 1 bis 6 bar. Um den sicherheitstechnischen Bedingungen gerecht zu werden, wird die Zugabe in Schritt S1 typischerweise bei einem Druck im Bereich von 1*10⁵ Pa bis 4*10⁵ Pa, bevorzugt 1*10⁵ Pa bis 3,9*10⁵ Pa, besonders bevorzugt von 1*10⁵ Pa bis 3,1*10⁵ Pa oder in einer weiteren Ausführung der Erfindung von 3*10⁵ Pa bis 6*10⁵ Pa, durchgeführt. Insbesondere werden die Zugabe an Ethylenoxid und/oder die Nachreaktion bei den oben genannten Drücken durchgeführt.

Bevorzugt umfasst Schritt S1 die Zugabe des Ethylenoxids sowie optional geringen Mengen weiterer Alkylenoxide zu einer Mischung aus Alkohol A1 und alkalischem Katalysator K1 über einen Zeitraum von kleiner oder gleich 36 h, bevorzugt kleiner oder gleich 32 h, besonders bevorzugt über einen Zeitraum von 2 bis 32 h, insbesondere bevorzugt über einen Zeitraum von 5 bis 15 h, und bei einem Druck von kleiner oder gleich 5*10⁵ Pa, bevorzugt bei 1*10⁵ Pa bis 4*10⁵ Pa, insbesondere bevorzugt 1*10⁵ Pa bis 3,9*10^{5 Pa}. Insbesondere umfasst der oben angegebene Zeitraum die Zugabe an Ethylenoxid und/oder die Nachreaktion.

Insbesondere kann die Umsetzung eines monoethylenisch ungesättigten Alkohols (III) mit Ethylenoxid sowie optional geringen Mengen weiterer Alkylenoxide unter Zugabe eines alkalischen Katalysators K1 enthaltend KOMe (Kaliummethanolat) und/oder Natriummethanolat (NaOMe) gemäß Schritt S1 des bevorzugten Verfahrens in einem oder mehreren Ethoxylierungsschritten erfolgen.

Besonders bevorzugt ist ein Verfahren wie oben beschrieben, wobei Schritt S1 die folgenden Teilschritte umfasst:
- Umsetzung des monoethylenisch ungesättigten Alkohols (III) mit dem alkalischen Katalysator K1,
- Umsetzung der Mischung aus Alkohol (III) und Katalysator K1 mit einem Teil des Ethylenoxids sowie optional geringen Mengen weiterer Alkylenoxide, insbesondere 10 bis 50 Gew.-%, insbesondere 10 bis 30 Gew.-%, der Gesamtmenge an Ethylenoxid sowie optional geringen Mengen weiterer Alkylenoxide,
- einen Zwischenschritt umfassend eine Ruhephase und/oder eine Druckentspannung,
- und die Umsetzung mit dem verbleibenden Teil des Ethylenoxids sowie optional geringen Mengen weiterer Alkylenoxide

Weiterhin bevorzugt ist ein Verfahren wie oben beschrieben, wobei Schritt S1 die folgenden Teilschritte umfasst:
- Umsetzung des monoethylenisch ungesättigten Alkohols (III) mit dem alkalischen Katalysator K1,
- Umsetzung der Mischung aus Alkohol (III) und Katalysator K1 mit einem Teil des Ethylenoxids sowie optional geringen Mengen weiterer Alkylenoxide, insbesondere 50 bis 98 Gew.-%, insbesondere 80 bis 98 Gew.-%, der Gesamtmenge an Ethylenoxid sowie optional geringen Mengen weiterer Alkylenoxide,
- einen Schritt zur Entfernung von Niedrigsiedern unter Druckentspannung auf einen Druck kleiner 100 mbar, bevorzugt 30 bis 100 mbar und/oder Erhöhung der Temperatur typischerweise im Bereich von 30 bis 150 °C,
- Umsetzung des erhaltenen Ethoxylierungsproduktes mit dem alkalischen Katalysators K1 und Umsetzung des verbleibenden Teils des Ethylenoxids mit der Mischung aus Ethoxylierungsprodukt und alkalischem Katalysator K1.

Der alkalische Katalysator K1 enthält insbesondere 10 bis 100 Gew.-%, bevorzugt 20 bis 90 Gew.-% KOMe und/oder NaOMe. Der Katalysator K1 kann neben KOMe und/oder NaOMe weitere alkalische Verbindungen und/oder ein Lösemittel (insbesondere einen C1 bis C6 Alkohol) enthalten. Beispielsweise kann eine weitere alkalische Verbindung enthalten sein ausgewählt aus Alkalimetallhydroxiden, Erdalkalimetallhydroxiden, C2 bis C6 Kaliumalkanolaten, C2 bis C6 Natriumalkanolaten (bevorzugt Ethanolat), Erdalkalialkanolaten (insbesondere C1 bis C6 Alkanolaten, bevorzugt Methanolat und/oder Ethanolat). Bevorzugt enthält der Katalysator K1 neben KOMe und/oder NaOMe mindestens eine weitere alkalische Verbindung ausgewählt aus Natriumhydroxid und Kaliumhydroxid.

In einer weiteren bevorzugten Ausführungsform besteht der alkalische Katalysator K1 aus KOMe oder aus einer Lösung von KOMe in Methanol (MeOH). Typischerweise kann eine Lösung von 20 bis 50 Gew.-% KOMe in Methanol (MeOH) eingesetzt werden.

In einer weiteren bevorzugten Ausführungsform besteht der alkalische Katalysator K1 aus NaOMe oder aus einer Lösung von NaOMe in Methanol.

In einer weiteren bevorzugten Ausführungsform besteht der Katalysator K1 aus einer Mischung von KOMe und NaOMe oder einer Lösung von KOMe und NaOMe in Methanol.

Es ist vorteilhaft den Katalysator K1 in einer solchen Menge einzusetzen, dass eine Obergrenze von 2.500 ppm (ca. 0,4 mol%) KOMe in Bezug auf den eingesetzten Alkohol (III) eingehalten wird, um die Zersetzung des monoethylenisch ungesättigten Alkohols (III) zu vermeiden. Bevorzugt ist die Konzentration an Kalium-Ionen in Schritt S1 kleiner oder gleich 0,4 mol% bezogen auf die Gesamtmenge des eingesetzten Alkohols A1, besonders bevorzugt 0,1 bis 0,4 mol%.

Wird KOMe in einer solchen Menge zugegeben, dass die Konzentration über 0,9 mol% bezogen auf den alkoxylierten Alkohol (IV) (Produkt des Verfahrensschritts S1) liegt, so wird KOMe bei dem bevorzugten Verfahren zur Herstellung der Makromonomere (B) vor Schritt S2 ganz oder teilweise abgetrennt, um eine Kalium-Ionen-Konzentration von weniger als 0,9 mol% in Verfahrensschritt S2 zu erhalten. Dies kann beispielsweise erfolgen indem der alkoxylierte Alkohol A2 nach Schritt S1 isoliert und optional gereinigt wird.

In einer weiteren bevorzugten Ausführungsform wird KOMe in einer solchen Menge eingesetzt, dass die Konzentration an Kalium-Ionen nach der Umsetzung in Schritt S1 bereits kleiner oder gleich 0,9 mol% bezogen auf (IV) beträgt.

Schritt S2 des bevorzugten Verfahrens umfasst die Umsetzung des alkoxylierten Alkohols (IV) mit mindestens einem Alkylenoxid der allgemeinen Formel (V) wie oben beschrieben unter Zugabe eines alkalischen Katalysators K2 zum oben beschriebenen Makromonomer (B2) der allgemeinen Formel H₂C=C(R¹)-R²-O-(R³O)ₐ-(R⁴O)_{b}-H (II).

Bevorzugt umfasst Schritt S2 zunächst die Umsetzung des alkoxylierten Alkohols (IV) mit dem alkalischen Katalysator K2. Typischerweise wird dazu der Alkohol A2 in einem Druckreaktor mit dem alkalischen Katalysators K2 versetzt. Durch verminderten Druck von typischerweise kleiner 10000 Pa, bevorzugt im Bereich von 3000 bis 10000 Pa, und/oder Erhöhung der Temperatur, typischerweise im Bereich von 30 bis 150 °C, können noch in der Mischung vorhandenes Wasser und/oder Niedrigsieder abgezogen werden. Der Alkohol liegt danach im Wesentlichen als entsprechendes Alkoholat vor. Anschließend wird das Reaktionsgemisch typischerweise mit Inertgas (z.B. Stickstoff) behandelt.

Bevorzugt umfasst Schritt S2 die Zugabe des mindestens einen Alkylenoxids (V) zu der oben beschriebenen Mischung aus Alkohol (IV) und alkalischem Katalysator K2. Nach Beendigung der Zugabe des Alkylenoxids (V) lässt man das Reaktionsgemisch typischerweise nachreagieren. Die Zugabe inklusiver optionaler Entspannung sowie inklusive Nachreaktion erfolgt typischerweise über einen Zeitraum von 2 bis 36 h, bevorzugt von 5 bis 30 h, insbesondere bevorzugt von 10 bis 28 h, besonders bevorzugt von 11 bis 24 h.

Bei dem bevorzugten Herstellverfahren ist die Konzentration an Kalium-Ionen bei der Umsetzung in Schritt S2 kleiner oder gleich 0,9 mol%, bevorzugt kleiner 0,9 mol%, bevorzugt von 0,01 bis 0,9 mol%, besonders bevorzugt von 0,1 bis 0,6 mol%, bezogen auf den eingesetzten Alkohol (IV).

In einer bevorzugten Ausführungsform beträgt die Konzentration an Kalium-Ionen bei der Umsetzung in Schritt S2 0,01 bis 0,5 mol% bezogen auf den eingesetzten Alkohol (IV).

In einer besonders bevorzugten Ausführungsform ist die Konzentration an Kalium-Ionen bei der Umsetzung in Schritt S2 kleiner oder gleich 0,9 mol%, bevorzugt 0,1 bis 0,5 mol%, bezogen auf den eingesetzten Alkohol (IV) und die Umsetzung in Schritt S2 wird bei Temperaturen von 120 bis 130 °C durchgeführt.

Der alkalische Katalysator K2 enthält bevorzugt mindestens eine alkalische Verbindung ausgewählt aus Alkalimetallhydroxiden, Erdalkalimetallhydroxiden, Alkalimetallalkanolaten (insbesondere C1 bis C6 Alkanolate, bevorzugt Methanolat und/oder Ethanolat), Erdalkalialkanolaten (insbesondere C1 bis C6 Alkanolate, bevorzugt Methanolat und/oder Ethanolat). Bevorzugt enthält der Katalysator K2 mindestens eine basische Natrium-Verbindung, insbesondere ausgewählt aus NaOH, NaOMe, und NaOEt, besonders bevorzugt NaOMe oder NaOH. Als Katalysator K2 kann eine Mischung der genannten alkalischen Verbindungen eingesetzt werden, bevorzugt besteht der Katalysator K2 aus einer der genannten basischen Verbindungen oder Mischungen der genannten alkalischen Verbindungen. Häufig wird eine wässrige Lösung der alkalischen Verbindungen eingesetzt. In einer anderen bevorzugten Ausführungsform besteht der alkalische Katalysator K2 aus NaOMe oder aus einer Lösung von NaOMe in Methanol (MeOH). Typischerweise kann eine Lösung von 20 bis 50 Gew.-% NaOMe in Methanol (MeOH) eingesetzt werden. Bevorzugt enthält der Katalysator K2 kein KOMe.

Bevorzugt wird in Schritt S2 ein Katalysator K2 enthaltend mindestens eine basische Natrium-Verbindung, insbesondere ausgewählt aus NaOH, NaOMe, und NaOEt eingesetzt, wobei die Konzentration an Natrium-Ionen bei der Umsetzung in Schritt S2 im Bereich von 3,5 bis 12 mol%, bevorzugt von 3,5 bis 10 mol%, besonders bevorzugt von 3,5 bis 7 mol%, ganz besonders bevorzugt von 4 bis 6 mol%, bezogen auf den eingesetzten Alkohol (IV) liegt.

Die Umsetzung in Schritt S2 wird bei einer Temperatur von kleiner oder gleich 135 °C, bevorzugt bei kleiner oder gleich 130 °C durchgeführt. Bevorzugt wird die Umsetzung in Schritt S2 bei Temperaturen von 60 bis 135 °C, bevorzugt bei 100 bis 135 °C, besonders bevorzugt bei 120 bis 135 °C, ganz besonders bevorzugt bei 120 bis 130 °C durchgeführt. Insbesondere umfasst Schritt S2 die Zugabe mindestens eines Alkylenoxids (V) zu einer Mischung aus Alkohol (IV) und alkalischem Katalysator K2 bei einer Temperatur von kleiner oder gleich 135 °C, bevorzugt bei kleiner oder gleich 130 °C, insbesondere bei Temperaturen von 100 bis 135 °C, bevorzugt bei 120 bis 130 °C.

Bevorzugt wird Schritt S2 bei einem Druck im Bereich von 1*10⁵ Pa bis 6*10⁵ Pa, bevorzugt von 1*10⁵ Pa bis 3,1*10⁵ Pa durchgeführt. Um den sicherheitstechnischen Bedingungen gerecht zu werden, wird die Umsetzung in Schritt S2 bevorzugt bei einem Druck im Bereich kleiner oder gleich 3,1*10⁵ Pa (bevorzugt 1*10⁵ Pa bis 3,1*10⁵ Pa) durchgeführt, falls die Summe aller Kohlenstoffatome in den Resten R⁶, R⁷, R⁸, und R⁹ 2 beträgt oder bei einem Druck von kleiner oder gleich 2,1 bar (bevorzugt 1 bis 2,1 bar) durchgeführt, falls die Summe aller Kohlenstoffatome in den Resten R⁶, R⁷, R⁸, und R⁹ mehr als 2 beträgt. Insbesondere werden die Zugabe an Alkylenoxid (V) und/oder die Nachreaktion bei dem oben genannten Druck durchgeführt. In einer weiteren bevorzugten Ausführungsform wird der Schritt S2 in einem Druckbereich von 3 bis 6 bar absolut durchgeführt. In einer weiteren bevorzugten Ausführung kann der Schritt S2 in einem Druckbereich von 0,2*10⁵ Pa bar bis 3,1*10⁵ Pa umgesetzt werden.

Bevorzugt umfasst Schritt S2 die Zugabe des mindestens einen Alkylenoxids (V) zu einer Mischung aus Alkohol (IV) und alkalischem Katalysator K2 bei einem Druck im Bereich 1*10⁵ Pa bis 3,1*10⁵ Pa.

In einer Ausführungsform beträgt die Summe aller Kohlenstoffatome in den Resten R⁶, R⁷, R⁸, und R⁹ 2 und Schritt S2 umfasst die Zugabe des mindestens einen Alkylenoxids (V) zu einer Mischung aus Alkohol (IV) und alkalischem Katalysator K2 bei einem Druck im Bereich von 1*10⁵ Pa bis 3,1*10⁵ Pa.

In einer weiteren Ausführungsform beträgt die Summe aller Kohlenstoffatome in den Resten R⁶, R⁷, R⁸, und R⁹ mehr als 3, bevorzugt 3 und Schritt S2 umfasst die Zugabe des mindestens einen Alkylenoxids (V) zu einer Mischung aus Alkohol (IV) und alkalischem Katalysator K2 bei einem Druck im Bereich von 1*10⁵ Pa bis 2,1*10⁵ Pa.

Besonders bevorzugt wird Schritt S2 bei einem Druck im Bereich von 1*10⁵ Pa bis 3,1*10⁵ Pa (bevorzugt bei den oben genannten Drücken) und bei einer Temperatur von 120 bis 130 °C durchgeführt.

Bevorzugt umfasst Schritt S2 die Zugabe (inklusive Nachreaktionszeit) des mindestens einen Alkylenoxids (V) zu einer Mischung aus Alkohol (IV) und alkalischem Katalysator K2 über einen Zeitraum von kleiner oder gleich 36 h, bevorzugt kleiner oder gleich 32 h, besonders bevorzugt über einen Zeitraum von 2 bis 32 h, ganz besonders bevorzugt über einen Zeitraum von 11 bis 24 h, und bei einem Druck von kleiner oder gleich 3,1*10⁵ Pa (bevorzugt bei den oben genannten Drücken).

Schritt S3 erfolgt insbesondere ohne weitere Zugabe eines alkalischen Katalysators. Der Schritt S3 wird insbesondere bei einem Druck im Bereich von 1*10⁵ Pa bis 7*10⁵ Pa, bevorzugt von 1*10⁵ Pa bis 6*10⁵ Pa, ganz besonders bevorzugt in einem Bereich von 3*10⁵ Pa bis 6*10⁵ Pa absolut und einer Temperatur im Bereich von 60 bis 140 °C, bevorzugt von 120 bis 140 °C, besonders bevorzugt von 120 bis 135 °C, durchgeführt. Die Ethoxylierung im Schritt S3 erfolgt insbesondere über einen Zeitraum von 0,5 bis 7 h, insbesondere 1 bis 5 h, bevorzugt von 1 bis 4 h.

Bevorzugt umfasst Schritt S3 die Zugabe von Ethylenoxid zu der Reaktionsmischung nach Schritt S2 enthaltend das Makromonomer (B2) der allgemeinen Formel (II) ohne weitere Aufarbeitung und/oder Druckentspannung. Nach Beendigung der Zugabe des Ethylenoxids lässt man das Reaktionsgemisch typischerweise nachreagieren. Die Zugabe inklusiver optionaler Entspannung sowie inklusive Nachreaktion erfolgt typischerweise über einen Zeitraum von 0,5 bis 10 h, insbesondere 2 bis 10, ganz besonders bevorzugt 4 bis 8 h.

Die Durchführung Schritts S3 bewirkt im Regelfalle, dass Alkylenoxid (V), das nach Schritt S2 noch in der Reaktionsmischung vorhanden ist, zumindest teilweise abreagiert und somit zumindest teilweise entfernt wird. Es ist selbstverständlich möglich Alkylenoxid (V), das nach Schritt S2 nicht abreagiert ist, durch eine Druckentspannung und/oder Temperaturerhöhung nach Schritt S2 zu entfernen.

### Monomere (C)

Neben den Monomeren (A) und (B) können die wasserlöslichen Copolymere (P) optional weitere hydrophile, monoethylenisch ungesättigte Monomere umfassen.

In einer Ausführungsform der Erfindung umfassen die wasserlöslichen Copolymere (P) neben den Monomeren (A) und (B) mindestens ein hydrophiles, anionisches monoethylenisch ungesättigtes Monomer (C), umfassend mindestens eine saure Gruppe bzw. deren Salze.

Besonders bevorzugt sind die optional eingesetzten, hydrophilen Monomere (C) in beliebigem Verhältnis mit Wasser mischbar. Im Regelfalle sollte die Löslichkeit der Monomere (C) in Wasser bei Raumtemperatur mindestens 50 g/l, bevorzugt mindestens 150 g/l und besonders bevorzugt mindestens 250 g/l betragen.

Bei der sauren Gruppe handelt es sich bevorzugt um mindestens eine saure Gruppe ausgewählt aus der Gruppe von -COOH, -SO₃H oder -PO₃H₂ bzw. deren Salze. Bevorzugt sind COOH-Gruppen und/oder -SO₃H-Gruppen umfassende Monomere.

Beispiele COOH-Gruppen umfassender Monomere umfassen Acrylsäure, Methacrylsäure, Crotonsäure, Itaconsäure, Maleinsäure oder Fumarsäure. Bevorzugt ist Acrylsäure.

Beispiele Sulfonsäuregruppen umfassender Monomere umfassen Vinylsulfonsäure, Allylsulfonsäure, 2-Acrylamido-2-methylpropansulfonsäure, 2-Methacrylamido-2-methylpropansulfonsäure, 2-Acrylamidobutansulfonsäure, 3-Acrylamido-3-methyl-butansulfonsäure oder 2-Acrylamido-2,4,4-trimethylpentansulfonsäure. Bevorzugt sind Vinylsulfonsäure, Allylsulfonsäure oder 2-Acrylamido-2-methylpropansulfonsäure und besonders bevorzugt ist oder 2-Acrylamido-2-methylpropansulfonsäure.

Beispiele Phosphonsäuregruppen umfassender Monomere umfassen Vinylphosphonsäure, Allylphosphonsäure, N-(Meth)acrylamidoalkylphosphonsäuren oder (Meth)acryloyloxyalkylphosphonsäuren, bevorzugt ist Vinylphosphonsäure.

Die sauren Gruppen können selbstverständlich ganz oder teilweise neutralisiert sein, d.h. sie können als Salze vorliegen. Geeignete Gegenionen für die saure Gruppe umfassen insbesondere Alkalimetallionen wie Li⁺, Na⁺ oder K⁺ sowie Ammoniumionen NH₄⁺ und Ammoniumionen mit organischen Resten.

Beispiele von Ammoniumionen mit organischen Resten umfassen Ammoniumionen der allgemeinen Formel [NHR²⁰R²¹R²²]⁺ (VI), wobei die Reste R²⁰, R²¹ und R²² unabhängig voneinander für H oder aliphatische und/oder aromatische Kohlenwasserstoffreste mit 1 bis 12, bevorzugt 1 bis 6 Kohlenstoffatomen stehen, wobei die Kohlenwasserstoffreste mit OH-Gruppen substituiert sein können und/oder nicht benachbarte Kohlenstoffatome durch O oder N substituiert sein können, mit der Maßgabe, dass zumindest einer der Reste R²⁰, R²¹ und R²² nicht für H steht. Weiterhin kann es sich um Ammoniumionen der allgemeinen Formel [R²⁰R²¹HN-R²³-NHR²⁰R²¹]²⁺ (VII) handeln, wobei R²⁰ und R²¹ die oben geschilderte Bedeutung haben und R²³ für einen Alkylenrest mit 1 bis 6 Kohlenstoffatomen, bevorzugt einen 1,ω-Alkylenrest mit 2 bis 6 Kohlenstoffatomen steht. Beispiele von Ammoniumionen mit organischen Resten umfassen [NH(CH₃)₃]⁺, [NH₂(CH₃)₂]⁺, [NH₃(CH₃)]⁺, [NH(C₂H₅)₃]⁺, [NH₂(C₂H₅)₂]⁺, [NH₃(C₂H₅)]⁺, [NH₃(CH₂CH₂OH)]⁺, [H₃N-CH₂CH₂-NH₃]²⁺ oder [H(H₃C)₂N-CH₂CH₂CH₂NH₃]²⁺.

Salze können erhalten werden, indem man Monomere (C) in der Säureform vor der Polymerisation mit den entsprechenden Basen ganz oder teilweise neutralisiert. Selbstverständlich kann man Monomere (C) auch in der Säureform zur Polymerisation einsetzen und Säuregruppen im erhaltenen wasserlöslichen Copolymer (P) nach der Polymerisation ganz oder teilweise neutralisieren.

Die Menge der Monomere (C) beträgt -sofern vorhanden- bis 69,99 Gew.-%, bevorzugt 0,1 bis 69,99 Gew.-%, insbesondere 5 bis 64,9 Gew.-% bezüglich der Summe aller Monomere des wasserlöslichen Copolymers (P).

### Monomere (D)

In einer weiteren Ausführungsform der Erfindung umfassen die wasserlöslichen Copolymere (P) neben den Monomeren (A) und (B) sowie optional den Monomeren (C) mindestens ein hydrophiles, kationisches, monoethylenisch ungesättigtes Monomer (D), umfassend mindestens eine Ammoniumgruppe.

Besonders bevorzugt sind die optional eingesetzten, hydrophilen Monomere (D) in beliebigem Verhältnis mit Wasser mischbar. Im Regelfalle sollte die Löslichkeit der Monomere (D) in Wasser bei Raumtemperatur mindestens 50 g/l, bevorzugt mindestens 150 g/l und besonders bevorzugt mindestens 250 g/l betragen.

Beispiele kationischer, Ammoniumgruppen aufweisender Monomere (D) umfassen insbesondere Ammoniumderivate von N-(ω-Aminoalkyl)(meth)acrylamiden oder ω-Aminoalkyl(meth)acrylestern.

Insbesondere kann es sich bei Ammoniumgruppen aufweisenden Monomeren (D) um Verbindungen der allgemeinen Formeln H₂C=C(R¹⁰)-CO-NR¹¹-R¹²-NR¹³₃⁺ X⁻ (VIII) und/oder H₂C=C(R¹⁰)-COO-R¹²-NR¹³₃⁺ X- (IX) handeln. Hierbei steht R¹⁰ für H oder Methyl, R¹¹ für H oder eine C₁- bis C₄-Alkylgruppe, bevorzugt H oder Methyl und R¹⁰ für eine bevorzugt lineare C₁- bis C₄-Alkylengruppe, beispielsweise eine 1,2-Ethylengruppe -CH₂-CH₂- oder eine 1,3-Proplyengruppe -CH₂-CH₂-CH₂-. Bei den Resten R¹³ handelt es sich unabhängig voneinander um C₁- bis C₄-Alkylreste, bevorzugt Methyl oder eine Gruppe der allgemeinen Formel -R¹⁴-SO₃H, wobei R¹⁴ für eine bevorzugt lineare C₁- bis C₄-Alkylengruppe oder eine Phenylgruppe steht, mit der Maßgabe, dass es sich im Regelfalle bei nicht mehr als einem der Substituenten R¹³ um einen Sulfonsäuregruppen aufweisenden Substituenten handelt. Besonders bevorzugt handelt es sich bei den drei Substituenten R¹³ um Methylgruppen, d.h. das Monomer weist eine Gruppe -N(CH₃)₃⁺ auf. X⁻ steht in obiger Formel für ein einwertiges Anion, beispielsweise Cl⁻. Selbstverständlich kann X⁻ auch für einen entsprechenden Bruchteil eines mehrwertigen Anions stehen, obwohl dies nicht bevorzugt ist.

Beispiele bevorzugter Monomere (D) der allgemeinen Formel (VI) bzw. (VII) umfassen Salze von 3-Trimethylammonium-propyl(meth)acrylamiden oder 2-Trimethylammoniumethyl(meth)acrylaten, beispielsweise die entsprechenden Chloride wie 3-Trimethylammoniumpropylacrylamidchlorid (DIMAPAQUAT) und 2-Trimethylammoniumethylmethacrylatchlorid (MADAME-QUAT).

Die Menge der Monomere (D) beträgt -sofern vorhanden- bis 69,99 Gew.-%, bevorzugt 0,1 bis 69,99 Gew.-%, insbesondere 5 bis 64,9 bezüglich der Summe aller Monomere des wasserlöslichen Copolymers (P).

### Monomere (E)

Die wasserlöslichen Copolymere (P) können darüber hinaus noch weitere, von den Monomeren (A), (B), (C) und (D) verschiedene monoethylenisch ungesättigte Monomere (E), bevorzugt hydrophile Monomere (E) umfassen.

Besonders bevorzugt sind optional eingesetzte, hydrophile Monomere (E) in beliebigem Verhältnis mit Wasser mischbar. Im Regelfalle sollte die Löslichkeit der Monomere (E) in Wasser bei Raumtemperatur mindestens 25 g/l, bevorzugt mindestens 50 g/l und besonders bevorzugt mindestens 100 g/l betragen.

Beispiele derartiger monoethylenisch ungesättigter Monomere umfassen Hydroxy- und/oder Ethergruppen umfassende Monomere, wie beispielsweise Hydroxyethyl(meth)acrylat, Hydroxypropyl(meth)acrylat, Allylalkohol, Hydroxyvinylethylether, Hydroxyvinylpropylether, Hydroxyvinylbutylether oder Verbindungen der Formel H₂C=C(R¹⁵)-COO-(-CH₂-CH(R¹⁶)-O-)_{b}-R¹⁷ (X) bzw. H₂C=C(R¹⁵)-O-(-CH₂-CH(R¹⁶)-O-)_{b}-R¹⁷ (XI) wobei R¹⁵ für H oder Methyl steht und b für eine Zahl von 2 bis 200, bevorzugt 2 bis 100 steht. Bei den Resten R¹⁶ handelt es sich unabhängig voneinander um H, Methyl oder Ethyl, bevorzugt H oder Methyl, mit der Maßgabe, dass es sich bei mindestens 50 mol% der Reste R¹³ um H handelt. Bevorzugt handelt es sich bei mindestens 75 mol% der Reste R¹⁶ um H, besonders bevorzugt bei mindestens 90 mol% und ganz besonders bevorzugt ausschließlich um H. Bei dem Rest R¹⁷ handelt es sich um H, Methyl oder Ethyl, bevorzugt H oder Methyl. Weitere Beispiele von Monomeren (E) umfassen N-Vinylderivate wie beispielsweise N-Vinylformamid, N-Vinylacetamid, N-Vinylpyrrolidon oder N-Vinylcaprolactam sowie Vinylester, wie beispielsweise Vinylformiat oder Vinylacetat. N-Vinylderivate können nach Polymerisation zu Vinylamin-Einheiten, Vinylester zu Vinylalkohol-Einheiten hydrolysiert werden.

Sofern überhaupt vorhanden, sollte die Menge derartiger weiterer Monomere (E) 15 Gew.-%, bevorzugt 10 Gew.-%, besonders bevorzugt 5 Gew.-% bezüglich der Summe aller Monomere nicht übersteigen und ganz besonders bevorzugt sind keine weiteren Monomere (E) vorhanden.

### Herstellung der Copolymere (P)

Die erfindungsgemäßen Copolymere können nach dem Fachmann prinzipiell bekannten Methoden durch radikalische Polymerisation der Monomere (A), (B) sowie optional (C), (D) und (E) in wässriger Lösung hergestellt werden, beispielsweise mittels Lösungspolymerisation, Gelpolymerisation oder inverser Emulsionspolymerisation. Die genannten Polymerisationstechniken sind dem Fachmann prinzipiell bekannt.

Zur Polymerisation können wässrige Lösungen oder der Monomere zusammen mit geeigneten Initiatoren für die radikalische Polymerisation eingesetzt und polymerisiert werden. Die Polymerisation kann thermisch und/oder fotochemisch erfolgen. Selbstverständlich können zur Polymerisation noch weitere Additive und Hilfsmittel, beispielsweise Entschäumer oder Komplexbildner eingesetzt werden.

In einer bevorzugten Ausführungsform der Erfindung werden die verwendeten Copolymere in Gegenwart mindestens einer nicht-polymerisierbaren, oberflächenaktiven Verbindung (T) hergestellt. Bei der nicht polymerisierbaren, oberflächenaktiven Verbindung (T) handelt es sich vorzugsweise um mindestens ein nicht-ionisches Tensid, aber auch anionische und kationische Tenside sind geeignet, sofern sie an der Polymerisationsreaktion nicht teilnehmen. Es kann sich insbesondere um Tenside, bevorzugt nichtionische Tenside der allgemeinen Formel R¹⁸-Y handeln, wobei R¹⁸ für einen Kohlenwasserstoffrest mit 8 bis 32, bevorzugt 10 bis 20 und besonders bevorzugt 12 bis 18 Kohlenstoffatomen steht und Y für eine hydrophile Gruppe, bevorzugt eine nichtionische hydrophile Gruppe, insbesondere eine Polyalkoxygruppe.

Bei dem nicht-ionischen Tensid handelt es sich bevorzugt um einen ethoxylierten langkettigen, aliphatischen Alkohol, welcher optional aromatische Anteile enthalten kann.
Exemplarisch seinen genannt: C₁₂C₁₄-Fettalkoholethoxylate, C₁₆C₁₈-Fettalkoholethoxylate, C₁₃-Oxoalkoholethoxylate, C₁₀-Oxoalkoholethoxylate, C₁₃C₁₅-Oxoalkoholethoxylate, C₁₀-Guerbetalkoholethoxylate und Alkylphenolethoxylate. Bewährt haben sich insbesondere Verbindungen mit 5 bis 20 Ethylenoxyeinheiten, bevorzugt 8 bis 18 Ethylenoxyeinheiten. Optional können auch noch geringe Mengen von höheren Alkylenoxyeinheiten, insbesondere Propylenoxy- und/oder Butylenoxyeinheiten vorhanden sein, wobei die Menge als Ethylenoxyeinheiten aber in der Regel mindestens 80 mol% bezüglich aller Alkylenoxyeinheiten betragen sollte.

Geeignet sind insbesondere Tenside ausgewählt aus der Gruppe ethoxylierter Alkylphenole, ethoxylierter, gesättigter iso-C13-Alkohole und/oder ethoxylierter C10-Guerbetalkohole, wobei jeweils 5 bis 20 Ethylenoxyeinheiten, bevorzugt 8 bis 18 Ethylenoxyeinheiten in Alkylenoxyresten vorhanden sind.

Der Zusatz nicht polymerisierbarer, grenzflächenaktiver Verbindungen (T) während der Polymerisation führt zu einer deutlichen Verbesserung anwendungstechnischer Eigenschaften des Copolymers (P) beim Polymerfluten. Insbesondere wird die Verdickungswirkung erhöht und außerdem reduziert sich der Gelanteil des Copolymers. Dieser Effekt lässt sich vermutlich folgendermaßen erklären, ohne dass die Erfindung damit auf diese Erklärung festgelegt sein soll. Bei der Polymerisation ohne Anwesenheit eines Tensids bilden die Makromonomere (B) in dem wässrigen Reaktionsmedium Mizellen. Bei der Polymerisation führt dies dazu, dass die hydrophob assoziierenden Bereiche blockweise in das Polymer eingebaut werden. Ist nun bei der Herstellung der Copolymere eine zusätzliche oberflächenaktive Verbindung anwesend, bilden sich gemischte Mizellen. Diese gemischten Mizellen enthalten polymerisierbare und nicht polymerisierbare Anteile. Dadurch werden dann die Makromonomere (B) in kürzeren Blöcken eingebaut. Gleichzeitig ist die Anzahl dieser kürzeren Blöcke pro Polymerkette größer. Somit unterscheidet sich der Aufbau der in Gegenwart eines Tensids hergestellten Copolymere von denen ohne Anwesenheit eines Tensids.

Die nicht polymerisierbaren, grenzflächenaktiven Verbindungen (T) können im Regelfalle in einer Menge von 0,1 bis 5 Gew.-% bezüglich der Menge aller eingesetzten Monomere eingesetzt werden. Das Gewichtsverhältnis der eingesetzten, nicht polymerisierbaren, grenzflächenaktiven Verbindungen (T) zu den Monomeren (B) beträgt in der Regel 4:1 bis 1:4, bevorzugt 2:1 bis 1:2, besonders bevorzugt 1,5 : 1 bis 1:1,5 und beispielsweise ca. 1:1.

In einer bevorzugten Ausführungsform wird die radikalische Polymerisation mittels Gelpolymerisation, bevorzugt adiabatischer Gelpolymerisation in wässriger Phase vorgenommen.

Zur Gelpolymerisation wird zunächst eine Lösung umfassend die Monomere (A), (B) sowie optional (C), (D) und/oder (E) sowie Wasser oder ein wässriges Lösemittelgemisch bereitgestellt. Geeignete wässrige Lösemittelgemische umfassen Wasser sowie mit Wasser mischbare organische Lösemittel, wobei der Anteil von Wasser im Regelfalle mindestens 60 Gew.-%, bevorzugt mindestens 85 Gew.-% und besonders bevorzugt mindestens 95 Gew.-% beträgt. In einer Ausführungsform der Erfindung wird ausschließlich Wasser als Lösemittel verwendet. Zu nennen als mit Wasser mischbare organische Lösemittel sind insbesondere Alkohole wie Methanol, Ethanol oder Propanol. Die Konzentration aller Monomere zusammen beträgt üblicherweise 10 bis 60 Gew.-%, bevorzugt 20 bis 50 Gew.-%, beispielsweise 25 bis 45 Gew.-% bezüglich der wässrigen Monomerlösung.

Saure Monomere können vor der Polymerisation ganz oder teilweise neutralisiert werden. Dies kann beispielsweise mit Alkalimetallhydroxiden erfolgen oder auch mit Ammoniak oder Aminen. Die Polymerisation sollte insbesondere bei einem pH-Wert im Bereich von 5 bis 7,5, bevorzugt 5 bis 7 und beispielsweise bei einem pH-Wert von 6 durchgeführt werden. Die wässrige Monomerlösung kann weiterhin verschiedene Additive umfassen, beispielsweise Entschäumer oder Komplexbildner.

Zur Durchführung der Gelpolymerisation kühlt man die wässrige Monomerlösung auf eine Temperatur von weniger als +10 °C, bevorzugt auf -5 °C bis +5 °C ab. Die Mischung wird vor, während oder nach dem Abkühlen inertisiert. Nach dem Abkühlen gibt man mindestens einen, in der Monomerlösung löslichen Initiator für die radikalische Polymerisation zu. Die Initiatoren können bevorzugt wasserlöslich sein, in der Monomerlösung sind aber auch Initiatoren löslich, welche nicht mehr gut wasserlöslich sind. Es kann sich sowohl um thermische Initiatoren wie um Fotoinitiatoren handeln.

In einer Ausführungsform wird die Polymerisation bei Temperaturen von weniger als + 10°C unter Verwendung thermischer Polymerisationsinitiatoren gestartet. Hierfür werden thermische Polymerisationsinitiatoren eingesetzt, welche die Polymerisation bereits bei solch tiefen Temperaturen starten können. Dem Fachmann sind derartige Polymerisationsinitiatoren bekannt. Beispiele umfassen Redoxinitiatoren oder Azoinitiatoren mit einer entsprechend niedrigen Temperatur der 10 h-Halbwertszeit. Die Polymerisation startet aufgrund der zugesetzten Polymerisationsinitiatoren langsam bei tiefen Temperaturen. Durch die freiwerdende Reaktionswärme erwärmt sich die Mischung und die Polymerisation beschleunigt sich. Die Temperatur der Mischung steigt in der Regel auf bis zu 80 bis 90 °C. Durch die Polymerisation wird ein im Regelfalle festes Polymergel erhalten.

In einer weiteren Ausführungsform der Gelpolymerisation kann man die Reaktion mit einer Mischung aus einem Redoxinitiatorsystem sowie mindestens einem thermischen Initiator, der erst bei höheren Temperaturen zerfällt, ausführen. Hierbei kann es sich beispielsweise um einen wasserlöslichen Azoinitiator handeln, der im Temperaturbereich von 40 °C bis 70 °C zerfällt. Die Polymerisation startet hier zunächst bei den genannten niedrigen Temperaturen von weniger als +10 °C, bevorzugt -5 °C bis +5 °C durch das Redoxinitiatorsystem. Durch die freiwerdende Reaktionswärme erwärmt sich die Mischung und hierdurch beginnt auch der erst bei höheren Temperaturen in Radikale zerfallende Initiator zu zerfallen.

In einer weiteren Ausführungsform kann man die Polymerisation unter Verwendung einer Kombination eines fotochemischen Initiators mit einem thermischen Initiator durchführen. Hierbei wird die Polymerisation bei tiefen Temperaturen fotochemisch gestartet und die freiwerdende Reaktionswärme löst schließlich zusätzlich die thermischen Initiatoren aus.

Die Gelpolymerisation erfolgt in aller Regel ohne Rühren. Sie kann bevorzugt batchweise erfolgen, beispielsweise in einem Rohreaktor wie von GB 1,054,028 beschrieben. Besonders vorteilhaft können hierzu konische Reaktoren verwendet werden, wie beispielsweise von US 5,633,329 oder US 7,619,046 B2 beschrieben.

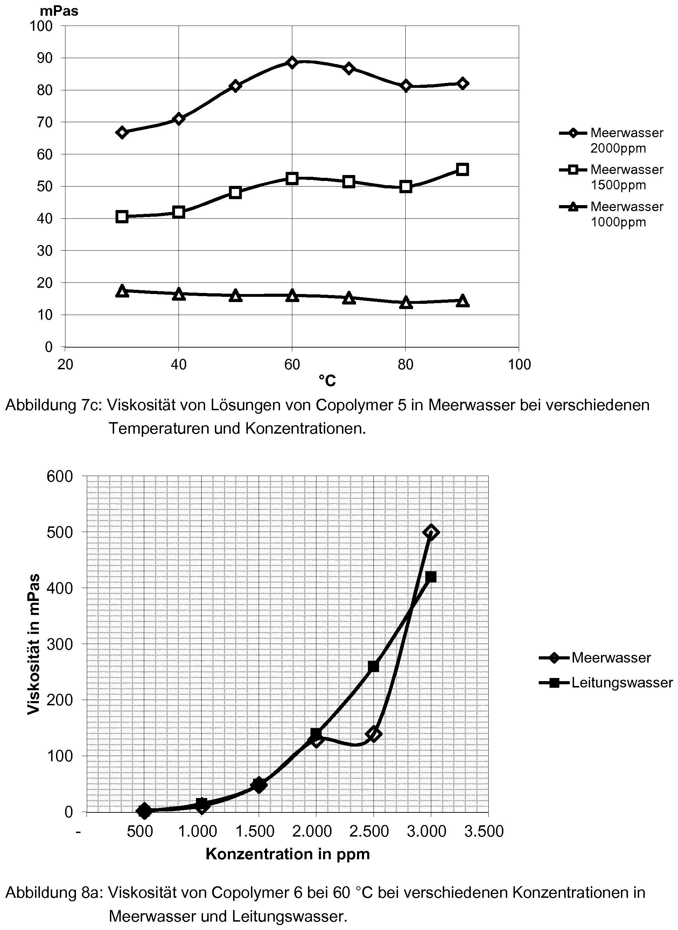

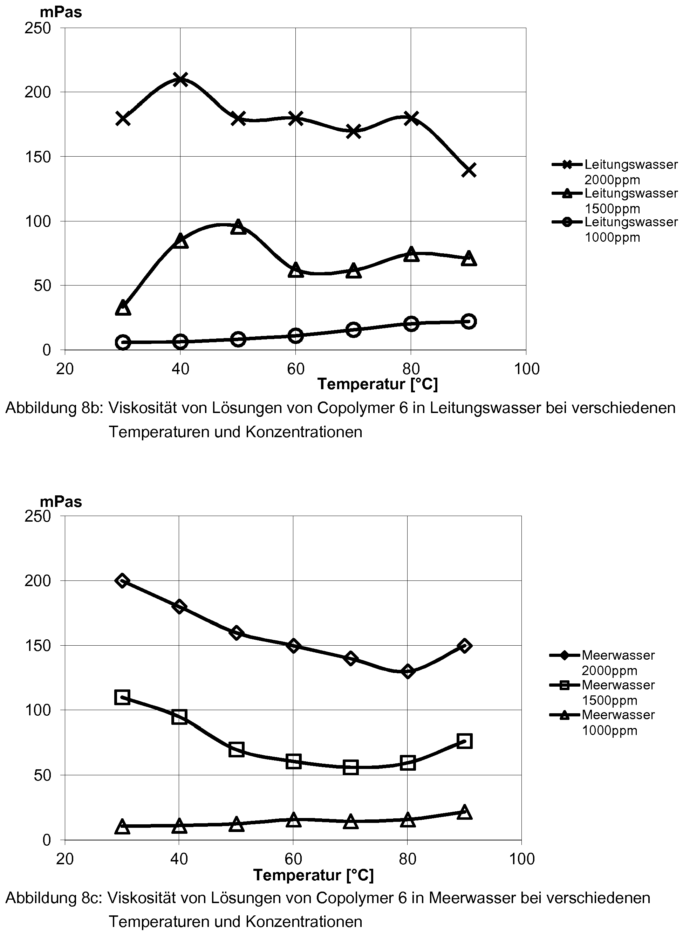

Abbildung 8 zeigt einen konischen Reaktor, welcher zur Durchführung der Gelpolymerisation verwendet werden kann. Es handelt sich hierbei um einen vertikalen Rohrreaktor (1) mit einem Durchmesser D1, der am unteren Ende eine konische Verjüngung (2) aufweist, wobei der Durchmesser am Ende der konischen Verjüngung D2 beträgt. Das Verhältnis D1 / D2 beträgt in der Regel 2:1 bis 25:1, bevorzugt 2:1 bis 20:1 und beispielsweise 3:1 bis 10:1. Der Winkel α zwischen der Wandung im zylindrischen Teil (1) und der Wandung im Bereich der konischen Verjüngung (2) beträgt mehr als 120° und weniger als 180°, insbesondere 135° bis 175°, bevorzugt 150° bis 175° und beispielsweise 155° bis 170°. Das Verhältnis von Höhe zu Durchmesser D1 des zylindrischen Teil (1) des Reaktors kann 4 bis 40 betragen. Das Innenvolumen der Reaktoren wird vom Fachmann je nach der gewünschten Produktionskapazität gewählt und kann 1 bis 100 m³ betragen, beispielsweise 5 bis 50 m³, ohne dass die Erfindung hierauf beschränkt sein soll.

Die Innenfläche der Reaktor ist bevorzugt mit einer Beschichtung zur Verringerung der Haftung der Reaktionsmischung an der Reaktorwand versehen, beispielsweise mit einer TeflonBeschichtung. Der Reaktor kann optional mit einem Mantel zum Kühlen oder Beheizen der Reaktionsmischung umgeben werden.

Am unteren Ende weist der Reaktor eine Absperrvorrichtung (3) auf. Der Reaktor umfasst weiterhin mindestens eine Zuführung (4) auf. Durch diese Zuführung (4) können die wässrige Monomerlösung und/oder Gase und/oder weitere Komponenten in den Reaktor geleitet werden. bei Gasen kann es sich insbesondere um Inertgase wie Stickstoff, Argon oder CO₂. Mit Inertgasen kann der Reaktor zum Inertisieren gespült werden. Selbstverständlich können auch verschiedene Zuführungen für verschiedene Komponenten vorhanden sein, beispielsweise separate Zuführungen für die wässrige Reaktionslösung sowie Gase. Die mindestens eine Zuführung (4) kann bevorzugt auf der Oberseite des Reaktors oder seitlich im oberen Bereich des Reaktors angebracht werden, aber es sind selbstverständlich auch andere Anordnungen möglich.

Der Reaktor kann selbstverständlich noch weitere Bauelemente umfassen, beispielsweise weitere Zuführungen, beispielsweise für Druckluft oder Lösemittel oder Austragsvorrichtungen für das Gel wie beispielsweise im Reaktor angeordnete bewegliche Stempel wie von GB 1,054,028 beschrieben.

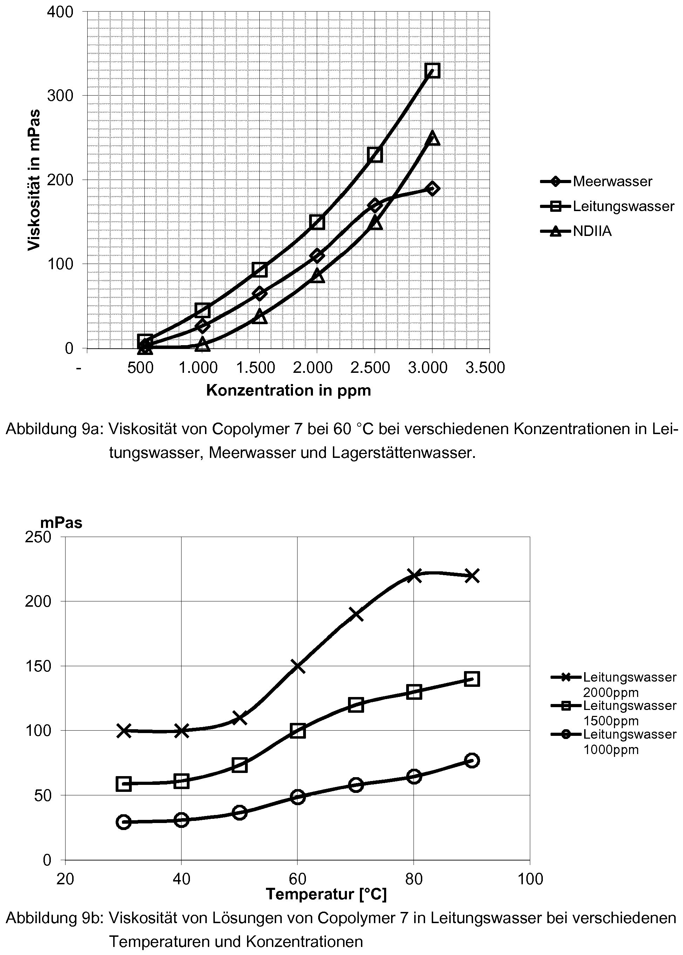

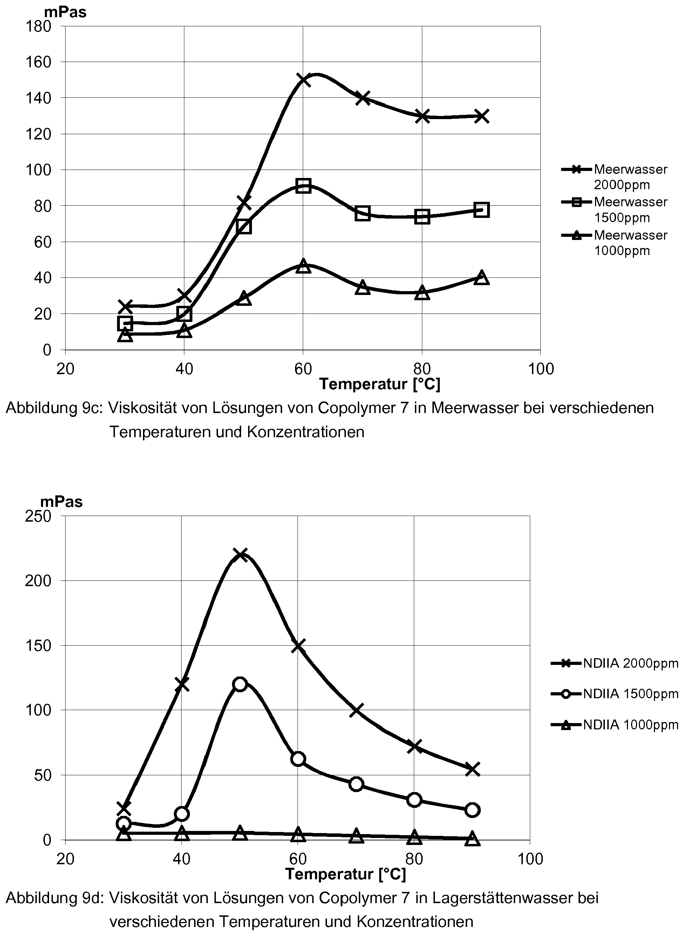

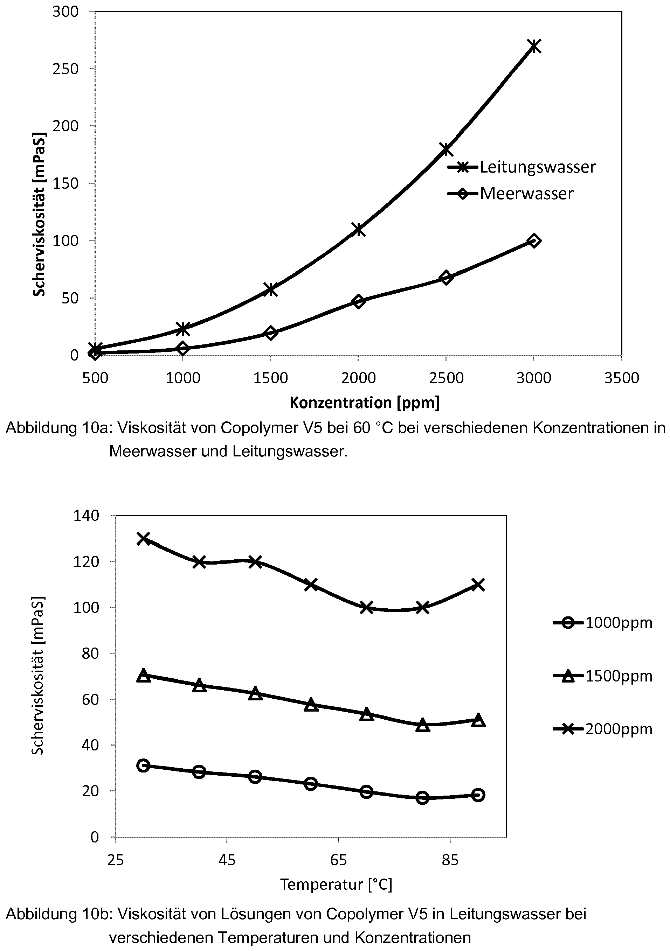

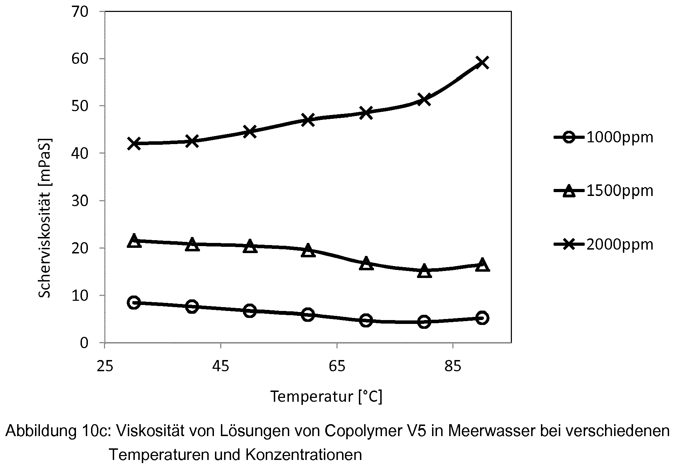

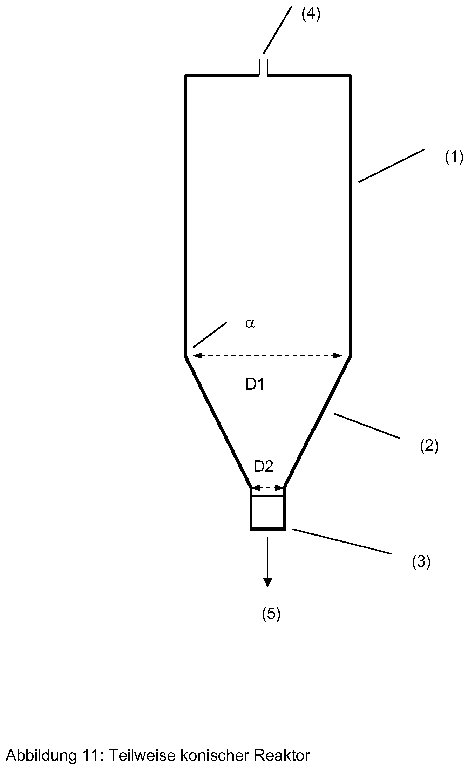

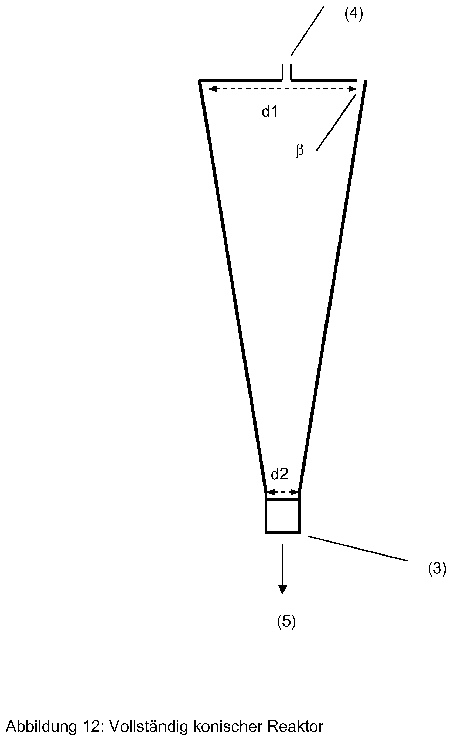

Abbildung 9 zeigt einen vollständig konischen Reaktor. Er ist ähnlich aufgebaut wie der soeben geschilderte teilweise konische Reaktor, weist aber keinen zylindrischen Abschnitt mehr auf, wobei der Durchmesser am oberen Ende des konischen Reaktors d1 beträgt und am unteren Ende d2. Das Verhältnis d 1 / d2 beträgt in der Regel 1,1:1 bis 25:1, insbesondere 2:1 bis 25:1, bevorzugt 2.1 bis 10:1 und beispielsweise 3.1 bis 10:1. Der Winkel β zwischen dem oberen Durchmesser d1 und der Reaktorwandung beträgt mehr als 45° und weniger als 90°, bevorzugt 60° bis 89°, beispielsweise 70° bis 88°. Im Übrigen wird auf die obige Beschreibung verwiesen.

Die Gelpolymerisation in den vollständig oder teilweise konischen Reaktoren kann bevorzugt unter adiabatischen Bedingungen oder zumindest im Wesentlichen adiabatischen Bedingungen durchgeführt werden. Bei dieser Vorgehensweise verfügt der Reaktor verfügt über keine Kühlung oder Heizung. Für den Fachmann ist klar, dass selbstverständlich -je nach Innentemperatur des Reaktors bzw. der Umgebungstemperatur- gewisse Wärmemengen über die Reaktorwandung abgegeben bzw. aufgenommen werden können, aber dieser Effekt spielt mit zunehmender Reaktorgröße naturgemäß eine immer geringere Rolle.

Zur Polymerisation wird die oben beschriebene wässrige Monomermischung in einer geeigneten, außerhalb des konischen Reaktors angeordneten Misch- und Kühlvorrichtung gemischt, und auf weniger als +10 °C, bevorzugt auf -5 °C bis +5 °C abgekühlt. Die kann beispielsweise in einem Mischkessel erfolgen, welcher auf geeignete Art und Weise gekühlt wird, beispielsweise mittels einer Umlaufkühlung. Nach dem Abkühlen der Monomermischung können bereits Initiatoren zugegeben werden, welche bei den tiefen Temperaturen noch keine Radikale bilden, beispielsweise mindestens einer der oben geschriebenen Azoinitiatoren, welche die Polymerisation erst bei 40 °C bis 70 °C starten. Das Zufügen derartiger Initiatoren kann aber auch erst zu einem späteren Zeitpunkt erfolgen.

Die gekühlte wird schließlich durch die Zuführung (4) oder eine andere Zuführung in den vollständig oder teilweise konischen Reaktor übergeführt. Der Reaktor sollte vor und/oder während des Befüllens mit einem Inertgas gespült werden.

Zum Polymeriseren wird die Monomerlösung in der Regel inertisiert, d.h. von eventuell vorhandenem Sauerstoff befreit. Dies kann beispielsweise durch Spülen der Monomerlösung mit einem Inertgas wie Stickstoff, Argon oder Kohlendioxid erfolgen. Dieses Spülen kann bereits während des Mischens und Kühlens der wässrigen Monomerlösung erfolgen, in einer separaten Vorrichtung zum Inertisieren, beispielsweise der in WO 03/066190 A1 beschriebenen Vorrichtung oder auch im Reaktor selbst. Bevorzugt erfolgt das Inertisieren vor dem Reaktor.

Polymerisationsinitiatoren, welche die Polymerisation bereits bei tiefen Temperaturen auslösen können, werden separat gelöst und der der wässrigen Monomerlösung erst unmittelbar vor dem Polymerisieren zugegeben. Die kann beispielsweise erfolgen, indem man eine Lösung der Initiatoren während des Befüllens des Reaktors mit der wässrigen Monomerlösung in den Reaktor oder bevorzugt in die Zuführung (4) oder in die Leitung, mit der die Misch- und Kühlvorrichtung mit dem Reaktor verbunden ist injiziert. Zur vollständigen Vermischung der Initiatorlösung mit der wässrigen Monomerlösung können geeignete Mischaggregate, insbesondere statische Mischer in die Monomerzuführung integriert sein. Selbstverständlich können alle Initiatoren auf diese Art und Weise der Monomerlösung zugesetzt werden..

Die Polymerisation startet aufgrund der zugesetzten Polymerisationsinitiatoren bei Temperaturen von weniger als + 10°C. Durch die freiwerdende Reaktionswärme erwärmt sich die Mischung und die Polymerisation beschleunigt sich. Die Temperatur der Mischung steigt in der Regel auf bis zu 80 bis 90 °C. Durch die Polymerisation wird ein im Regelfalle festes Polymergel erhalten.

Zur Entnahme des Polymergels aus dem Reaktor wird die Absperrvorrichtung (3) geöffnet. Im Regelfalle ist das erhaltene Polymergel fest und fließt nicht ohne zusätzliche Maßnahmen aus dem Reaktor. Sofern der verwendete Reaktor über mechanische Hilfsmittel verfügt, wie beispielsweise einen im Reaktor angeordneten beweglichen Stempel wie von GB 1,054,028 beschrieben, kann das Polymergel unter Verwendung derartiger Hilfsmittel ausgepresst werden.

Bevorzugt kann das Auspressen des Polymergels aus dem vollständig oder teilweise konischen Reaktor unter Verwendung von Gasen vorgenommen werden. Hierzu presst man am Kopf des Rohrreaktors über die Zuführung (4) oder eine andere Zuführung ein Gas auf. Hierzu können alle Gase verwendet werden, welche mit dem Polymergel nicht reagieren können. Vorteilhaft können hierzu Inertgase wie Stickstoff, Kohlendioxid oder Argon über die Zuführung (4) injiziert werden, weil diese Zuführung bereits vorhanden ist. Es ist aber auch möglich andere Gase, wie beispielsweise Pressluft zu verwenden. Alternativ kann man auch am Kopf des Reaktors eine inerte Flüssigkeit, insbesondere ein Fällungsmittel für das Polymer, einpressen. Der Druck des Gases oder der Flüssigkeit wird vom Fachmann geeignet gewählt und kann beispielsweise 2*10⁵ bis 65*10⁵ Pa, insbesondere 4*10⁵ bis 25*10⁵ Pa betragen. Er wird insbesondere so gewählt, dass das Polymergel gleichmäßig aus dem Reaktor ausgetragen wird,

Das erhaltene Polymergel wird vorzugsweise zerkleinert und getrocknet. Die Trocknung sollte bevorzugt bei Temperaturen unterhalb von 100 °C erfolgen. Zum Vermeiden des Zusammenklebens kann man für diesen Schritt ein geeignetes Trennmittel verwenden. Man erhält das hydrophob assoziierende Copolymer als Granulat oder Pulver.

Da das erhaltene Polymerpulver bzw. -granulat im Zuge der Anwendung am Einsatzort in der Regel als wässrige Lösung eingesetzt wird, muss das Polymer vor Ort in Wasser aufgelöst werden. Dabei kann es mit den beschriebenen, hochmolekularen Polymeren zu unerwünschten Verklumpungen kommen. Um dies zu vermeiden, kann den erfindungsgemäßen Polymeren bereits bei der Synthese ein Hilfsmittel, welches die Auflösung des getrockneten Polymers in Wasser beschleunigt bzw. verbessert, zugesetzt werden. Bei diesem Hilfsmittel kann es sich beispielsweise um Harnstoff handeln.

Die Gelpolymerisation kann auch kontinuierlich erfolgen. Hierzu kann man beispielsweise eine Polymerisationsapparatur, welche ein Transportband zur Aufnahme der zu polymerisierenden Mischung verfügt. Das Transportband kann mit Einrichtungen zum Erwärmen und/oder zum Bestrahlen mit UV-Strahlung ausgestattet sein. Hiernach gießt man die Mischung mittels einer geeigneten Vorrichtung am einen Ende des Bandes auf, im Zuge des Transportes in Bandrichtung polymerisiert die Mischung und am anderen Ende des Bandes kann man das feste Gel abnehmen.

Die erhaltenen Copolymere weisen in der Regel ein gewichtsmittleres Molekulargewicht M_{w} von 1*10⁶ g/mol bis 30*10⁶ g/mol, bevorzugt 6*10⁶ g/mol bis 25*10⁶ g/mol und beispielsweise 8*10⁶ g/mol bis 20*10⁶ g/mol.

### Bevorzugte Copolymere (P)

In einer bevorzugten Ausführungsform der Erfindung umfassen die wasserlöslichen Copolymere
- 30 bis 99,99 Gew.-%, bevorzugt 35 bis 99,9 Gew.-%, besonders bevorzugt 45 bis 99,5 Gew.-% mindestens eines Monomers (A),
- 0,01 bis 15 Gew.-%, bevorzugt 0,1 bis 15 Gew.-%, besonders bevorzugt 0,5 bis 8 Gew.-% mindestens eines Makromonomers (B),
- 0 bis 69,99 Gew.-%, bevorzugt 0 bis 64,9 Gew.-%, besonders bevorzugt 0 bis 54,5 Gew.-% mindestens eines Monomers (C),
- 0 bis 69,99 Gew.-%, bevorzugt 0 bis 64,9 Gew.-%, besonders bevorzugt 54,5 Gew.-% mindestens eines Monomers (D), sowie
- 0 bis 15 Gew.-%., bevorzugt 0 bis 10 Gew.-%, besonders bevorzugt 0 bis 5 Gew.-% mindestens eines Monomers (E),
jeweils bezogen auf die Gesamtmenge aller Monomere, mit der Maßgabe, dass die Gesamtmenge der Monomere (A) bis (E) 100 Gew.-% beträgt.

Mit anderen Worten gesagt, sind außer den Monomeren (A), (B) sowie optional (C), (D) und (E) keine weiteren Monomere vorhanden. Bevorzugt sind bei dieser Ausführungsform keine Monomere (E) vorhanden.

Die Monomere (A) bis (E), einschließlich bevorzugter Monomere (A) bis (E) wurden bereits beschrieben.

In einer weiteren bevorzugten Ausführungsform der Erfindung handelt es sich bei dem Copolymer (P) um ein Copolymer ausgewählt aus der Gruppe von Copolymer (P1), Copolymer (P2), Copolymer (P3) und Copolymer (P4), bevorzugt um ein Copolymer ausgewählt aus der Gruppe von Copolymer (P1), (P2) und (P3). Die Copolymere (P1), (P2), (P3) und (P4) werden nachfolgend beschrieben.

### Copolymer (P1)

In einer bevorzugten Ausführungsform der Erfindung handelt es sich bei den wasserlöslichen Copolymeren (P) um wasserlösliche Copolymere (P1).

Die Copolymere (P1) enthalten als Monomer (A) (Meth)acrylamid, bevorzugt Acrylamid.

Die wasserlöslichen Copolymere (P1) umfassen als Makromonomere (B) die bereits beschriebene Mischung der Makromonomere (B1) und (B2), wobei der molare Anteil der Makromonomere (B1) insbesondere 0,3 bis 0,95, bevorzugt 0,45 bis 0,9, besonders bevorzugt 0,5 bis 0,9 und beispielsweise 0,5 bis 0,8 bezüglich der Summe von (B1) und (B2) beträgt.

Weiterhin haben beim Copolymer (P1) in den Formeln (I) und (II) der Makromonomere (B1) und (B2) die Reste und Indices die folgende Bedeutung:
- R¹:: H oder Methyl,
- R²:: eine zweiwertige verknüpfende Gruppe -OR³⁵-, wobei R³⁵ für eine lineare 1,ω-Alkylengruppe mit 1 bis 6, bevorzugt 3 bis 6 und besonders bevorzugt 4 Kohlenstoffatomen steht,
- R³:: Ethylengruppen -CH₂CH₂-,
- R⁴:: unabhängig voneinander Alkylengruppen -CR⁶(R⁷)-CR⁸(R⁹)-, wobei die Summe der Kohlenstoffatome R⁶, R⁷, R⁸ und R⁹ jeweils 2 beträgt, und wobei bei mindestens 70 mol%, bevorzugt mindestens 80 mol% und besonders bevorzugt mindestens 95 mol% der Einheiten -CR⁶(R⁷)CR⁸(R⁹)- R⁶, R⁷ und R⁸ für H und R⁹ für Ethyl stehen,

- R⁵: eine Ethylengruppe -CH₂CH₂-,
- a: eine Zahl von 20 bis 28, bevorzugt 23 bis 26,
- b: eine Zahl von 10 bis 25, bevorzugt 14 bis 23, besonders bevorzugt 14 bis 20, ganz besonders bevorzugt 14 bis 18,
- c: eine Zahl von 0 bis 2, bevorzugt 0 bis 1,5, und
- d: eine Zahl von 1,5 bis 10, bevorzugt 1,5 bis 5.

Die Copolymere (P1) umfassen neben den Monomeren (A) und (B) weiterhin mindestens ein -SO₃H Gruppen bzw. deren Salze umfassendes Monomer (C). Beispiele derartiger Monomere wurden bereits genannt. Bevorzugt sind Vinylsulfonsäure, Allylsulfonsäure oder 2-Acrylamido-2-methylpropansulfonsäure, und besonders bevorzugt handelt es sich bei dem Monomer (C) um 2-Acrylamido-2-methylpropansulfonsäure.

In den Copolymeren (P1) beträgt die Menge der Monomere (A) in der Regel 40 bis 60 Gew.-%, bevorzugt 45 bis 55 Gew.-%, die Menge der Monomere (B) 0,1 bis 5 Gew.-%, bevorzugt 0,5 bis 3 Gew.-% und beispielsweise 0,8 bis 2,5 Gew.-%. und die Menge der Monomere (C) 40 bis 60 Gew.-%, bevorzugt 45 bis 55 Gew.-%, jeweils bezüglich der Summe aller Monomere des wasserlöslichen Copolymers (P1). Bevorzugt beträgt die Gesamtmenge der Monomere (A), (B) und (C) im wasserlöslichen Copolymer (P1) 100 Gew.-%.

Die Copolymere (P1) weisen in der Regel ein gewichtsmittleres Molekulargewicht M_{w} von 1*10⁶ g/mol bis 30*10⁶ g/mol auf, bevorzugt 2*10⁶ g/mol bis 16*10⁶ g/mol.

### Copolymer (P2)

In einer weiteren bevorzugten Ausführungsform der Erfindung handelt es sich bei dem Copolymer (P) um ein Copolymer (P2).

Die Copolymere (P2) enthalten als Monomer (A) (Meth)acrylamid, bevorzugt Acrylamid.

Die wasserlöslichen Copolymere (P2) umfassen als Makromonomere (B) die bereits beschriebene Mischung der Makromonomere (B1) und (B2), wobei der molare Anteil der Makromonomere (B1) insbesondere 0,3 bis 0,95, bevorzugt 0,45 bis 0,9, besonders bevorzugt 0,5 bis 0,9 und beispielsweise 0,5 bis 0,8 bezüglich der Summe von (B1) und (B2) beträgt.

Weiterhin haben beim Copolymer (P2) in den Formeln (I) und (II) der Makromonomere (B1) und (B2) die Reste und Indices die bereits für Copolymer (P1) geschilderte Bedeutung einschließlich der geschilderten bevorzugten Bereiche.

Die Copolymere (P2) umfassen neben den Monomeren (A) und (B) weiterhin mindestens ein COOH-Gruppen bzw. deren Salze umfassendes Monomer (C). Beispiele derartiger Monomere wurden bereits genannt und umfassen Acrylsäure, Methacrylsäure, Crotonsäure, Itaconsäure, Maleinsäure oder Fumarsäure. Bevorzugt ist (Meth)acrylsäure, besonders bevorzugt ist Acrylsäure.

In den Copolymeren (P2) beträgt die Menge der Monomere (A) in der Regel 50 bis 85 Gew.-%, bevorzugt 55 bis 80 Gew.-%, die Menge der Monomere (B) 0,1 bis 10 Gew.-%, bevorzugt 0,5 bis 8 Gew.-% und beispielsweise 0,8 bis 5 Gew.-%. und die Menge der Monomere (C) 5 bis 45 Gew.-%, bevorzugt 10 bis 40 Gew.-% und beispielsweise 15 bis 30 Gew.-%, jeweils bezüglich der Summe aller Monomere des wasserlöslichen Copolymers (P2). Bevorzugt beträgt die Gesamtmenge der Monomere (A), (B) und (C) im wasserlöslichen Copolymer (P2) 100 Gew.-%.

Die Copolymere (P2) weisen in der Regel ein gewichtsmittleres Molekulargewicht M_{w} von 1*10⁶ g/mol bis 30*10⁶ g/mol auf, bevorzugt 4*10⁶ g/mol bis 22*10⁶ g/mol.

### Copolymer (P3)

In einer weiteren bevorzugten Ausführungsform der Erfindung handelt es sich bei dem Copolymer (P) um ein Copolymer (P3).

Die Copolymere (P3) enthalten als Monomer (A) (Meth)acrylamid, bevorzugt Acrylamid. Die wasserlöslichen Copolymere (P3) umfassen als Makromonomere (B) die bereits beschriebene Mischung der Makromonomere (B1) und (B2), wobei der molare Anteil der Makromonomere (B1) insbesondere 0,3 bis 0,95, bevorzugt 0,45 bis 0,9, besonders bevorzugt 0,5 bis 0,9 und beispielsweise 0,5 bis 0,8 bezüglich der Summe von (B1) und (B2) beträgt.

Weiterhin haben beim Copolymer (P3) in den Formeln (I) und (II) der Makromonomere (B1) und (B2) die Reste und Indices die bereits für Copolymer (P1) geschilderte Bedeutung einschließlich der geschilderten bevorzugten Bereiche.

Die Copolymere (P3) umfassen neben den Monomeren (A) und (B) weiterhin mindestens zwei Monomere (C), nämlich mindestens ein COOH-Gruppen bzw. deren Salze umfassendes Monomer (C1), sowie mindestens ein SO₃H-Gruppen bzw. deren Salze umfassendes Monomer (C2).

Beispiele von Monomeren (C1) wurden bereits genannt und umfassen Acrylsäure, Methacrylsäure, Crotonsäure, Itaconsäure, Maleinsäure oder Fumarsäure. Bevorzugt ist (Meth)acrylsäure, besonders bevorzugt ist Acrylsäure.

Beispiele von Monomeren (C2) wurden bereits genannt. Bevorzugt sind Vinylsulfonsäure, Allylsulfonsäure oder 2-Acrylamido-2-methylpropansulfonsäure, und besonders bevorzugt handelt es sich bei dem Monomer (C2) um 2-Acrylamido-2-methylpropansulfonsäure.

In den Copolymeren (P3) beträgt die Menge der Monomere (A) in der Regel 30 bis 85 Gew.-%, bevorzugt 40 bis 80 Gew.-%, die Menge der Monomere (B) 0,5 bis 10 Gew.-%, bevorzugt 0,8 bis 5 Gew.-%, die Menge der Monomere (C1) 5 bis 40 Gew.-%, bevorzugt 5 bis 30 Gew.-% und die Menge der Monomere (C2) 5 bis 40 Gew.-%, bevorzugt 5 bis 30 Gew.-%, jeweils bezüglich der Summe aller Monomere des wasserlöslichen Copolymers (P). Bevorzugt beträgt die Gesamtmenge der Monomere (A), (B) und (C) im wasserlöslichen Copolymer (P2) 100 Gew.-%.

Die Copolymere (P3) weisen in der Regel ein gewichtsmittleres Molekulargewicht M_{w} von 1*10⁶ g/mol bis 30*10⁶ g/mol auf, bevorzugt 2*10⁶ g/mol bis 20*10⁶ g/mol.

### Copolymer (P4)

In einer weiteren bevorzugten Ausführungsform der Erfindung handelt es sich bei dem Copolymer (P) um ein Copolymer (P4).

Die Copolymere (P4) enthalten als Monomer (A) (Meth)acrylamid, bevorzugt Acrylamid. Die wasserlöslichen Copolymere (P4) umfassen als Makromonomere (B) die bereits beschriebene Mischung der Makromonomere (B1) und (B2), wobei der molare Anteil der Makromonomere (B1) insbesondere 0,3 bis 0,95, bevorzugt 0,45 bis 0,9, besonders bevorzugt 0,5 bis 0,9 und beispielsweise 0,5 bis 0,8 bezüglich der Summe von (B1) und (B2) beträgt.

Weiterhin haben beim Copolymer (P4) in den Formeln (I) und (II) der Makromonomere (B1) und (B2) die Reste und Indices die bereits für Copolymer (P1) geschilderte Bedeutung einschließlich der geschilderten bevorzugten Bereiche.

Die Copolymere (P4) umfassen im Wesentlichen nur die Monomere (A) und (B). Daneben können weitere Monomere in geringen Mengen vorhanden sein, insbeondere weitere Monomere ausgewählt aus der Gruppe von Monomeren (C), Monomeren (D) sowie Monomeren (E). In einer Ausführungsform bestehen die Copolymere P4 aus den Monomeren (A) und (B).

In den Copolymeren (P4) beträgt die Menge der Monomere (A) in der Regel 80 bis 99,9 Gew.-%, bevorzugt 90 bis 99,5 Gew.-%, beispielsweise 97 Gew.-% bis 99,5 Gew.-%, die Menge der Monomere (B) 0,1 bis 5 Gew.-%, bevorzugt 0,5 bis 3 Gew.-%, jeweils bezüglich der Summe aller Monomere des wasserlöslichen Copolymers (P4). Bevorzugt beträgt die Gesamtmenge der Monomere (A) und (B) im wasserlöslichen Copolymer (P4) 100 Gew.-%.

Die Copolymere (P4) weisen in der Regel ein gewichtsmittleres Molekulargewicht M_{w} von 1*10⁶ g/mol bis 30*10⁶ g/mol auf.

### Verfahren zur Erdölförderung

Zur Ausführung des erfindungsgemäßen Verfahrens werden in die Erdöllagerstätte mindestens eine Produktionsbohrung und mindestens eine Injektionsbohrung abgeteuft. In der Regel wird eine Lagerstätte mit mehreren Injektionsbohrungen und mit mehreren Produktionsbohrungen versehen. Durch die mindestens eine Injektionsbohrung wird eine wässrige Formulierung des beschriebenen wasserlöslichen Copolymers (P) in die Erdöllagerstätte injiziert und der Lagerstätte durch mindestens eine Produktionsbohrung Erdöl entnommen. Durch den durch die eingepresste wässrige Formulierung, die sogenannte "Polymerflut", erzeugten Druck, fließt das Erdöl in Richtung der Produktionsbohrung und wird über die Produktionsbohrung gefördert. Mit dem Begriff "Erdöl" ist in diesem Zusammenhang selbstverständlich nicht nur phasenreines Öl gemeint, sondern der Begriff umfasst auch die üblichen Rohöl-Wasser-Emulsionen.

Die Lagerstättentemperatur der Erdöllagerstätte, in der das erfindungsgemäße Verfahren angewandt wird, beträgt erfindungsgemäß 20 bis 120 °C, insbesondere 35 °C bis 120 °C, bevorzugt 40 °C bis 100 °C, besonders bevorzugt 45 °C bis 90 °C und beispielsweise 50 °C bis 80 °C.

Für den Fachmann ist klar, dass eine Erdöllagerstätte auch eine gewisse Temperaturverteilung aufweisen kann. Die genannte Lagerstättentemperatur bezieht sich auf den Bereich der Lagerstätte zwischen den Injektions- und Produktionsbohrungen, der vom Polymerfluten erfasst wird. Methoden zur Ermittlung der Temperaturverteilung einer Erdöllagerstätte sind dem Fachmann prinzipiell bekannt. Die Temperaturverteilung wird in der Regel aus Temperaturmessungen an bestimmten Stellen der Formation in Kombination mit Simulationsrechnungen bestimmt, wobei man bei den Simulationsrechnungen auch in die Formation eingebrachte Wärmemengen sowie die aus der Formation abgeführte Wärmemengen berücksichtigt.

Das erfindungsgemäße Verfahren kann insbesondere bei Erdöllagerstätten mit einer durchschnittlichen Porosität von 10 mD (9,87*10⁻¹⁵ m²) bis 4 D (3,95*10⁻¹² m²), bevorzugt 100 mD (9,87*10⁻¹⁴ m²) bis 2 D (1,97*10⁻¹² m²) und besonders bevorzugt 200 mD (1,97*10⁻¹³ m²) bis 1 D (9,87*10⁻¹³ m²) angewandt werden. Die Permeabilität einer Erdölformation wird vom Fachmann in der Einheit "Darcy" (abgekürzt "D" bzw. "mD" für "Millidarcy", 1 D = 9,86923*10⁻¹³ m²) angegeben und kann aus der Fließgeschwindigkeit einer flüssigen Phase in der Erdölformation in Abhängigkeit der angelegten Druckdifferenz bestimmt werden. Die Fließgeschwindigkeit kann in Kernflutversuchen mit der Formation entnommenen Bohrkernen bestimmt werden. Einzelheiten hierzu finden sich beispielsweise in K. Weggen, G. Pusch, H. Rischmüller in "Oil and Gas", Seiten 37 ff., Ullmann's Encyclopedia of Industrial Chemistry, Online-Ausgabe, Wiley-VCH, Weinheim 2010*.* Für den Fachmann ist klar, dass die Permeabilität in einer Erdöllagerstätte nicht homogen sein muss, sondern im Allgemeinen eine gewisse Verteilung aufweist und es sich dementsprechend bei der Angabe der Permeabilität einer Erdöllagerstätte um eine durchschnittliche Permeabilität handelt.

Zur Ausführung des Verfahrens wird eine wässrige Formulierung eingesetzt, welche neben Wasser mindestens das beschriebene Copolymer (P) umfasst. Selbstverständlich können auch Gemische verschiedener hydrophob assoziierender Copolymere eingesetzt werden.

Die Formulierung kann in Süßwasser aber auch in Salzen enthaltendem Wasser angesetzt werden. Selbstverständlich kann es sich um Mischungen verschiedener Salze handeln. Beispielsweise kann Meerwasser zum Ansetzen der wässrigen Formulierung verwendet werden oder es kann gefördertes Formationswasser verwendet werden, welches auf diese Art und Weise wieder verwendet wird. Bei Förderplattformen im Meer wird die Formulierung in der Regel in Meerwasser angesetzt. Bei Fördereinrichtungen an Land kann das Polymer vorteilhaft zunächst in Süßwasser gelöst und die erhaltene Lösung mit Formationswasser auf die gewünschte Einsatzkonzentration verdünnt werden.

Bei den Salzen kann es sich insbesondere um Alkalimetallsalze sowie Erdalkalimetallsalze handeln. Beispiele typischer Kationen umfassen Na⁺, K⁺, Mg²⁺ oder Ca²⁺ und Beispiele typischer Anionen umfassen Chlorid, Bromid, Hydrogencarbonat, Sulfat oder Borat.

Sofern die Formulierung Salze umfasst, sind in der Regel zumindest eines oder mehrere Alkalimetallionen, insbesondere zumindest Na⁺ vorhanden. Daneben können auch noch Erdalkalimetallionen vorhanden sein, wobei das Gewichtsverhältnis Alkalimetallionen / Erdalkalimetallionen in der Regel ≥ 2, bevorzugt ≥ 3 ist. Als Anionen sind in der Regel zumindest eines oder mehrere Halogenid-Ionen, insbesondere zumindest Cl⁻ vorhanden. In der Regel beträgt die Menge an Cl⁻ zumindest 50 Gew.-%, bevorzugt mindestens 80 Gew.-% bezüglich der Summe aller Anionen.

Die Gesamtmenge aller Salze in der wässrigen Formulierung kann bis zu 350000 ppm (Gewichtsanteile) bezüglich der Summe aller Komponenten der Formulierung betragen, beispielsweise 2000 ppm bis 350000 ppm, insbesondere 5000 ppm bis 250000 ppm. Sofern Meerwasser zum Ansetzen der Formulierung verwendet wird, kann der der Salzgehalt 2000 ppm bis 40 000 ppm betragen und sofern Formationswasser verwendet kann der Salzgehalt 100000 ppm bis 250000 ppm, beispielsweise 100 000 ppm bis 200000ppm betragen. Die Menge an Erdalkalimetallionen kann bevorzugt 1000 bis 53000 ppm betragen.

Die wässrige Formulierung kann selbstverständlich noch weitere Komponenten umfassen. Beispiele weiterer Komponenten umfassen Biozide, Stabilisatoren, Radikalfänger, Inhibitoren, Tenside, Cosolventien, Basen oder Komplexbildner.

Tenside und/oder Basen können beispielsweise eingesetzt werden, um den entölenden Effekt der Copolymere (P) zu unterstützen. Beispiele bevorzugter Tenside werden weiter hinten offenbart. Tenside können auch eingesetzt werden, um die Viskosität des eingesetzten Polymers zu erhöhen. Beispielsweise können die von WO 2012/069438 A1 offenbarten Tenside eingesetzt werden.

Additive können beispielsweise eingesetzt werden, um unerwünschte Nebeneffekte, z.B. das unerwünschte Ausfallen von Salzen zu verhindern oder um das eingesetzte Copolymer (P) zu stabilisieren. Die beim Polymer-Fluten in die Formation injizierten Polymer-Formulierungen strömen nur sehr langsam in Richtung der Produktionsbohrung, d.h. sie verbleiben längere Zeit unter Formationsbedingungen in der Formation. Ein Abbau des Polymers hat eine Abnahme der Viskosität zur Folge. Dies muss entweder durch die Verwendung einer höheren Menge an Polymer berücksichtigt werden oder aber es muss in Kauf genommen werden, dass sich die Effizienz des Verfahrens verschlechtert. In jedem Falle verschlechtert sich die Wirtschaftlichkeit des Verfahrens. Für den Abbau des Polymers kann eine Vielzahl von Mechanismen verantwortlich sein. Mittels geeigneter Additive kann man den Polymerabbau je nach Bedingungen verhindern oder zumindest verzögern.

In einer Ausführungsform der Erfindung umfasst die verwendete wässrige Formulierung mindestens einen Sauerstofffänger. Sauerstofffänger reagieren mit Sauerstoff, der eventuell in der wässrigen Formulierung enthalten sein kann und verhindern so, dass der Sauerstoff das Polymer angreifen kann. Beispiele für Sauerstofffänger umfassen Sulfite, wie beispielsweise Na₂SO₃, Bisulfite oder Dithionite.

In einer weiteren Ausführungsform der Erfindung umfasst die verwendete wässrige Formulierung mindestens einen Radikalfänger. Radikalfänger können eingesetzt werden, um dem Abbau des Polymers durch Radikale entgegenzuwirken. Derartige Verbindungen können mit Radikalen stabile Verbindungen bilden. Radikalfänger sind dem Fachmann prinzipiell bekannt. Beispielsweise kann es sich um Stabilisatoren ausgewählt aus der Gruppe von schwefelhaltigen Verbindungen, sterisch gehinderten Aminen, N-Oxiden, Nitrosoverbindungen, aromatischen Hydroxyverbindungen oder Ketone handeln. Beispiele von Schwefelverbindungen umfassen Thioharnstoff, substituierte Thioharnstoffe wie N,N'-Dimethylthioharnstoff, N,N'-Diethylthioharnstoff, N,N'-Diphenylthioharnstoff, Thiocyanate, wie beispielsweise Ammoniumthiocyant oder Kaliumthiocyanat, Tetramethylthiuramdisulfid oder Mercaptane wie 2-Mercaptobenzothiazol oder 2-Mercaptobenzimidazol bzw. deren Salze, beispielsweise die Natriumsalze, Natriumdimethyldithiocarbamat, 2,2'-Dithiobis(benzthiazol), 4,4'-Thiobis(6-t-butyl-m-Kresol). Weitere Beispiele umfassen Dicyandiamid, Guanindin, Cyanamid, Paramethoxyphenol, 2,6-Di-t-butyl-4-methylphenol, Butylhydroxyanisol, 8-Hydroxychinolin, 2,5-Di(t-Amyl)hydrochinon, 5-Hydroxy-1,4-Naphtochinon, 2,5-Di(t-amyl)hydrochinon, Dimedon, Propyl-3,4,5-trihydroxybenzoat, Ammonium N-Nitrosophenylhydroxylamin, 4-Hydroxy-2,2,6,6-tetramethyoxylpiperidin, (N-(1,3-Dimethylbutyl)N'-phenyl-p-phenylendiamin oder 1,2,2,6,6-Pentamethyl-4-piperidinol. Bevorzugt handelt es sich um sterisch gehinderte Amine wie 1,2,2,6,6-Pentamethyl-4-piperidinol und Schwefelverbindungen, Mercaptoverbindungen, insbesondere 2-Mercaptobenzothiazol oder 2-Mercaptobenzimidazol bzw. deren Salze wie beispielsweise die Natriumsalze und besonders bevorzugt sind 2-Mercaptobenzothiazol bzw. Salze davon.

In einer weiteren Ausführungsform der Erfindung umfasst die verwendete wässrige Formulierung mindestens ein Opferreagens. Opferreagenzien können mit Radikalen reagieren und sie somit unschädlich machen. Beispiele umfassen insbesondere Alkohole. Alkohole können durch Radikale oxidiert werden, beispielsweise zu Ketonen. Beispiele umfassen Monoalkohole und Polyalkohole wie beispielsweise 1-Propanol, 2-Propanol, Propylenglykol, Glycerin, Butandiol oder Pentaerythrol.

In einer weiteren Ausführungsform der Erfindung umfasst die verwendete wässrige Formulierung mindestens einen Komplexbildner. Selbstverständlich können Mischungen verschiedener Komplexbildner eingesetzt werden. Bei Komplexbildnern handelt es sich im Allgemeinen um anionische Verbindungen, welche insbesondere zwei und höherwertige Metallionen, beispielsweise Mg²⁺ oder Ca²⁺ komplexieren können. Auf diese Art und Weise können beispielsweise eventuell unerwünschte Ausfällungen vermieden werden. Weiterhin kann verhindert werden, dass eventuell vorhandene mehrwertige Metallionen das Polymer über vorhandene saure Gruppen, insbesondere COOH-Gruppe vernetzen. Bei den Komplexbildnern kann es sich insbesondere um Carbonsäure oder Phosphonsäurederivate handeln. Beispiele von Komplexbildnern umfassen Ethylendiamintetraessigsäure (EDTA), Ethylendiamindibernsteinsäure (EDDS), Diethylentriaminpentamethylenphosphonsäure (DTPMP), Methylglycindiessigsäure (MGDA) oder Nitriloessigsäure (NTA). Selbstverständlich kann es sich auch jeweils um die entsprechenden Salze handeln, beispielsweise die entsprechenden Natriumsalze.

Als Alternative oder zusätzlich zu den oben genannten Chelatbildnern können auch Polyacrylate eingesetzt werden.

In einer weiteren Ausführungsform der Erfindung enthält die Formulierung mindestens ein organisches Cosolvens. Bevorzugt handelt es sich um vollständig mit Wasser mischbare Lösemittel, es können aber auch Lösemittel eingesetzt werden, welche nur teilweise mit Wasser mischbar sind. Im Regelfalle sollte die Löslichkeit mindestens 50 g/l bevorzugt mindestens 100 g/l betragen. Beispiele umfassen aliphatische C₄- bis C₈-Alkohole, bevorzugt C₄- bis C₆-Alkohole, welche zu Erreichen einer ausreichenden Wasserlöslichkeit mit 1 bis 5, bevorzugt 1 bis 3 Ethylenoxyeinheiten substituiert sein können. Weitere Beispiele umfassen aliphatische Diole mit 2 bis 8 Kohlenstoffatomen, welche optional auch noch weiter substituiert sein können. Beispielsweise kann es sich um mindestens ein Cosolvens ausgewählt aus der Gruppe von 2-Butanol, 2 Methyl-1-Propanol, Butylglykol, Butyldiglykol oder Butyltriglykol handeln.

Die Konzentration des Copolymers in der wässrigen Formulierung wird so festgelegt, dass die wässrige Formulierung die gewünschte Viskosität für den Einsatzzweck aufweist. Die Viskosität der Formulierung sollte in der Regel mindestens 5 mPas (gemessen bei 25 °C und einer Scherrate von 7 s⁻¹) betragen, bevorzugt mindestens 10 mPas.

In der Regel beträgt die Konzentration des Copolymers (P) in der Formulierung 0,02 bis 2 Gew.-% bezüglich der Summe aller Komponenten der wässrigen Formulierung. Bevorzugt beträgt die Menge 0,05 bis 0,5 Gew.-%, besonders bevorzugt 0,1 bis 0,3 Gew.-% und beispielsweise 0,1 bis 0,2 Gew.-%.

In einer weiteren Ausführungsform beträgt die Konzentration des Copolymers (P) in der Formulierung nicht mehr als 0,05 Gew.-% eingesetzt, insbesondere 0,01 Gew.-% bis 0,05 Gew. %, bevorzugt 0,02 Gew.-% bis 0,05 Gew.-%.

Sofern das Copolymer (P) als Pulver bzw. Granulat vorliegt, müssen die Copolymere zur Injektion im wässrigen Medium gelöst werden. Granulate können beispielsweise eine durchschnittliche Partikelgröße von 0,1 mm bis 3 mm aufweisen. Dem Fachmann ist bekannt, dass beim Lösen hochmolekularer Polymere übergroße Scherbelastungen vermieden werden sollten, um einen Abbau der Polymere zu vermeiden. Vorrichtungen und Verfahren zum Lösen von Polymeren und Injizieren der wässrigen Lösungen in unterirdische Formationen sind dem Fachmann prinzipiell bekannt.

Die wässrige Formulierung kann hergestellt werden, indem man das Wasser vorlegt, das Copolymer als Pulver bzw. Granulat einstreut und mit dem Wasser vermischt.

In einer weiteren Ausführungsform der Erfindung kann das Auflösen der Copolymer-Granulate bzw. -Pulver mittels eines zweistufigen Verfahrens erfolgen. Hierbei löst man in einer ersten Lösestufe Polymergranulat bzw. -pulver in einem wässrigen Medium unter Erhalt eines Konzentrats auf. Ein solches Konzentrat kann beispielsweise eine Konzentration von 1 Gew.-% bis 3 Gew.-% aufweisen. Dies kann beispielsweise in entsprechenden Lösekesseln erfolgen. Das Konzentrat wird in einer zweiten Stufe auf Einsatzkonzentration verdünnt. Dies kann erfolgen, indem man das Konzentrat direkt in die Rohrleitung mit der Injektionsflüssigkeit injiziert. Zur schnellen Vermischung kann hinter der Injektionsstelle ein Mischer, insbesondere ein statischer Mischer angeordnet sein. Ein derartiges Verfahren ist von WO 2012/140092 A1 offenbart.

In einer weiteren Ausführungsform der Erfindung kann das Auflösen erfolgen, indem man das Polymergranulat in einem ersten Schritt mit einer wässrigen Phase anfeuchtet. Das Polymer quillt hierbei in der wässrigen Phase auf. Die Konzentration des Polymers kann beispielsweise ca. 2 bis 10 Gew.-%, bezogen auf die Gesamtmenge aus wässriger Phase und Polymer betragen. Das aufgequollene Polymer wird anschließend mittels einer geeigneten Zerkleinerungsvorrichtung zerkleinert, beispielsweise auf eine Größe von 0,05 mm bis 0,2 mm und mit weiterem Wasser vermischt. Hierbei entsteht eine Polymerdispersion, welche beispielsweise eine Konzentration von 1 bis 3 Gew.-% Polymer aufweisen kann. Die Polymerdispersion kann in weiteren Lösetanks vollständig aufgelöst werden. In einer Variante kann man auf Lösetanks verzichten und die Polymerdispersion direkt in die Rohrleitung mit der Injektionsflüssigkeit injizieren, wo sich das Polymer auf dem Wege zur Injektionsstelle vollständig auflöst. Letzteres ist insbesondere dann vorteilhaft, wenn die Injektionsflüssigkeit noch über eine gewisse Strecke in der Rohrleitung transportiert wird, beispielsweise von einer zentralen Lösestation auf dem Ölfeld zu verschiedenen Injektionsbohrungen. Geeignete Vorrichtungen für das geschilderte Verfahren sind beispielsweise WO 2008 / 071808 A1 sowie WO 2008/081048 A1 offenbart.

Sofern das Copolymer (P) bereits als Lösung oder inverse Emulsion vorliegt, werden optional mit weiteren Komponenten vermischt und auf die Einsatzkonzentration verdünnt. Auch ein solches Verdünnen kann zweistufig erfolgen, indem man zunächst ein Konzentrat erzeugt und dies dann weiter verdünnt. Eine geeignete Vorrichtung hierfür ist beispielsweise von EP 2 283 915 A1 offenbart.

Das Injizieren der wässrigen Formulierung kann mittels üblicher Vorrichtungen vorgenommen werden. Die Formulierung kann mittels üblicher Pumpen in eine oder mehrere Injektionsbohrungen injiziert werden. Die Injektionsbohrungen sind üblicherweise mit einzementierten Stahlrohren ausgekleidet, und die Stahlrohre sind an der gewünschten Stelle perforiert. Die Formulierung tritt durch die Perforation aus der Injektionsbohrung in die Erdölformation ein. Über den mittels der Pumpen angelegten Druck wird in prinzipiell bekannter Art und Weise die Strömungsgeschwindigkeit der Formulierung und damit auch die Scherbelastung festgelegt, mit der die wässrige Formulierung in die Formation eintritt. Die Scherbelastung beim Eintritt in die Formation kann vom Fachmann in prinzipiell bekannter Art und Weise auf Basis des Gesetzes von Hagen-Poiseuille unter Verwendung der beim Eintritt in die Formation durchströmten Fläche, dem mittleren Porenradius und dem Volumenstrom errechnet werden. Die durchschnittliche Permeabilität der Formation kann in prinzipiell bekannter Art und Weise wie beschrieben ermittelt werden. Die Scherbelastung ist naturgemäß umso größer, je größer der in die Formation injizierte Volumenstrom an wässriger Copolymerformulierung ist.

Die Geschwindigkeit der Injektion kann vom Fachmann je nach den Verhältnissen in der Formation festgelegt werden. Bevorzugt beträgt die Scherrate beim Eintritt der wässrigen Polymerformulierung in die Formation mindestens 30 000 s⁻¹, bevorzugt mindestens 60 000 s⁻¹ und besonders bevorzugt mindestens 90 000 s⁻¹.

Der Produktionsbohrung entnimmt man beim erfindungsgemäßen Verfahren in aller Regel nicht phasenreines Öl, sondern eine Rohöl-Wasser-Emulsion. Der Begriff "Rohöl-Wasser-Emulsion" soll hierbei sowohl Wasser-in-Öl wie Öl-in-Wasser-Emulsionen umfassen. Die Öl-Wasser-Emulsionen können beispielsweise 0,1 bis 99 Gew.-% Wasser enthalten. Bei dem Wasser kann es sich um salzhaltiges Lagerstättenwasser handeln. Mit zunehmender Dauer der Polymerinjektion kann das geförderte Wasser aber auch die injizierten Copolymere enthalten.

Zur Weiterverarbeitung des Rohöls in der Raffinerie muss die geförderte Rohöl-Wasser-Emulsion getrennt werden. Hierzu kann man in prinzipiell bekannter Art und Weise Demulgatoren zusetzen.

Anlagen und Verfahren zur Spaltung von Rohölemulsionen sind dem Fachmann bekannt. Die Emulsionsspaltung erfolgt dabei üblicherweise vor Ort, d.h. noch auf dem Ölfeld. Es kann sich dabei um eine Anlage an einer Produktionsbohrung handeln oder um eine zentrale Anlage, in welcher die Spaltung der Rohölemulsionen für mehrere Produktionsbohrungen eines Ölfeldes zusammen vorgenommen wird.

Die Spaltung verläuft bereits bei der Temperatur der frisch geförderten Rohölemulsion mit einer solchen Geschwindigkeit ab, dass die Emulsion bereits auf dem Weg zu der Aufbereitungsanlage gespalten werden kann. Diese gebrochene Emulsion wird dann in einem gegebenenfalls beheizten Abscheider und eventuell unter Zuhilfenahme eines elektrischen Feldes in Reinöl und Wasser, beziehungsweise Salzwasser getrennt. Bei dem Abscheider kann es sich um Anlagen handeln, welche nur unter dem Einfluss der Schwerkraft separieren, also beispielsweise Absetztanks oder auch um andere Abscheider, wie beispielsweise Hydrozyklone.

Nach der Trennung kann die Rohöl-Phase zur Weiterverarbeitung in die Raffinierie transportiert werden. Die abgetrennt wässrige Phase kann bevorzugt wieder zum Injizieren verwendet werden.

Sofern die wässrige Phase der geförderten Öl-Wasser-Emulsion Anteile des injizierten Copolymers enthält, kann die Phasentrennung verzögert oder im Extremfalle sogar verhindert werden. Es ist deswegen regelmäßig empfehlenswert, das Polymer zumindest teilweise abzubauen. Dies kann durch den Zusatz von Oxidationsmitteln zur wässrigen Phase erfolgen. Beispiele geeigneter Oxidationsmittel umfassen Wasserstoffperoxid, Persulfate Hypochlorite oder Chlorite.

### Verwendung bevorzugter Copolymere (P)

Die Art der für das erfindungsgemäße Verfahren eingesetzten Copolymere (P) richtet sich unter anderem nach der Lagerstättentemperatur und der Salinität. Der Fachmann trifft je nach den Bedingungen eine geeignete Auswahl.

In einer Ausführungsform der Erfindung werden bei dem erfindungsgemäßen Verfahren Copolymere (P1) eingesetzt. Copolymere (P1) eignen sich insbesondere auch für höhere Salzgehalte und höhere Formationstemperaturen. Sie eignen sich daher insbesondere, wenn Formationswasser zum Ansetzen der wässrigen Formulierungen verwendet wird. Selbstverständlich kann aber auch Meerwasser und/oder Süßwasser verwendet werden. Die Salinität einer Copolymere (P1) enthaltenden wässrigen Formulierung kann beispielsweise 2000 ppm bis 350000 ppm, insbesondere 5000 ppm bis 250000 ppm und beispielsweise 100000 ppm bis 200000 ppm betragen. Die Menge an Erdalkalimetallionen kann bevorzugt 1000 bis 53000 ppm betragen. Die Lagerstättentemperatur kann insbesondere 50 °C bis 120 °C, bevorzugt 50 °C bis 100 °C und beispielsweise 50 °C bis 90 °C betragen. Vorteilhaft ist eine Konzentration des Copolymers (P1) in der wässrigen Formulierung von mindestens 0,1 Gew.-%, beispielsweise 0,15 bis 0,5 Gew.-%. Selbstverständlich sind Copolymere (P1) auch bei anderen Bedingungen, insbesondere bei Lagerstättentemperaturen von weniger als 50 °C und bei Verwendung von Süßwasser einsetzbar.

In einer weiteren Ausführungsform der Erfindung werden bei dem erfindungsgemäßen Verfahren Copolymere (P2) eingesetzt. Copolymere (P2) eignen sich vor allem für nicht zu hohe Salzgehalte. Sie eignen sich daher insbesondere, wenn Meerwasser zum Ansetzen der wässrigen Formulierungen verwendet wird. Selbstverständlich kann aber auch Süßwasser verwendet werden. Die Salinität einer Copolymere (P2) enthaltenden wässrigen Formulierung kann beispielsweise 2000 ppm bis 100 000 ppm, insbesondere 2000 ppm bis 60000 ppm und beispielsweise 30000 ppm bis 40000 ppm betragen. Die Lagerstättentemperatur kann insbesondere 35 °C bis 90 °C, besonders bevorzugt 35 °C bis 80 °C und beispielsweise 40 °C bis 80 °C betragen. Vorteilhaft ist eine Konzentration des Copolymers in der wässrigen Formulierung von mindestens 0,1 Gew.-%, beispielsweise 0,15 bis 0,5 Gew.-%. Selbstverständlich sind Copolymere (P2) auch bei anderen Bedingungen einsetzbar, insbesondere bei Lagerstättentemperaturen von weniger als 35 °C und bei Verwendung von Süßwasser.

In einer weiteren Ausführungsform der Erfindung werden bei dem erfindungsgemäßen Verfahren Copolymere (P3) eingesetzt. Copolymere (P3) eignen sich insbesondere für mittlere Salzgehalte und mittlere Formationstemperaturen. Die Salinität einer Copolymere (P3) enthaltenden wässrigen Formulierung kann beispielsweise 5000 ppm bis 150000 ppm, insbesondere 5000 ppm bis 100000 ppm und beispielsweise 30000 ppm bis 80000 ppm betragen. Die Lagerstättentemperatur kann insbesondere 40 °C bis 100 °C, bevorzugt 45 °C bis 90 °C und beispielsweise 45 °C bis 85 °C betragen. Vorteilhaft ist eine Konzentration des Copolymers (P3) in der wässrigen Formulierung von mindestens 0,1 Gew.-%, beispielsweise 0,15 bis 0,5 Gew.-%. Selbstverständlich sind Copolymere (P3) auch bei anderen Bedingungen, insbesondere bei Lagerstättentemperaturen von weniger als 50 °C und bei Verwendung von Süßwasser einsetzbar.

### Alkali-Polymer-Fluten

In einer Ausführungsform der Erfindung handelt es sich bei erfindungsgemäßen Verfahren um Alkali-Polymer-Fluten.

Zum Alkali-Polymer-Fluten wird eine wässrige Formulierung eingesetzt, welche neben Wasser mindestens das beschriebene Copolymer (P), beispielsweise ein Copolymer (P1), (P2) oder (P3) sowie mindestens eine Base umfasst. Der pH-Wert der wässrigen Formulierung beträgt in der Regel mindestens 8, bevorzugt mindestens 9, insbesondere 9 bis 13, bevorzugt 10 bis 12 und beispielsweise 10,5 bis 11.

Grundsätzlich kann jede Art von Base eingesetzt werden, mit denen sich der gewünschte pH-Wert erreichen lässt und der Fachmann trifft eine geeignete Auswahl. Beispiele geeigneter Basen umfassen Alkalimetallhydroxide, beispielsweise NaOH oder KOH oder Alkalimetallcarbonate, beispielsweise Na₂CO₃. Weiterhin kann es sich bei den Basen um basische Salze handeln, beispielsweise Alkalimetallsalze von Carbonsäuren, Phosphorsäure oder insbesondere saure Gruppen umfassende Komplexbildner in der Basenform wie EDTANa₄.

Die Zugabe einer Base hat den Effekt, dass zusätzliches Erdöl mobilisiert werden kann. Erdöl enthält üblicherweise auch verschiedene Carbonsäuren wie beispielsweise Naphthensäuren, welche durch die basische Formulierung in die entsprechenden Salze übergeführt werden. Die Salze wirken als natürlich vorkommende Tenside und unterstützen so den Prozess der Entölung.

Hinsichtlich weiterer Einzelheiten des Verfahrens sowie der verwendeten wässrigen Formulierungen wird auf die obige Beschreibung verwiesen. Bei den zum Alkali-Polymer-Fluten verwendeten Formulierungen kann es sich um die oben beschriebenen Formulierungen, einschließlich der bevorzugten Ausführungsformen handeln, mit der Maßgabe, dass die Formulierung zusätzlich mindestens eine Base umfasst und den oben beschriebenen pH-Wert aufweist.

In einer Ausführungsform der Erfindung umfasst die zum Alkali-Polymer-Fluten eingesetzte Formulierung zusätzlich mindestens einen Komplexbildner. Hiermit können vorteilhaft unerwünschte Ausfällungen von schwerlöslichen Salzen, insbesondere Ca- und Mg-Salzen verhindert werden, wenn die alkalische wässrige Formulierung mit den entsprechenden Metallionen in Kontakt kommt und/oder entsprechende Salze enthaltende wässrige Formulierungen für das Verfahren eingesetzt werden. Die Menge von Komplexbildnern wird vom Fachmann gewählt. Sie kann beispielsweise 0,1 bis 4 Gew.-% bezüglich der Summe aller Komponenten der wässrigen Formulierung betragen.

### Alkali-Tensid-Polymer-Fluten

In einer weiteren Ausführungsform der Erfindung handelt es sich beim erfindungsgemäßen Verfahren um Alkali-Tensid-Polymer-Fluten.

Zum Alkali-Tensid-Polymer-Fluten wird eine wässrige Formulierung eingesetzt, welche neben Wasser mindestens das beschriebene Copolymer (P), mindestens eine Base sowie mindestens ein Tensid umfasst. Der pH-Wert der wässrigen Formulierung beträgt mindestens 8, bevorzugt mindestens 9, insbesondere 9 bis 13, bevorzugt 10 bis 12 und beispielsweise 10,5 bis 11. Geeignete Basen wurden bereits oben genannt.

Als Tenside können prinzipiell alle zum Tensidfluten geeigneten Tenside eingesetzt werden. Derartige Tenside sind dem Fachmann prinzipiell bekannt. Beispiele geeigneter Tenside zum Tensidfluten umfassen Sulfatgruppen, Sulfonatgruppen, Polyoxyalkylengruppen, anionisch modifizierten Polyoxyalkylengruppen, Betaingruppen, Glucosidgruppen oder Aminoxidgruppen umfassende Tenside, wie beispielsweise Alkylbenzolsulfonate, Olefinsulfonate, Amidopropylbetaine, Alkylpolyglucoside, Alkylpolyalkoxylate oder Alkylpolyalkoxysulfate, -sulfonate oder -carboxylate. Bevorzugt können anionische Tenside, optional in Kombination mit nichtionischen Tensiden eingesetzt werden.

Die Konzentration der Tenside beträgt in der Regel 0,01 Gew.-% bis 2 Gew.-%, bevorzugt 0,05 bis 1 Gew.-% und beispielsweise 0,1 bis 0,8 Gew.-% bezüglich der Summe aller Komponenten der wässrigen Formulierung.

In einer bevorzugten Ausführungsform der Erfindung handelt es sich bei mindestens einem der Tenside um ein anionisches Tensid der allgemeinen Formel

R²⁴-O-(R²⁸O)ₙ(R²⁹O)ₘ(R³⁰O)ₗ-R²⁵-YM (XII).

In Formel (XII) steht R²⁴ für eine aliphatische, cycloaliphatische und/oder aromatische Kohlenwasserstoffgruppe, bevorzugt eine lineare oder verzweigte, aliphatische, bevorzugt primäre aliphatische Kohlenwasserstoffgruppe mit 10 bis 36 Kohlenstoffatomen, bevorzugt 16 bis 36 Kohlenstoffatomen.

Die Reste R²⁸ stehen unabhängig voneinander für voneinander für Butylengruppen -CR³¹(R³²)-CR³³(R³⁴)-, wobei die Reste R³¹, R³², R³³ und R³⁴ unabhängig voneinander für H, Methyl oder Ethyl stehen, mit der Maßgabe, dass die Summe der Kohlenstoffatome R³¹, R³², R³³ und R³⁴ jeweils 2 beträgt, und wobei bei mindestens 70 mol%, bevorzugt mindestens 80 mol% und besonders bevorzugt mindestens 95 mol% der Einheiten R²⁸ R³¹, R³² und R³³ für H und R³⁴ für Ethyl stehen.

Die Reste R²⁹ stehen für 1,2-Propylengruppen -CH₂-CH(CH₃)- und die Reste R³⁰ stehen für Ethylengruppen -CH₂-CH₂-.

R²⁵ steht für eine Einfachbindung oder eine Alkylengruppe mit 2 bis 6 Kohlenstoffatomen, welche optional auch noch mit OH-Gruppen substituiert sein kann.

Y steht für eine Gruppe ausgewählt aus der Gruppe von Sulfatgruppen, Sulfonatgruppen, Carboxylatgruppen und Phosphatgruppen, bevorzugt Sulfat- oder Carboxylatgruppen und M steht für H oder ein Kation, insbesondere ein Alkalimetallkation wie Na⁺.

In obiger Formel (XII) steht weiterhin n für eine Zahl von 0 bis 25, m für eine Zahl von 0 bis 35 und I für eine Zahl von 0 bis 50, mit der Maßgabe, dass die Summe n+m+l 3 bis 75 , bevorzugt 3 bis 50 beträgt und wobei weiterhin die Einheiten -(R²⁸O)-, -(R²⁹O)- und -(R³⁰O)- zu mindestens 80 mol%, bevorzugt mindestens 90 mol% in der der in Formel (XII) dargestellten Reihenfolge in das Tensid eingebaut sind. Für den Fachmann auf dem Gebiet der Alkoxylate ist klar, dass es sich bei den Alkoxylierungsgraden n, m und I um Mittelwerte handelt. Es kann sich somit auch um rationale Zahlen handeln.

In einer Ausführungsform der Erfindung handelt es sich bei den Resten R²⁴ in den Tensiden (XII) um lineare aliphatische Kohlenwasserstoffeste R^{24a} mit 12 bis 22 Kohlenstoffatomen, insbesondere von primären Fettalkoholen abgeleitete, lineare Kohlenwasserstoffreste. Von Fettalkoholen abgeleitete Reste weisen eine gerade Anzahl von Kohlenstoffatomen auf, wobei es sich häufig um Gemische verschiedener Reste handelt. Beispielsweise kann es sich um eine Mischung aus einem C₁₆- und einem C₁₈-Rest handeln.

Bei Tensiden (XII) mit linearen aliphatischen Resten R^{24a} kann es sich beispielsweise um Alkylpolyalkoxysulfate der allgemeinen Formel

R^{24a}-O-(R²⁹O)ₘ(R³⁰O)ₗSO₃M (XIIa)

handeln, d.h. n = 0, R²⁵ ist eine Einfachbindung und Y eine Sulfatgruppe. In Formel (Xlla) steht m für eine Zahl m von 0 bis 15 und n für eine Zahl von 0 bis 15, wobei die Summe aus m+l 3 bis 30 beträgt. Bevorzugt stehen m für 5 bis 15 und n für 0,1 bis 15, wobei die Summe aus m+l 5,1 bis 25 beträgt. M hat die Bedeutung wie oben definiert.

Bei Tensiden (XII) mit linearen aliphatischen Resten R^{24a} kann es sich weiterhin um Alkylpolyalkoxysulfate der allgemeinen Formel

R^{24a}-O-(R²⁸O)ₙ(R²⁹O)ₘ(R³⁰O)ₗSO₃M (XIIb)

handeln, d.h. R²⁵ ist eine Einfachbindung und Y eine Sulfatgruppe. In Formel (Xllb) steht n für eine Zahl von 3 bis 15, m für eine Zahl m von 0 bis 15 und n für eine Zahl von 0 bis 25, wobei die Summe aus n+m+l 3 bis 50, bevorzugt 3 bis 35 beträgt. Bevorzugt stehen n für von 5 bis 15, m für 1 bis 15 und I für 1 bis 25.

Bei Tensiden (XII) mit linearen aliphatischen Resten R^{24a} kann es sich weiterhin um Alkylpolyalkoxycarboxylate der allgemeinen Formel

R^{24a}-O-(R²⁹O)ₘ(R³⁰O)ₗ-CH₂-CO₂M (XIIc)

handeln, d.h. n = 0, R²⁵ ist eine Methylengrupppe -CH₂- und Y eine Carboxylatgruppe. In Formel (Xllc) steht m für eine Zahl m von 0 bis 15 und n für eine Zahl von 0 bis 15, wobei die Summe aus m+l 3 bis 30 beträgt. Bevorzugt stehen m für 5 bis 15 und n für 0,1 bis 15, wobei die Summe aus m+l 5,1 bis 25 beträgt. M hat die Bedeutung wie oben definiert.

In einer weiteren Ausführungsform der Erfindung handelt es sich bei den Resten R²⁴ in den Tensiden (XII) um verzweigte aliphatische Kohlenwasserstoffreste R^{24b} mit 10 bis 36 Kohlenstoffatomen, bevorzugt 12 bis 28 Kohlenstoffatomen. Der mittlere Verzeigungsgrad der Reste R^{24b} beträgt in der Regel 0,1 bis 3,5, bevorzugt 0,5 bis 3,5, beispielsweise 0,9 bis 3. Der Begriff "Verzweigungsgrad" wird hierbei in prinzipiell bekannter Art und Weise als die Zahl der Methylgruppen im Rest R^{24"} abzüglich 1 definiert. Der mittlere Verzweigungsgrad ist der statistische Mittelwert der Verzweigungsgrade aller Reste.

Bei den verzweigten aliphatischen Resten R^{24b} kann es sich um Reste R^{24b'} handeln, die sich von Guerbet-Alkoholen ableiten. Von Guerbet-Alkoholen abgeleitete Reste umfassen in 2-Stellung verzweigte Reste der folgenden allgemeinen Formel Cᵥ₊₂H₂₍ᵥ₊₂₎₊₁(CᵥH₂ᵥ₊₁)CH-CH₂-(XIII), wobei v für eine Zahl von 3 bis 18 steht. Guerbet-Alkohole können durch Kondensation von Monoalkoholen in Gegenwart von Basen erhalten werden, wobei ein Dimer, der sogenannte Guerbet-Alkohol mit der doppelten Anzahl von Kohlenstoffatomen entsteht. Neben den Dimeren können Guerbet-Alkohole noch Reste der Monomeralkohole sowie höhere Kondensationsprodukte erhalten.

Bei Tensiden mit verzweigten aliphatischen, von Guerbet-Alkoholen abgeleiteten Resten R^{24b'} kann es sich beispielsweise um Alkylpolyalkoxysulfate der allgemeinen Formel

R^{24b}'-O-(R²⁸O)ₙ(R²⁹O)ₘ(R³⁰O)ₗSO₃M (XIId)

handeln, d.h. R²⁵ ist eine Einfachbindung und Y eine Sulfatgruppe. In Formel (XIId) steht n für eine Zahl von 3 bis 15, m für eine Zahl m von 0 bis 15 und n für eine Zahl von 0 bis 25, wobei die Summe aus n+m+l 3 bis 50, bevorzugt 3 bis 35 beträgt. Bevorzugt stehen n für von 5 bis 15, m für 1 bis 15 und I für 1 bis 25.

Bei Tensiden mit verzweigten aliphatischen, von Guerbet-Alkoholen abgeleiteten Resten R^{24b'} kann es sich weiterhin um Alkypolyalkoxycarboxylate der allgemeinen Formel

R^{24b'}-O-(R²⁸O)ₙ(R²⁹O)ₘ(R³⁰O)ₗ-CH₂-CO₂M (XIIe)

handeln, d.h. R²⁵ ist eine Methylengruppe und Y eine Carboxylatgruppe. In Formel (XIIe) steht n für eine Zahl von 0 bis 15, m für eine Zahl m von 0 bis 15 und n für eine Zahl von 0 bis 25, wobei die Summe aus n+m+l 3 bis 50, bevorzugt 3 bis 35 beträgt. Bevorzugt stehen n für von 0 bis 15, m für 1 bis 15 und I für 2 bis 25.

In einer Ausführungsform handelt es sich bei verzweigten aliphatischen Resten R^{24b} um Reste R^{24b"}, welche überwiegend Methylverzweigungen aufweisen. Beispielsweise kann es sich um Reste handeln, bei denen 80 % der Verzweigungen Methylverzeigungen sind, und die bevorzugt einen Verzweigungsgrad von 0,1 bis 3,5 aufweisen.

Bei Tensiden mit derartigen Resten R^{24b"} kann es sich beispielsweise um Alkylethersulfate der allgemeinen Formel

R^{24b"}-O-(R²⁹O)ₘ(R³⁰O)ₗSO₃M (XIIf)

handeln, d.h. n = 0, R²⁵ ist eine Einfachbindung und Y eine Sulfatgruppe. In Formel (XIIf) steht m für eine Zahl m von 0 bis 15 und n für eine Zahl von 0 bis 15, wobei die Summe aus m+l 3 bis 30 beträgt. Bevorzugt stehen m für 5 bis 15 und n für 0,1 bis 15, wobei die Summe aus m+l 5,1 bis 25 beträgt. M hat die Bedeutung wie oben definiert. Beispielsweise kann R^{24"'} 16 bis 17 aliphatische Kohlenstoffatome aufweisen.

In einer weiteren Ausführungsform der Erfindung handelt es sich bei den Tensiden Alkylethersulfate der allgemeinen Formel

R²⁶-O-CH₂CHR²⁷-(R²⁹O)ₘ(R³⁰O)ₗSO₃M (XIV).

In Formel (XIV) steht m für eine Zahl m von 0 bis 35 und n für eine Zahl von 0 bis 55, wobei die Summe aus m+l 3 bis 60 beträgt. Bevorzugt stehen m für 5 bis 15 und n für 0,1 bis 15, wobei die Summe aus m+l 5,1 bis 25 beträgt. R²⁶ steht für lineare oder verzweigte aliphatische Kohlenwasserstoffreste umfassend 4 bis 22 Kohlenstoffatomen. R²⁷ steht für lineare aliphatische Kohlenwasserstoffreste umfassend 8 bis 22 Kohlenstoffatomen.

In einer weiteren Ausführungsform der Erfindung handelt es sich bei den Tensiden um Alkylarylsulfonate, beispielsweise Alkylbenzolsulfonate. Beispiele derartiger Tenside umfassen Dodecylbenzolsulfonat oder Hexadecylbenzolsulfonat.

In einer weiteren Ausführungsform der Erfindung handelt es sich bei den Tensiden um Arylalkylsulfonate, beispielsweise Phenylalkylsulfonate . Beispiele derartiger Tenside umfassen Phenyldodecylsulfonat.

In einer weiteren Ausführungsform der Erfindung handelt es sich bei den Tensiden um Paraffinsulfonate, beispielsweise sekundäres Paraffinsulfonat umfassend 14 bis 17 Kohlenstoffatome.

In einer weiteren Ausführungsform der Erfindung handelt es sich bei den Tensiden um Olefinsulfonate, beispielsweise α-Olefinsulfonate, bevorzugt interne Olefinsulfonate mit 12 bis bis 32 Kohlenstoffatomen. Olefinsulfonate werden in prinzipiell bekannter Art und Weise durch Sulfonierung entsprechender Olefine erhalten. Bevorzugt handelt es sich um interne Olefinsulfonate mit 12 bis 28 Kohlenstoffatomen, beispielsweise interne C_{15/18}-Olefinsulfonate, interne C_{19/23}-Olefinsulfonate, interne C_{20/24}-Olefinsulfonate oder interne C_{24/28}-Olefinsulfonate.

In einer weiteren Ausführungsform der Erfindung handelt es sich bei den Tensiden um Alkylpolyglucoside, wobei der Alkylteil 8 bis 18 aliphatische Kohlenstoffatome umfasst.

In einer weiteren Ausführungsform der Erfindung handelt es sich bei den Tensiden um Alkylethoxylate, wobei der Alkylteil 8 bis 36 aliphatische Kohlenstoffatom umfasst und das Tensid einen Ethoxylierungsgrad von 8 bis 39 aufweist.

Hinsichtlich weiterer Einzelheiten des Verfahrens sowie der verwendeten wässrigen Formulierungen wird auf die obige Beschreibung verwiesen. Bei den zum Alkali-Tensid-Polymer-Fluten verwendeten Formulierungen kann es sich um die oben beschriebenen Formulierungen, einschließlich der bevorzugten Ausführungsformen handeln, mit der Maßgabe, dass die Formulierung zusätzlich mindestens eine Base und mindestens ein Tensid, bevorzugt die soeben geschilderten Tenside umfasst und den oben beschriebenen pH-Wert aufweist.

In einer Ausführungsform der Erfindung umfasst die zum Alkali-Tensid-Polymer-Fluten eingesetzte Formulierung zusätzlich mindestens einen Komplexbildner. Hiermit können vorteilhaft unerwünschte Ausfällungen von schwerlöslichen Salzen, insbesondere Ca- und Mg-Salzen verhindert werden, wenn die alkalische wässrige Formulierung mit den entsprechenden Metallionen in Kontakt kommt und/oder entsprechende Salze enthaltende wässrige Formulierungen für das Verfahren eingesetzt werden. Die Menge von Komplexbildnern wird vom Fachmann gewählt. Sie kann beispielsweise 0,1 bis 4 Gew.-% bezüglich der Summe aller Komponenten der wässrigen Formulierung betragen.

### Kombinierte Verfahren

Das erfindungsgemäße Verfahren kann selbstverständlich mit weiteren Verfahrensschritten kombiniert werden.

In einer Ausführungsform kann man das Verfahren mit Wasserfluten kombinieren. Beim Wasserfluten wird Wasser durch mindestens eine Injektionsbohrung in eine Erdöllagerstätte injiziert und der Lagerstätte durch mindestens eine Produktionsbohrung Rohöl entnommen. Bei dem Wasser kann es sich um Süßwasser oder salzhaltige Wässer wie Meerwasser oder Lagerstättenwasser handeln. Nach dem Wasserfluten kann das erfindungsgemäße Verfahren des Polymerflutens angewandt werden.

In einer weiteren Ausführungsform kann man das Verfahren auch mit Tensidfluten kombinieren. Beim Tensidfluten wird eine wässrige Tensidlösung durch mindestens eine Injektionsbohrung in eine Erdöllagerstätte injiziert und der Lagerstätte durch mindestens eine Produktionsbohrung Rohöl entnommen. Bei dem Wasser kann es sich um Süßwasser oder salzhaltige Wässer wie Meerwasser oder Lagerstättenwasser handeln. Bei den Tensiden kann es sich um die oben genannten Tenside, einschließlich der beschriebenen bevorzugten Tenside handeln. Die wässrige Tensidlösung kann auch zusätzlich eine Base enthalten. Eine solche Technik wird Alkali-Tensid-Fluten genannt. Mögliche Verfahrensabfolgen sind Wasserfluten → Tensidfluten → Polymerfluten oder Wasserfluten → Alkali-Tensid-Fluten → Polymerfluten

Selbstverständlich kann auch das erfindungsgemäße Verfahren mehrmals nacheinander mit variierenden wässrigen Formulierungen angewandt werden. Beispielsweise kann man die Konzentration des Polymers in der Formulierung schrittweise erhöhen. Eine Kombination kann weiterhin als ersten Schritt Alkali-Tensid-Fluten gefolgt von Polymerfluten ohne Tensid und Alkali als zweitem Schritt umfassen.

Eine weitere Ausführungsform umfasst als ersten Schritt Alkali-Tensid-Polymer-Fluten gefolgt von Polymerfluten ohne Tensid und Alkali als zweitem Schritt.

Eine weitere Ausführungsform umfasst als ersten Schritt Tensid-Polymer-Fluten gefolgt von Polymerfluten ohne Tensid als zweitem Schritt.

Bei beiden zuletzt genannten Kombinationen können jeweils im ersten Schritt wässrige Formulierungen mit höherer Salinität als im zweiten Schritt eingesetzt werden. Alternativ können beide Schritte auch mit Wasser gleicher Salinität durchgeführt werden.

Eine weitere Ausführungsform umfasst das Verpumpen der wässrigen Polymerlösung in Gegenwart oder abwechselnd mit Gasen (z.B. Stickstoff, Methan, Ethan, Propan, Butan oder Kohlendioxid). Dieses Verfahren kann optional in Gegenwart von Tensiden durchgeführt werden.

### Vorteile der Erfindung

Die im Stand der Technik beispielsweise aus WO 2010/133527 A2, WO 2012/069477 A1 oder WO 2012/069478 A1 bekannten hydrophob assoziierenden Copolymere weisen die Struktur H₂C=CH-R-O-(EO)₁₀₋₁₅₀(AO)₅₋₁₅R' auf, wobei EO für Ethoxygruppen, AO für Alkoxygruppen mit mindestens 4 Kohlenstoffatomen, R für eine verknüpfende Gruppe und R' für H oder einen Kohlenwasserstoffrest mit 1 bis 30 Kohlenstoffatomen steht, d.h. sie weisen eine terminale hydrophobe Gruppe auf.

Die erfindungsgemäßen Copolymere (P) mit den Makromonomeren (B) enthalten Makromonomere (B2), welche ebenfalls eine terminale hydrophobe Gruppe aufweisen sowie außerdem Makromonomere (B1), welche zusätzlich eine kurze hydrophile terminale Gruppe aufweisen Überraschenderweise beeinträchtigt die kurze terminale hydrophile Gruppe nicht das Assoziieren in wässriger Lösung, sondern hat im Gegenteil sogar eine Verbesserung der Eigenschaften des Copolymers zur Folge.

Wässrige Lösungen der assoziativen Copolymere gemäß WO 2012/069477 A1 mit den Makromonomeren H₂C=CH-R-O-(EO)₁₀₋₁₅₀(AO)₅₋₁₅R' weisen einen charakteristischen Verlauf der Viskosität in Anhängigkeit von der Temperatur ab. Abbildungen 1a und 1b zeigen jeweils die Abhängigkeit der Viskosität wässriger Lösungen verschiedener Copolymere von der Temperatur auf, und zwar die Viskosität von zwei handelsüblichen, nicht assoziativen Copolymeren, nämlich eines Copolymers aus ca. 50 Gew.-% Acrylamid und ca. 50 Gew.-% Natrium-ATBS (Copolymer V3), ATBS = Natriumsalz der 2-Acrylamido-2-methylpropansulfonsäure) eines Copolymers aus 75 mol% Acrylamid und 25 mol% Natriumacrylat (Copolymer V4) sowie weiterhin eines assoziativen Copolymers aus ca. 50 Gew.-% Acrylamid, ca. 48 Gew.-% Natrium-ATBS sowie 2 Gew.-% des besagten Makromonomers (Copolymer V1). Bei den beiden handelsüblichen, nicht assoziativen Copolymeren nimmt die Viskosität mit zunehmender Temperatur ab. Bei dem assoziativen Copolymer nimmt die Viskosität der wässrigen Lösungen zunächst deutlich zu, verläuft bei ca. 60 °C durch ein Maximum und nimmt danach wieder ab.

Wässrige Lösungen der assoziativen Copolymere gemäß WO 2012/069477 A1 weisen also im Bereich um 60 °C eine besonders hohe Viskositätseffizienz auf.

Bei wässrigen Lösungen der erfindungsgemäßen Copolymeren (P) nimmt die Viskosität der Lösungen beim Erhöhen der Temperatur zunächst bis zu einem Maximum bei ca. 60 °C zu wie bei den Copolymeren aus WO 2012/069477 A1. Bei weiterem Steigern der Temperatur nimmt überraschenderweise die Viskosität je nach Copolymer und Salinität zumindest nicht so stark ab oder bleibt sogar bis 90 °C mehr oder weniger konstant.

Die erfindungsgemäßen Copolymere (P) haben also bei Temperaturen oberhalb von 60 °C eine bessere Viskositätseffizienz als die aus dem Stand der Technik bekannten Copolymere und erlauben ein wirtschaftlicheres Polymerfluten auch noch bei höheren Lagerstättentemperaturen.

Die folgenden Beispiele sollen die Erfindung näher illustrieren:

### Herstellung der Makromonomere (B):

### Abkürzungen

- HBVE: Hydroxybutylvinylether, H₂C=CH-O-(CH₂)₄-OH
- EO: Ethylenoxid
- BuO: Butylenoxid (> 85 Gew.-% 1,2-Butylenoxid)
- PeO: Pentenoxid (überwiegend 1,2-Pentenoxid)

### Makromonomer 1:

### Alkoxylierung von HBVE mit 24,5 EO, gefolgt von 16 BuO, gefolgt von 3,5 EO

**Mischung aus**

| | | |
|---|---|---|
| H₂C=CH-O-(CH₂)₄-O-(EO)_{24,5}(BuO)_{15,8}[(BuO)_{0,3}(EO)_{5,8}]-H | (B1) | ca. 60 mol% |
| H₂C=CH-O-(CH₂)₄-O-(EO)_{24,5}(BuO)_{15,8}-H | (B2) | ca. 40 mol% |

### Herstellvorschrift:

In einem 2 l Druckautoklaven mit Ankerrührer wurden 135,3 g (1,16 mol) Hydroxybutylvinylether (HBVE) (mit 100 ppm Kaliumhydroxid (KOH) stabilisiert) vorgelegt und der Rührer angestellt. 1,06 g Kaliummethanolat (KOMe)-Lösung (32 % KOMe in Methanol (MeOH), entspricht 0,0048 mol Kalium) wurden zugefahren und der Rührbehälter auf einen Druck von 10 - 20 mbar evakuiert, auf 65 °C aufgeheizt, 70 min bei 65 °C und einem Druck von 10 - 20 mbar betrieben. MeOH wurde abdestilliert. Es wurde dreimal mit N₂ (Stickstoff) gespült. Danach wurde der Behälter auf Druckdichtigkeit geprüft, 0,5 bar Überdruck (1,5 bar absolut) eingestellt und auf 120 °C aufgeheizt. Man entspannte auf 1 bar absolut und dosierte 1126 g (25,6 mol) Ethylenoxid (EO) zu bis pₘₐₓ 3.9 bar absolut und Tₘₐₓ 150 °C betrug. Nach Dosage von 300 g EO wurde die Dosage abgebrochen (ca. 3 h nach Beginn), 30 min gewartet und auf 1,3 bar absolut entspannt. Danach wurde das restliche EO zudosiert. Die Zudosierung an EO dauerte inklusive Entspannung insgesamt 10 h. Es wurde bis Druckkonstanz nachgerührt bei ca. 145-150 °C (1 h), auf 100 °C abgekühlt und bei einem Druck von weniger als 10 mbar für 1 h von Niedrigsiedern befreit. Die Ware wurde bei 80 ° C unter N₂ abgefüllt. Die Analytik (OH-Zahl, GPC, 1H-NMR in CDCl₃, 1H-NMR in MeOD) bestätigte die Struktur HBVE - 22 EO.

In einem 2 I Druckautoklaven mit Ankerrührer wurden 588,6 g (0,543 mol) HBVE-22 EO vorgelegt und der Rührer eingeschaltet. Danach wurden 2,39 g 50 %ige NaOH-Lösung (0,030 mol NaOH, 1,19 g NaOH) zugegeben, Vakuum von <10 mbar angelegt, auf 100 °C erhitzt und für 80 min gehalten, um das Wasser abzudestillieren. Man spülte dreimal mit N₂. Danach wurde der Behälter auf Druckdichtigkeit geprüft, 0,5 bar Überdruck (1,5 bar absolut) eingestellt, auf 127 °C aufgeheizt und danach der Druck auf 1,6 bar absolut eingestellt. Es wurden 59,7 g (1,358 mol) EO zudosiert bei 127 °C, pₘₐₓ betrug 3,9 bar absolut. Es wurde 30 min gewartet bis sich Druckkonstanz einstellte, danach wurde auf 1,0 bar absolut entspannt. Es wurden 625,5 g (8,688 mol) BuO (Butylenoxid) bei 127 °C zudosiert, pₘₐₓ betrug 3,1 bar absolut. Ein zwischenzeitliches Entspannen infolge Füllgradzunahme wurde durchgeführt. Man stoppte die BuO-Dosage, ließ 1 h ausreagieren bis der Druck konstant war und entspannte auf 1,0 bar absolut. Danach wurde die Zudosage von BuO fortgeführt. Pₘₐₓ betrug weiterhin 3,1 bar (erstes Entspannen nach 610 g BuO, Gesamtdosierzeit BuO 8 h inkl. Entspannungspause). Nach Ende der BuO-Dosage ließ man 8 h nachreagieren und erwärmte dann auf 135 °C. Man entspannte auf 1,6 bar absolut. Danach wurden 83,6 g (1,901 mol) EO (Ethylenoxid) bei 135 °C zudosiert, pₘₐₓ betrug 3,1 bar absolut. Nach Ende der EO-Dosage ließ man 4 h nachreagieren. Es wurde auf 100 °C abgekühlt, Restoxid abgezogen bis der Druck für mindestens 10 min unter 10 mbar lag. Dann erfolgte die Zugabe von 0,5 % Wasser bei 120°C und anschließendes Abziehen bis der Druck für mindestens 10 min unter 10 mbar lag. Das Vakuum wurde mit N₂ aufgehoben und es erfolgte die Zugabe von 100 ppm BHT. Die Abfüllung erfolgte bei 80 °C unter N₂. Die Analytik (Massenspektrum, GPC, 1H-NMR in CDCl₃, 1H-NMR in MeOD) bestätigte die mittlere Zusammensetzung HBVE - 24,5 EO - 16 BuO - 3,5 EO.

### Bestimmung der Mengen der Makromonomere B1 und B2:

Die Makromonomere (B1) weisen eine sekundäre, terminale OH-Gruppe auf, während die Makromonomere (B2) eine primäre terminale OH-Gruppe aufweisen. Sie lassen sich daher durch Untersuchung mittels 1H-NMR in CDCl₃ in Gegenwart des Shift-Reagenzes TAI (Trichloracetylisocyanat) unterscheiden und das Verhältnis (B1) zu (B2) kann quantitativ bestimmt werden.

Da die Enolethergruppe in HBVE basierten Produkten säureempfindlich ist und unter den Testbedingungen hydrolysieren und primäre Alkohole bilden könnte, welche das Testergebnis verfälschen könnten, wurde zur Bestimmung des Mengenverhältnis der Monomere B1 und B2 ein Versuch mit dem gegen saure Hydrolyse stabileren Butyldigylkol (BDG, H₃C-(CH₂)₃-O-CH₂CH₂O-CH₂-CH₂OH) anstelle von HBVE durchgeführt.

Für die Bestimmung wurde zunächst BDG mit 3 Äquivalenten BuO gefolgt von 3,5 Äquivalenten EO unter den oben genannten Bedingungen alkoxyliert. Das Intermediat BDG - 3 BuO wies ausschließlich sekundäre terminale OH-Gruppen auf. Nach der Ethoxylierung mit 3,5 EO wurden 40 mol% sekundärer Alkohol und 60 mol% primärer Alkohol gefunden, ein Teil der Intermediate BDG - 3 BuO wurde also gar nicht ethoxyliert. In den Intermediaten, welche ethoxyliert wurden, sind entsprechend mehr als 3,5 Äquivalente EO enthalten. Dieses Ergebnis ist so zu erklären: Das erste Molekül EO reagiert mit dem sterisch anspruchsvollen sekundären Alkohol und bildet dabei einen sterisch weniger anspruchsvollen und somit reaktiveren primären Alkohol aus. Das nächste Molekül EO reagiert bevorzugt mit der bereits gebildeten primären Alkoholgruppe und nicht mit der sekundären Alkoholgruppe.

### Bestimmung der Restmengen von Butylenoxid

Der Wert von c wurde ermittelt, indem jeweils nach dem Ende der Butoxylierung (d.h. HBVE → 24,5 EO → 16 BuO) und nach dem Ende der zweiten Ethoxylierung (d.h. HBVE → 24,5 EO → 16 BuO → 3,5 EO) der Restgehalt von Butylenoxid im Reaktionsgemisch bestimmt wurde.

Bei HBVE → 24,5 EO →16 BuO wurde die Vorschrift bis zum Ende der BuO-Dosage einschließlich der Nachreaktion von 8 h durchgeführt und die nachfolgende Ethoxylierung weggelassen. Der Ansatz wurde gewogen, anschließend wurde Vakuum (<10 mbar) bei 100 °C für 2 h angelegt und erneut gewogen. Es wurden ca. 6000 ppm an flüchtiger Komponente entfernt, welche per GC-Headspace als 1,2-Butylenoxid identifiziert wurde.

Bei HBVE → 24,5 EO → 16 BuO → 3,5 EO wurde in analoger Art und Weise nach der letzten Ethoxylierung inklusive Nachreaktionszeit der Ansatz gewogen, anschließend wurde Vakuum (<10 mbar) bei 100°C für 2 h angelegt und erneut gewogen. Es wurden ca. 1500 ppm an flüchtiger Komponente entfernt, welche per GC-Headspace als 1,2-Butylenoxid identifiziert wurde.

Es wurden also ca. 4500 ppm BuO während der abschließenden Ethoxylierung in das Makromonomer eingebaut, so dass die terminalen EO-Blöcke der Makromonomere B1 geringe Mengen an BuO enthalten. Aus den Mengen errechnet sich ein Wert von c von ca. 0,3.

### Makromonomer 1a:

### Alkoxylierung von HBVE mit 24,5 EO, gefolgt von 16 BuO, gefolgt von 3,5 EO

Es wurde wie bei Makromonomer 1 vorgegangen, nur wurde bei einem Druck von bis zu 6 bar butoxyliert und ethoxyliert.

In einem 2 l Druckautoklaven mit Ankerrührer wurden 135,3 g (1,16 mol) Hydroxybutylvinylether (HBVE) (mit 100 ppm Kaliumhydroxid (KOH) stabilisiert) vorgelegt und der Rührer angestellt. 1,06 g Kaliummethanolat (KOMe)-Lösung (32 % KOMe in Methanol (MeOH), entspricht 0,0048 mol Kalium) wurden zugefahren und der Rührbehälter auf einen Druck von 10-20 mbar evakuiert, auf 65 °C aufgeheizt, 70 min bei 65 °C und einem Druck von 10-20 mbar betrieben. MeOH wurde abdestilliert. Es wurde dreimal mit N₂ (Stickstoff) gespült. Danach wurde der Behälter auf Druckdichtigkeit geprüft, 0,5 bar Überdruck (1,5 bar absolut) eingestellt und auf 120 °C aufgeheizt. Man entspannte auf 1 bar absolut und dosierte 1126 g (25,6 mol) Ethylenoxid (EO) zu bis pₘₐₓ 3.9 bar absolut und Tₘₐₓ 150 °C betrug. Nach Dosage von 300 g EO wurde die Dosage abgebrochen (ca. 3 h nach Beginn), 30 min gewartet und auf 1,3 bar absolut entspannt. Danach wurde das restliche EO zudosiert. Die Zudosierung an EO dauerte inklusive Entspannung insgesamt 10 h. Es wurde bis Druckkonstanz nachgerührt bei ca. 145-150 °C (1 h), auf 100 °C abgekühlt und bei einem Druck von weniger als 10 mbar für 1 h von Niedrigsiedern befreit. Die Ware wurde bei 80 ° C unter N₂ abgefüllt. Die Analytik (OH-Zahl, GPC, 1H-NMR in CDCl₃, 1H-NMR in MeOD) bestätigte die Struktur HBVE - 22 EO.

In einem 2 I Druckautoklaven mit Ankerrührer wurden 568,6 g (0,525 mol) HBVE-22 EO vorgelegt und der Rührer eingeschaltet. Danach wurden 2,31 g 50 %ige NaOH-Lösung (0,029 mol NaOH, 1,16 g NaOH) zugegeben, Vakuum von <10 mbar angelegt, auf 100 °C erhitzt und für 80 min gehalten, um das Wasser abzudestillieren. Man spülte dreimal mit N₂. Danach wurde der Behälter auf Druckdichtigkeit geprüft, 0,5 bar Überdruck (1,5 bar absolut) eingestellt, auf 127 °C aufgeheizt und danach der Druck auf 3 bar absolut eingestellt. Es wurden 57,7 g (1,311 mol) EO zudosiert bei 127 °C, pₘₐₓ betrug 6 bar absolut. Es wurde 30 min gewartet bis sich Druckkonstanz einstellte, danach wurde auf 4,0 bar absolut entspannt. Es wurden 604,2 g (8,392 mol) BuO (Butylenoxid) bei 127 °C zudosiert, pₘₐₓ betrug 6 bar absolut. Ein zwischenzeitliches Entspannen infolge Füllgradzunahme wurde durchgeführt. Man stoppte die BuO-Dosage, ließ 1 h ausreagieren bis Druck konstant war und entspannte auf 4,0 bar absolut. Danach wurde die Zudosage von BuO fortgeführt. Pₘₐₓ betrug weiterhin 6 bar (erstes Entspannen nach 505 g BuO, Gesamtdosierzeit BuO 11 h inkl. Entspannungspause). Nach Ende der BuO-Dosage ließ man 6 h bei 127 °C nachreagieren. Man entspannte auf 4 bar absolut. Danach wurden 80,8 g (1,836 mol) EO (Ethylenoxid) bei 127 °C zudosiert, pₘₐₓ betrug 6 bar absolut. Nach Ende der EO-Dosage ließ man 4 h nachreagieren. Es wurde auf 100 °C abgekühlt, Restoxid abgezogen bis der Druck für mindestens 10 min unter 10 mbar lag. Es wurden ca. 1400 ppm an leichtflüchtige Komponenten abgetrennt. Dann erfolgte die Zugabe von 0,5% Wasser bei 120 °C und anschließendes Abziehen bis der Druck für mindestens 10 min unter 10 mbar lag. Das Vakuum wurde mit N₂ aufgehoben und es erfolgte die Zugabe von 100 ppm BHT. Die Abfüllung erfolgte bei 80 °C unter N₂. Die Analytik (Massenspektrum, GPC, 1H-NMR in CDCl₃, 1H-NMR in MeOD) bestätigte die mittlere Zusammensetzung HBVE - 24,5 EO-16 BuO - 3,5 EO.

### Makromonomer 1b:

### Alkoxylierung von HBVE mit 24,5 EO, gefolgt von 16 BuO, gefolgt von 3,5 EO

Es wurde wie bei Makromonomer 1 vorgegangen, nur wurde bei einem Druck von 0,3 bis zu 2 bar absolut butoxyliert.

In einem 2 l Druckautoklaven mit Ankerrührer wurden 135,3 g (1,16 mol) Hydroxybutylvinylether (HBVE) (mit 100 ppm Kaliumhydroxid (KOH) stabilisiert) vorgelegt und der Rührer angestellt. 1,06 g Kaliummethanolat (KOMe)-Lösung (32 % KOMe in Methanol (MeOH), entspricht 0,0048 mol Kalium) wurden zugefahren und der Rührbehälter auf einen Druck von 10-20 mbar evakuiert, auf 65 °C aufgeheizt, 70 min bei 65 °C und einem Druck von 10-20 mbar betrieben. Me-OH wurde abdestilliert. Es wurde dreimal mit N₂ (Stickstoff) gespült. Danach wurde der Behälter auf Druckdichtigkeit geprüft, 0,5 bar Überdruck (1,5 bar absolut) eingestellt und auf 120 °C aufgeheizt. Man entspannte auf 1 bar absolut und dosierte 1126 g (25,6 mol) Ethylenoxid (EO) zu bis pₘₐₓ 3.9 bar absolut und Tₘₐₓ 150 °C betrug. Nach Dosage von 300 g EO wurde die Dosage abgebrochen (ca. 3 h nach Beginn), 30 min gewartet und auf 1,3 bar absolut entspannt. Danach wurde das restliche EO zudosiert. Die Zudosierung an EO dauerte inklusive Entspannung insgesamt 10 h.
Es wurde bis Druckkonstanz nachgerührt bei ca. 145 bis 150 °C (1 h), auf 100 °C abgekühlt und bei einem Druck von weniger als 10 mbar für 1 h von Niedrigsiedern befreit. Die Ware wurde bei 80 °C unter N₂ abgefüllt. Die Analytik (OH-Zahl, GPC, 1H-NMR in CDCl₃, 1H-NMR in MeOD) bestätigte die Struktur HBVE - 22 EO.

In einem 2 I Druckautoklaven mit Ankerrührer wurden 568,6 g (0,525 mol) HBVE-22 EO vorgelegt und der Rührer eingeschaltet. Danach wurden 2,31 g 50 %ige NaOH-Lösung (0,029 mol NaOH, 1,16 g NaOH) zugegeben, Vakuum von <10 mbar angelegt, auf 100 °C erhitzt und für 80 min gehalten, um das Wasser abzudestillieren. Man spülte dreimal mit N₂. Danach wurde der Behälter auf Druckdichtigkeit geprüft, 0,5 bar Überdruck (1,5 bar absolut) eingestellt, auf 127 °C aufgeheizt und danach der Druck auf 3 bar absolut eingestellt. Es wurden 57,7 g (1,311 mol) EO zudosiert bei 127 °C, pₘₐₓ betrug 6 bar absolut. Es wurde 30 min gewartet bis sich Druckkonstanz einstellte, danach wurde auf 1,0 bar absolut entspannt. Es wurde vakuum angelegt und der Druck auf 0,3 bar absolut abgesenkt. Es wurden 604,2 g (8,392 mol) BuO (Butylenoxid) bei 127 °C zudosiert, pₘₐₓ betrug 2 bar absolut. Ein zwischenzeitliches Entspannen infolge Füllgradzunahme war nicht mehr notwendig (BuO-Dosierung dauerte ca. 14 h). Nach Ende der BuO-Dosage ließ man 5 h bei 127 °C nachreagieren. Man presste N₂ auf und stellte einen Druck von 3 bar absolut ein. Danach wurden 80,8 g (1,836 mol) EO (Ethylenoxid) bei 127 °C zudosiert, pₘₐₓ betrug 6 bar absolut. Nach Ende der EO-Dosage ließ man 4 h nachreagieren. Es wurde auf 100 °C abgekühlt, Restoxid abgezogen bis der Druck für mindestens 10 min unter 10 mbar lag. Es wurden ca. 1400 ppm an leichtflüchtige Komponenten abgetrennt. Dann erfolgte die Zugabe von 0,5% Wasser bei 120 °C und anschließendes Abziehen bis der Druck für mindestens 10 min unter 10 mbar lag. Das Vakuum wurde mit N₂ aufgehoben und es erfolgte

die Zugabe von 100 ppm BHT. Die Abfüllung erfolgte bei 80 °C unter N₂. Die Analytik (Massenspektrum, GPC, 1H-NMR in CDCl₃, 1H-NMR in MeOD) bestätigte die mittlere Zusammensetzung HBVE - 24,5 EO - 16 BuO - 3,5 EO.

### Makromonomer 2:

### Alkoxylierung von HBVE mit 24,5 EO, gefolgt von 16 BuO, gefolgt von 5 EO

**Mischung aus**

| | |
|---|---|
| H₂C=CH-O-(CH₂)₄-O-(EO)_{24,5}(BuO)_{15,8}[(BuO)_{0,3}(EO)_{7,7}]-H | ca. 65 mol% |
| H₂C=CH-O-(CH₂)₄-O-(EO)_{24,5}(BuO)_{15,8}⁻H | ca. 35 mol% |

### Herstellvorschrift:

In einem 2 l Druckautoklaven mit Ankerrührer wurden 135,3 g (1,16 mol) Hydroxybutylvinylether (HBVE) (mit 100 ppm Kaliumhydroxid (KOH) stabilisiert) vorgelegt und der Rührer angestellt. 1,06 g Kaliummethanolat (KOMe)-Lösung (32 % KOMe in Methanol (MeOH), entspricht 0,0048 mol Kalium) wurden zugefahren und der Rührbehälter auf einen Druck von 10-20 mbar evakuiert, auf 65 °C aufgeheizt, 70 min bei 65 °C und einem Druck von 10-20 mbar betrieben. MeOH wurde abdestilliert. Es wurde dreimal mit N₂ (Stickstoff) gespült. Danach wurde der Behälter auf Druckdichtigkeit geprüft, 0,5 bar Überdruck (1,5 bar absolut) eingestellt und auf 120 °C aufgeheizt. Man entspannte auf 1 bar absolut und dosierte 1126 g (25,6 mol) Ethylenoxid (EO) zu bis pₘₐₓ 3.9 bar absolut und Tₘₐₓ 150 °C betrug. Nach Dosage von 300 g EO wurde die Dosage abgebrochen (ca. 3 h nach Beginn), 30 min gewartet und auf 1,3 bar absolut entspannt. Danach wurde das restliche EO zudosiert. Die Zudosierung an EO dauerte inklusive Entspannung insgesamt 10 h.

Es wurde bis Druckkonstanz nachgerührt bei ca. 145 bis 150 °C (1 h), auf 100 °C abgekühlt und bei einem Druck von weniger als 10 mbar für 1 h von Niedrigsiedern befreit. Die Ware wurde bei 80 °C unter N₂ abgefüllt. Die Analytik (OH-Zahl, GPC, 1H-NMR in CDCl₃, 1H-NMR in MeOD) bestätigte die Struktur HBVE - 22 EO.

In einem 2 I Druckautoklaven mit Ankerrührer wurden 566,4 g (0,522 mol) HBVE-22 EO vorgelegt und der Rührer eingeschaltet. Danach wurden 2,30 g 50 %ige NaOH-Lösung (0,029 mol NaOH, 1,15 g NaOH) zugegeben, Vakuum von <10 mbar angelegt, auf 100°C erhitzt und für 80 min gehalten, um das Wasser abzudestillieren. Man spülte dreimal mit N₂. Danach wurde der Behälter auf Druckdichtigkeit geprüft, 0,5 bar Überdruck (1,5 bar absolut) eingestellt, auf 127°C aufgeheizt und danach der Druck auf 1,1 bar absolut eingestellt. Es wurden 57,5 g (1,306 mol) EO zudosiert bei 127°C, pₘₐₓ betrug 3,9 bar absolut. Es wurde 30 min gewartet bis sich Druckkonstanz einstellte, danach wurde auf 1,0 bar absolut entspannt. Es wurden 601,7 g (8,357 mol) BuO (Butylenoxid) bei 127°C zudosiert, pₘₐₓ betrug 3,1 bar absolut. Ein zwischenzeitliches Entspannen infolge Füllgradzunahme wurde durchgeführt. Man stoppte die BuO-Dosage, ließ 1 h ausreagieren bis Druck konstant war und entspannte auf 1,0 bar absolut. Danach wurde die Zudosage von BuO fortgeführt. Pₘₐₓ betrug weiterhin 3,1 bar (erstes Entspannen nach 450 g BuO, Gesamtdosierzeit BuO 8 h inkl. Entspannungspause). Nach Ende der BuO-Dosage ließ man 8 h nachreagieren und erwärmte dann auf 135°C. Man entspannte auf 1,6 bar absolut. Danach wurden 114,9 g (2,612 mol) EO (Ethylenoxid) bei 135°C zudosiert, pₘₐₓ betrug 3,1 bar absolut. Nach Ende der EO-Dosage ließ man 5 h nachreagieren. Es wurde auf 100°C abgekühlt, Restoxid abgezogen bis der Druck für mindestens 10 min unter10 mbar lag. Dann erfolgte die Zugabe von 0,5% Wasser bei 120°C und anschließendes Abziehen bis der Druck für mindestens 10 min unter 10 mbar lag. Das Vakuum wurde mit N₂ aufgehoben und es erfolgte die Zugabe von 100 ppm BHT. Die Abfüllung erfolgte bei 80°C unter N₂. Die Analytik (Massenspektrum, GPC, 1H-NMR in CDCl₃, 1H-NMR in MeOD) bestätigte die mittlere Zusammensetzung HBVE - 24,5 EO - 16 BuO - 5 EO.

Die Mengen der Makromonomere B1 und B2 sowie der Wert von c wurden analog zur Vorgehensweise bei Makromonomer 1 bestimmt. So finden sich bei nach der Butoxylierung HBVE→ 24,5 EO -→16 BuO ca. 6000 ppm flüchtige Anteile wieder, welche als 1,2-Butenoxid identifiziert wurden. Nach Zugabe von 5 eq EO wurde der Anteil der flüchtigen Komponenten auf ca. 1200 ppm abgesenkt. Hieraus errechnet sich ein Wert für c von ca. 0,3.

### Makromonomer 3:

### Alkoxylierung von HBVE mit 22 EO, gefolgt von 10 PeO, gefolgt von 2,5 EO

**Mischung aus**

| | |
|---|---|
| H₂C=CH-O-(CH₂)₄-O-(EO)₂₂(PeO)_{9,7}[(PeO)_{0,2}(EO)_{5,5}]-H | ca. 45 mol% |
| H₂C=CH-O-(CH₂)₄-O-(EO)₂₂(PeO)_{9,7}H | ca. 55 mol% |

### Herstellvorschrift:

### Herstellvorschrift:

In einem 2 l Druckautoklaven mit Ankerrührer wurden 135,3 g (1,16 mol) Hydroxybutylvinylether (HBVE) (mit 100 ppm Kaliumhydroxid (KOH) stabilisiert) vorgelegt und der Rührer angestellt. 1,06 g Kaliummethanolat (KOMe)-Lösung (32 % KOMe in Methanol (MeOH), entspricht 0,0048 mol Kalium) wurden zugefahren und der Rührbehälter auf einen Druck von 10 - 20 mbar evakuiert, auf 65°C aufgeheizt, 70 min bei 65°C und einem Druck von 10 -20 mbar betrieben. MeOH wurde abdestilliert. Es wurde dreimal mit N₂ (Stickstoff) gespült. Danach wurde der Behälter auf Druckdichtigkeit geprüft, 0,5 bar Überdruck (1,5 bar absolut) eingestellt und auf 120°C aufgeheizt. Man entspannte auf 1 bar absolut und dosierte 1126 g (25,6 mol) Ethylenoxid (EO) zu bis pₘₐₓ 3.9 bar absolut und Tₘₐₓ 150°C betrug. Nach Dosage von 300 g EO wurde die Dosage abgebrochen (ca. 3 h nach Beginn), 30 min gewartet und auf 1,3 bar absolut entspannt. Danach wurde das restliche EO zudosiert. Die Zudosierung an EO dauerte inklusive Entspannung insgesamt 10 h.

Es wurde bis Druckkonstanz nachgerührt bei ca. 145-150°C (1 h), auf 100°C abgekühlt und bei einem Druck von weniger als 10 mbar für 1 h von Niedrigsiedern befreit. Die Ware wurde bei 80° C unter N₂ abgefüllt. Die Analytik (OH-Zahl, GPC, 1H-NMR in CDCl₃, 1H-NMR in MeOD) bestätigte die Struktur HBVE - 22 EO.

In einem 2 l Druckautoklaven mit Ankerrührer wurden 713,6 g (0,658 mol) HBVE-22 EO vorgelegt und der Rührer eingeschaltet. Danach wurden 2,89 g 50 %ige NaOH-Lösung (0,036 mol NaOH, 1,45 g NaOH) zugegeben, Vakuum von <10 mbar angelegt, auf 100°C erhitzt und für 80 min gehalten, um das Wasser abzudestillieren. Man spülte dreimal mit N₂. Danach wurde der Behälter auf Druckdichtigkeit geprüft, 0,5 bar Überdruck (1,5 bar absolut) eingestellt, auf 127°C aufgeheizt und danach der Druck auf 1,1 bar absolut eingestellt. Es wurden 566,1 g (6,583 mol) PeO (Pentenoxid) bei 127 °C zudosiert, pₘₐₓ betrug 2,1 bar absolut. Ein zwischenzeitliches Entspannen infolge Füllgradzunahme wurde durchgeführt. Man stoppte die PeO-Dosage, ließ 1 h ausreagieren bis Druck konstant war und entspannte auf 1,0 bar absolut. Danach wurde die Zudosage von PeO fortgeführt. Pₘₐₓ betrug weiterhin 2,1 bar (erstes Entspannen nach 310 g PeO, Gesamtdosierzeit PeO 6,5 h inkl. Entspannungspause). Nach Ende der PeO-Dosage ließ man 2 h nachreagieren und erwärmte dann auf 135°C. Man entspannte auf 1,6 bar absolut. Danach wurden 72,4 g (1,646 mol) EO (Ethylenoxid) bei 135°C zudosiert, pₘₐₓ betrug 3,1 bar absolut. Nach Ende der EO-Dosage ließ man 5 h nachreagieren. Es wurde auf 100°C abgekühlt, Restoxid abgezogen bis der Druck für mindestens 10 min unter 10 mbar lag. Dann erfolgte die Zugabe von 0,5% Wasser bei 120°C und anschließendes Abziehen bis der Druck für mindestens 10 min unter 10 mbar lag. Das Vakuum wurde mit N₂ aufgehoben und es erfolgte die Zugabe von 100 ppm BHT. Die Abfüllung erfolgte bei 80°C unter N₂. Die Analytik (Massenspektrum, GPC, 1H-NMR in CDCl₃, 1H-NMR in MeOD) bestätigte die mittlere Zusammensetzung HBVE →22 EO →10 PeO → 2,5 EO.

Die Mengen der Makromonomere B1 und B2 sowie der Wert von c wurden analog zur Vorgehensweise bei Makromonomer 1 bestimmt. So finden sich bei HBVE → 22 EO → 10 PeO ca. 12 000 ppm flüchtige Anteile wieder, welche als 1,2-Pentenoxid identifiziert wurden. Nach Zugabe von 2,5 eq EO wurde der Anteil der flüchtigen Komponenten auf ca. 9000 ppm abgesenkt. Hieraus errechnet sich ein Wert für c von ca. 0,2.

### Makromonomer 4:

### Alkoxylierung von HBVE mit 22 EO, gefolgt von 10 PeO, gefolgt von 9 EO

**Mischung aus**

| | |
|---|---|
| H₂C=CH-O-(CH₂)₄-O-(EO)₂₂(PeO)_{9,7}[(PeO)_{0,1}(EO)₁₂]-H | ca. 75 mol% |
| H₂C=CH-O-(CH₂)₄-O-(EO)₂₂(PeO)₉,₇⁻H | ca. 25 mol% |

### Herstellvorschrift:

In einem 2 l Druckautoklaven mit Ankerrührer wurden 135,3 g (1,16 mol) Hydroxybutylvinylether (HBVE) (mit 100 ppm Kaliumhydroxid (KOH) stabilisiert) vorgelegt und der Rührer angestellt. 1,06 g Kaliummethanolat (KOMe)-Lösung (32 % KOMe in Methanol (MeOH), entspricht 0,0048 mol Kalium) wurden zugefahren und der Rührbehälter auf einen Druck von 10-20 mbar evakuiert, auf 65°C aufgeheizt, 70 min bei 65°C und einem Druck von 10 -20 mbar betrieben°C . MeOH wurde abdestilliert. Es wurde dreimal mit N₂ (Stickstoff) gespült. Danach wurde der Behälter auf Druckdichtigkeit geprüft, 0,5 bar Überdruck (1,5 bar absolut) eingestellt und auf 120 °C aufgeheizt. Man entspannte auf 1 bar absolut und dosierte 1126 g (25,6 mol) Ethylenoxid (EO) zu bis pₘₐₓ 3.9 bar absolut und Tₘₐₓ 150 °C betrug. Nach Dosage von 300 g EO wurde die Dosage abgebrochen (ca. 3 h nach Beginn), 30 min gewartet und auf 1,3 bar absolut entspannt. Danach wurde das restliche EO zudosiert. Die Zudosierung an EO dauerte inklusive Entspannung insgesamt 10 h.
Es wurde bis Druckkonstanz nachgerührt bei ca. 145-150 °C (1 h), auf 100 °C abgekühlt und bei einem Druck von weniger als 10 mbar für 1 h von Niedrigsiedern befreit. Die Ware wurde bei 80 ° C unter N₂ abgefüllt. Die Analytik (OH-Zahl, GPC, 1H-NMR in CDCl₃, 1H-NMR in MeOD) bestätigte die Struktur HBVE - 22 EO.

In einem 2 I Druckautoklaven mit Ankerrührer wurden 611,5 g (0,564 mol) HBVE-22 EO vorgelegt und der Rührer eingeschaltet. Danach wurden 2,48 g 50 %ige NaOH-Lösung (0,031 mol NaOH, 1,24 g NaOH) zugegeben, Vakuum von <10 mbar angelegt, auf 100 °C erhitzt und für 80 min gehalten, um das Wasser abzudestillieren. Man spülte dreimal mit N₂. Danach wurde der Behälter auf Druckdichtigkeit geprüft, 0,5 bar Überdruck (1,5 bar absolut) eingestellt, auf 127 °C aufgeheizt und danach der Druck auf 1,1 bar absolut eingestellt. Es wurden 485,1 g (5,641 mol) PeO (Pentenoxid) bei 127 °C zudosiert, pₘₐₓ betrug 2,1 bar absolut. Ein zwischenzeitliches Entspannen infolge Füllgradzunahme wurde durchgeführt. Man stoppte die PeO-Dosage, ließ 1 h ausreagieren bis Druck konstant war und entspannte auf 1,0 bar absolut. Danach wurde die Zudosage von PeO fortgeführt. Pₘₐₓ betrug weiterhin 2,1 bar (erstes Entspannen nach 360 g PeO, Gesamtdosierzeit PeO 9 h inkl. Entspannungspause). Nach Ende der PeO-Dosage ließ man 9 h nachreagieren und erwärmte dann auf 135 °C. Man entspannte auf 1,6 bar absolut. Danach wurden 223,4 g (5,077 mol) EO (Ethylenoxid) bei 135 °C zudosiert, pₘₐₓ betrug 3,1 bar absolut. Nach Ende der EO-Dosage ließ man 5 h nachreagieren. Es wurde auf 100 °C abgekühlt, Restoxid abgezogen bis der Druck für mindestens 10 min unter10 mbar lag. Dann erfolgte die Zugabe von 0,5% Wasser bei 120 °C und anschließendes Abziehen bis der Druck für mindestens 10 min unter 10 mbar lag. Das Vakuum wurde mit N₂ aufgehoben und es erfolgte die Zugabe von 100 ppm BHT. Die Abfüllung erfolgte bei 80 °C unter N₂. Die Analytik (Massenspektrum, GPC, 1H-NMR in CDCl₃, 1H-NMR in MeOD) bestätigte die Struktur HBVE - 22 EO - 10 PeO - 9 EO.

Die Mengen der Makromonomere B1 und B2 sowie der Wert von c wurden analog zur Vorgehensweise bei Makromonomer 1 bestimmt. So finden sich bei HBVE - 22 EO - 10 PeO ca. 12 000 ppm flüchtige Anteile wieder, welche als 1,2-Pentenoxid identifiziert wurden. Nach Zugabe von 9 eq EO wurde der Anteil der flüchtigen Komponenten auf ca. 6000 ppm abgesenkt. Hieraus errechnet sich ein Wert von c von ca. 0,1.

### Makromonomer V1:

### Alkoxylierung von HBVE mit 22 EO, gefolgt von 10 PeO

| | |
|---|---|
| H₂C=CH-O-(CH₂)₄-O-(EO)₂₂(PeO)₉,₇-H | 100% |

In einem 2 l Druckautoklaven mit Ankerrührer wurden 135,3 g (1,16 mol) Hydroxybutylvinylether (HBVE) (mit 100 ppm Kaliumhydroxid (KOH) stabilisiert) vorgelegt und der Rührer angestellt. 1,06 g Kaliummethanolat (KOMe)-Lösung (32% KOMe in Methanol (MeOH), entspricht 0,0048 mol Kalium) wurden zugefahren und der Rührbehälter auf einen Druck von 10-20 mbar evakuiert, auf 65°C aufgeheizt, 70 min bei 65°C und einem Druck von 10-20 mbar betrieben. MeOH wurde abdestilliert.
Es wurde dreimal mit N₂ (Stickstoff) gespült. Danach wurde der Behälter auf Druckdichtigkeit geprüft, 0,5 bar Überdruck (1,5 bar absolut) eingestellt und auf 120°C aufgeheizt. Man entspannte auf 1 bar absolut und dosierte 1126 g (25,6 mol) Ethylenoxid (EO) zu bis pₘₐₓ 3.9 bar absolut und Tₘₐₓ 150°C betrug. Nach Dosage von 300 g EO wurde die Dosage abgebrochen (ca. 3 h nach Beginn), 30 min gewartet und auf 1,3 bar absolut entspannt. Danach wurde das restliche EO zudosiert. Die Zudosierung an EO dauerte inklusive Entspannung insgesamt 10 h.
Es wurde bis Druckkonstanz nachgerührt bei ca. 145-150°C (1 h), auf 100°C abgekühlt und bei einem Druck von weniger als 10 mbar für 1 h von Niedrigsiedern befreit. Die Ware wurde bei 80° C unter N₂ abgefüllt.
Die Analytik (OH-Zahl, GPC, 1H-NMR in CDCl₃, 1H-NMR in MeOD) bestätigte die Struktur HBVE - 22 EO.
In einem 2 I Druckautoklaven mit Ankerrührer wurden 744,5 g (0,6868 mol) HBVE-22 EO vorgelegt und der Rührer eingeschaltet. Danach wurden 5,33 g 32%-ige NaOMe (Natriummethanolat)-Lösung (0,0316 mol NaOMe, 1,71 g NaOMe) in Methanol zugegeben, ein Vakuum von <10 mbar angelegt, auf 100°C erhitzt und für 80 min gehalten, um das Methanol abzudestillieren.

Man spülte dreimal mit N₂. Danach wurde der Behälter auf Druckdichtigkeit geprüft, 0,5 bar Überdruck (1,5 bar absolut) eingestellt, auf 127°C aufgeheizt und danach der Druck auf 1,1 bar absolut eingestellt. Es wurden 590,6 g (6,868 mol) PeO bei 127°C zudosiert, pₘₐₓ betrug 2,1 bar absolut. Ein zwischenzeitliches Entspannen infolge Füllgradzunahme wurde notwendig. Man stoppte die PeO-Dosage, ließ 1 h ausreagieren bis Druck konstant war, entspannte auf 1,0 bar absolut. Danach wurde die Zudosage von PeO fortgeführt. Pₘₐₓ betrug weiterhin 2,1 bar (erstes Entspannen nach ca. 400 g PeO, Gesamtdosierzeit PeO 7 h inkl. Entspannungspause). Nach Ende der PeO-Dosage wurde bis Druckkonstanz bzw. 3 h nachreagieren gelassen. Es wurde auf 110°C abgekühlt, Restoxid im Vakuum entfernt bis der Druck für mindestens 60 min unter 10 mbar lag. Dann erfolgte die Zugabe von 0,5% Wasser bei 110°C und anschließendes Abziehen bis der Druck für mindestens 60 min unter 10 mbar lag. So fanden sich bei HBVE - 22 EO - 10 PeO insgesamt ca. 12000 ppm flüchtige Anteile wieder, welche als 1,2-Pentenoxid identifiziert und abgetrennt wurden. Das Vakuum wurde mit N₂ aufgehoben und es erfolgte die Zugabe von 100 ppm BHT. Die Abfüllung erfolgte bei 80°C unter N₂.
Die Analytik (Massenspektrum, GPC, 1H-NMR in CDCl₃, 1H-NMR in MeOD) bestätigte die Struktur.

### Makromonomer V2:

### Alkoxylierung von HBVE mit 24,5 EO, gefolgt von 16 BuO

| | |
|---|---|
| H₂C=CH-O-(CH₂)₄-O-(EO)_{24,5}(BuO)_{15,8}-H | 100% |

In einem 2 l Druckautoklaven mit Ankerrührer wurden 135,3 g (1,16 mol) Hydroxybutylvinylether (HBVE) (mit 100 ppm Kaliumhydroxid (KOH) stabilisiert) vorgelegt und der Rührer angestellt. 1,06 g Kaliummethanolat (KOMe)-Lösung (32% KOMe in Methanol (MeOH), entspricht 0,0048 mol Kalium) wurden zugefahren und der Rührbehälter auf einen Druck von 10-20 mbar evakuiert, auf 65°C aufgeheizt, 70 min bei 65°C und einem Druck von 10-20 mbar betrieben. MeOH wurde abdestilliert. Es wurde dreimal mit N₂ (Stickstoff) gespült. Danach wurde der Behälter auf Druckdichtigkeit geprüft, 0,5 bar Überdruck (1,5 bar absolut) eingestellt und auf 120°C aufgeheizt. Man entspannte auf 1 bar absolut und dosierte 1126 g (25,6 mol) Ethylenoxid (EO) zu bis pₘₐₓ 3.9 bar absolut und Tₘₐₓ 150°C betrug. Nach Dosage von 300 g EO wurde die Dosage abgebrochen (ca. 3 h nach Beginn), 30 min gewartet und auf 1,3 bar absolut entspannt. Danach wurde das restliche EO zudosiert. Die Zudosierung an EO dauerte inklusive Entspannung insgesamt 10 h.
Es wurde bis Druckkonstanz nachgerührt bei ca. 145-150°C (1 h), auf 100°C abgekühlt und bei einem Druck von weniger als 10 mbar für 1 h von Niedrigsiedern befreit. Die Ware wurde bei 80° C unter N₂ abgefüllt. Die Analytik (OH-Zahl, GPC, 1H-NMR in CDCl₃, 1H-NMR in MeOD) bestätigte die Struktur HBVE - 22 EO.

In einem 2 I Druckautoklaven mit Ankerrührer wurden 588,6 g (0,543 mol) HBVE-22 EO vorgelegt und der Rührer eingeschaltet. Danach wurden 2,39 g 50%-ige NaOH-Lösung (0,030 mol NaOH, 1,19 g NaOH) zugegeben, Vakuum von <10 mbar angelegt, auf 100°C erhitzt und für 80 min gehalten, um das Wasser abzudestillieren. Man spülte dreimal mit N₂. Danach wurde der Behälter auf Druckdichtigkeit geprüft, 0,5 bar Überdruck (1,5 bar absolut) eingestellt, auf 127°C aufgeheizt und danach der Druck auf 1,6 bar absolut eingestellt. Es wurden 59,7 g (1,358 mol) EO zudosiert bei 127°C, pₘₐₓ betrug 3,9 bar absolut. Es wurde 30 min gewartet bis sich Druckkonstanz einstellte, danach wurde auf 1,0 bar absolut entspannt. Es wurden 625,5 g (8,688 mol) BuO (Butylenoxid) bei 127°C zudosiert, pₘₐₓ betrug 2,1 bar absolut. Ein dreimaliges zwischenzeitliches Entspannen infolge Füllgradzunahme wurde durchgeführt. Man stoppte die BuO-Dosage, ließ 1 h ausreagieren bis Druck konstant war und entspannte auf 1,0 bar absolut. Danach wurde die Zudosage von BuO fortgeführt. Pₘₐₓ betrug weiterhin 2,1 bar (erstes Entspannen nach ca. 300 g BuO, zweites Entspannen nach ca. 500 g BuO, Gesamtdosierzeit BuO ca. 24 h inkl. Entspannungspausen). Nach Ende der BuO-Dosage ließ man 4 h nachreagieren. Es wurde auf 100°C abgekühlt und man entspannte auf 1 bar absolut. Restoxid wurde abgezogen bis der Druck für mindestens 2 h unter 10 mbar lag. Dann erfolgte die Zugabe von 0,5% Wasser bei 120°C und anschließendes Abziehen bis der Druck für mindestens 10 min unter 10 mbar lag. Das Vakuum wurde mit N₂ aufgehoben und es erfolgte die Zugabe von 100 ppm BHT. Die Abfüllung erfolgte bei 80°C unter N₂. Die Analytik (Massenspektrum, GPC, 1H-NMR in CDCl₃, 1H-NMR in MeOD) bestätigte die mittlere Zusammensetzung HBVE - 24,5 EO - 16 BuO. Es finden sich bei nach der Butoxylierung HBVE → 24,5 EO -→16 BuO ca. 6000 ppm flüchtige Anteile wieder, welche als 1,2-Butenoxid identifiziert wurden. Diese wurden entfernt, so dass im Endeffekt HBVE - 24,5 EO - 15,8 BuO vorliegt.

### Makromonomer V3:

### Alkoxylierung von HBVE mit 22 EO, gefolgt von 12 PeO

| | |
|---|---|
| H₂C=CH-O-(CH₂)₄-O-(EO)₂₂(PeO)₁₂-H | 100% |

Es wurde wie bei Makromonomer V1 vorgegangen, nur wurde eine andere PeO-Menge eingesetzt.

### Herstellung der Copolymere (P):

Die Herstellung der Copolymere erfolgte mittels adiabatischer Gelpolymerisation in wässriger Lösung.

### Copolymer 1:

Copolymer aus 50 Gew.-% Acrylamid, 48 Gew.-% Na-ATBS (Natriumsalz der 2-Acrylamido-2-methylpropansulfonsäure) und 2% Makromonomer 1

**Makromonomer 1:**

| | | |
|---|---|---|
| H₂C=CH-O-(CH₂)₄-O-(EO)_{24,5}(BuO)_{15,8}[(BuO)_{0,3}(EO)_{5,8}]-H | (B1) | ca. 60 mol% |
| H₂C=CH-O-(CH₂)₄-O-(EO)_{24,5}(BuO)_{15,8}-H | (B2) | ca. 40 mol% |

### Herstellvorschrift:

In einem Plastikeimer mit Magnetrührer, pH-Meter und Thermometer wurden 146,5 g einer 50 %igen wässrigen Lösung von Na-ATBS vorgelegt und anschließend nacheinander 105,8 g destilliertes Wasser, 0,4 g eines handelsüblichen Entschäumers auf Siliconbasis (Dow Corning® Antifoam Emulsion RD), 2,8 g Makromonomere 2, 138,2 g Acrylamid (50 %ige Lösung in Wasser), 1,2 g einer 5 %igen wässrigen Lösung von Diethylentriaminpentaessigsäure, Pentanatriumsalz und 3,0 g des nichtionischen Tensids iC₁₃-(EO)₁₅H zugegeben.

Nach Einstellen auf pH 6 mit einer 20 %igen bzw. 2 %igen Schwefelsäure-Lösung und Zugabe des restlichen Wassers zum Erreichen der angestrebten Monomer-Konzentration von 37 Gew.-% (Gesamtwassermenge abzüglich der bereits zugegebenen Wassermenge, abzüglich der benötigten Menge an Säure) wurde die Monomerlösung auf die Starttemperatur von 4 °C eingestellt. Die Lösung wurde in eine Thermoskanne umgefüllt, der Thermofühler für die Temperaturaufzeichnung angebracht und 30 Minuten mit Stickstoff gespült und mit 1,6 ml einer 10 %igen wässrigen Lösung des wasserlöslichen Azo-Initiators 2,2'-Azobis(2-methylpropionamidin)dihydrochlorid (Wako V-50), 0,12 ml einer 1 %igen t-BHPO-Lösung und 0,24 ml einer 1 %igen Natriumsulfit-Lösung die Polymerisation gestartet. Mit dem Anspringen der Polymerisation stieg die Temperatur innerhalb von ca. 25 min auf 80 °C bis 90 °C. Es wurde ein festes Polymergel erhalten.

Nach der Polymerisation wurde das Gel bis auf ca. 50 °C abkühlen lassen und der Gel-Block wurde mit Hilfe eines Fleischwolfs zerkleinert. Das erhaltene Gel-Granulat wurde in einen Wirbelschichttrockner bei 55 °C für zwei Stunden getrocknet. Man erhielt dabei ein weißes, hartes Granulat, welches mittels Zentrifugalmühle in einen pulverförmigen Zustand überführt wurde.

Das gewichtsmittlere Molekulargewicht M_{w} betrug 8 Mio bis 14 Mio g/mol.

### Copolymer 2:

### Copolymer aus 50 Gew.-% Acrylamid, 48 Gew.-% Na-ATBS (Natriumsalz der 2-Acrylamido-2-methylpropansulfonsäure) und 2% Makromonomer 2

**Makromonomer 2:**

| | |
|---|---|
| H₂C=CH-O-(CH₂)₄-O-(EO)_{24,5}(BuO)_{15,8}[(BuO)_{0,3}(EO)_{7,7}]-H | ca. 65 mol% |
| H₂C=CH-O-(CH₂)₄-O-(EO)_{24,5}(BuO)_{15,8}⁻H | ca. 35 mol% |

### Herstellvorschrift:

In einem Plastikeimer mit Magnetrührer, pH-Meter und Thermometer wurden 146,5 g einer 50 %igen wässrigen Lösung von Na-ATBS vorgelegt und anschließend nacheinander 105 g destilliertes Wasser, 0,4 g eines handelsüblichen Entschäumers auf Siliconbasis (Dow Corning® Antifoam Emulsion RD), 2,8 g Makromonomere 2, 138,2 g Acrylamid (50 %ige Lösung in Wasser), 1,2 g einer 5 %igen wässrigen Lösung von Diethylentriaminpentaessigsäure, Pentanatriumsalz und 3,0 g des nichtionischen Tensids iC₁₃-(EO)₁₅H zugegeben.

Nach Einstellen auf pH 6 mit einer 20 %igen Natriumhydroxid-Lösung und Zugabe des restlichen Wassers zum Erreichen der Monomer-Zielkonzentration von 37 % (Gesamtwassermenge abzüglich der bereits zugegebenen Wassermenge, abzüglich der benötigten Menge an Säure) wurde die Monomerlösung auf die Starttemperatur von 4 °C eingestellt. Die Lösung wurde in eine Thermoskanne umgefüllt, der Thermofühler für die Temperaturaufzeichnung angebracht und 45 Minuten mit Stickstoff gespült und mit 1,6 ml einer 10 %igen wässrigen Lösung des wasserlöslichen Azo-Initiators 2,2'-Azobis(2-methylpropionamidin)dihydrochlorid (Wako V-50), 0,12 ml einer 1 %igen t-BHPO-Lösung und 0,24 ml einer 1 %igen Natriumsulfit-Lösung die Polymerisation gestartet. Mit dem Anspringen der Polymerisation stieg die Temperatur auf 80-90 °C innerhalb von ca. 25 min. Es wurde ein festes Polymergel erhalten.

Nach dem Abkühlen auf ca. 50 °C wurde der Gel-Block mit Hilfe eines Fleischwolfs zerkleinert, und das erhaltene Gel-Granulat wurde in einen Wirbelschichttrockner bei 55 °C für zwei Stunden getrocknet. Man erhielt dabei ein weißes, hartes Granulat, welches mittels Zentrifugalmühle in einen pulverförmigen Zustand überführt wurde.

Das gewichtsmittlere Molekulargewicht M_{w} betrug 8 Mio bis 14 Mio g/mol

### Copolymer 3:

Copolymer aus 50 Gew.-% Acrylamid, 48 Gew.-% Na-ATBS (Natriumsalz der 2-Acrylamido-2-methylpropansulfonsäure) und 2% Makromonomer 3

**Makromonomer 3:**

| | |
|---|---|
| H₂C=CH-O-(CH₂)₄-O-(EO)₂₂(PeO)_{9,7}[(PeO)_{0,2}(EO)_{5,5}]-H | ca. 45 mol% |
| H₂C=CH-O-(CH₂)₄-O-(EO)₂₂(PeO)_{9,7}H | ca. 55 mol% |

In einem Plastikeimer mit Magnetrührer, pH-Meter und Thermometer wurden 146,5 g einer 50 %igen wässrigen Lösung von Na-ATBS vorgelegt und anschließend nacheinander 105 g destilliertes Wasser, 0,4 g eines handelsüblichen Entschäumers auf Siliconbasis (Dow Corning® Antifoam Emulsion RD), 2,8 g Makromonomer 3, 137,4 g Acrylamid (50 %ige Lösung in Wasser), 1,2 g einer 5 %igen wässrigen Lösung von Diethylentriaminpentaessigsäure, Pentanatriumsalz und 3,0 g des nichtionischen Tensids iC₁₃-(EO)₁₅H zugegeben.

Nach Einstellen auf pH 6 mit einer 20 %igen Natriumhydroxid-Lösung und Zugabe des restlichen Wassers zum Erreichen der Monomer-Zielkonzentration von 37 % (Gesamtwassermenge abzüglich der bereits zugegebenen Wassermenge, abzüglich der benötigten Menge an Säure) wurde die Monomerlösung auf die Starttemperatur von 4 °C eingestellt. Die Lösung wurde in eine Thermoskanne umgefüllt, der Thermofühler für die Temperaturaufzeichnung angebracht und 45 Minuten mit Stickstoff gespült und mit 1,6 ml einer 10 %igen wässrigen Lösung des wasserlöslichen Azo-Initiators 2,2'-Azobis(2-methylpropionamidin)dihydrochlorid (Wako V-50), 0,12 ml einer 1 %igen t-BHPO-Lösung und 0,24 ml einer 1 %igen Natriumsulfit-Lösung die Polymerisation gestartet. Mit dem Anspringen der Polymerisation stieg die Temperatur auf 80-90 °C innerhalb von ca. 25 min. Es wurde ein festes Polymergel erhalten.

Nach dem Abkühlen auf ca. 50 °C wurde der Gel-Block mit Hilfe eines Fleischwolfs zerkleinert, und das erhaltene Gel-Granulat wurde in einen Wirbelschichttrockner bei 55 °C für zwei Stunden getrocknet. Man erhielt dabei ein weißes, hartes Granulat, welches mittels Zentrifugalmühle in einen pulverförmigen Zustand überführt wurde.

Das gewichtsmittlere Molekulargewicht M_{w} betrug 8 Mio bis 14 Mio g/mol.

### Copolymer 4:

### Copolymer aus 69 Gew.-% Acrylamid, 30 Gew.-% Na-Acrylat und 1 % Gew.-% Makromonomer 1

**Makromonomer 1:**

| | | |
|---|---|---|
| H₂C=CH-O-(CH₂)₄-O-(EO)_{24,5}(BuO)_{15,8}[(BuO)_{0,3}(EO)_{5,8}]-H | (B1) | ca. 60 mol% |
| H₂C=CH-O-(CH₂)₄-O-(EO)_{24,5}(BuO)_{15,8}-H | (B2) | ca. 40 mol% |

In einem Plastikeimer mit Magnetrührer, pH-Meter und Thermometer wurden 101,8 g einer 35 %igen wässrigen Lösung von Na-Acrylat vorgelegt und anschließend nacheinander 119,1 g destilliertes Wasser, 0,4 g eines handelsüblichen Entschäumers auf Siliconbasis (Dow Corning® Antifoam Emulsion RD), 1,2 g Makromonomer 1, 163,3 g Acrylamid (50 %ige Lösung in Wasser), 4 g einer 4 %igen Lösung von 4,4'-Azobis(4-cyanovaleric acid) (gelöst in 5 %iger Natriumhydroxid-Lösung), 1,2 g einer 5 %igen wässrigen Lösung von Diethylentriaminpentaessigsäure, Pentanatriumsalz und 1,2 g des nichtionischen Tensids iC₁₃-(EO)₁₅H zugegeben.

Nach Einstellen auf pH 6,75 mit einer 5 %igen Natriumhydroxid-Lösung und Zugabe des restlichen Wassers zum Erreichen der Monomer-Zielkonzentration von 30 % (Gesamtwassermenge abzüglich der bereits zugegebenen Wassermenge, abzüglich der benötigten Menge an Säure) wurde die Monomerlösung auf die Starttemperatur von 4 °C eingestellt. Die Lösung wurde in eine Thermoskanne umgefüllt, der Thermofühler für die Temperaturaufzeichnung angebracht, 45 Minuten mit Stickstoff gespült und mit 4 g einer 4 %igen methanolischen Lösung des Azo-Initiators 2,2'-Azobis(2-methylpropionitril), 0,16 ml einer 1 %igen t-BHPO-Lösung und 0,16 ml einer 1 %igen Natriumsulfit-Lösung die Polymerisation gestartet. Mit dem Anspringen der Polymerisation stieg die Temperatur auf 80 bis 90 °C innerhalb von 40-50 min. Es wurde ein festes Polymergel erhalten.

Nach dem Abkühlen wurde der Gel-Block mit Hilfe eines Fleischwolfs zerkleinert, und das erhaltene Gel-Granulat wurde in einen Wirbelschichttrockner bei 55 °C für zwei Stunden getrocknet. Man erhielt dabei ein weißes, hartes Granulat, welches mittels Zentrifugalmühle in einen pulverförmigen Zustand überführt wurde.

Das gewichtsmittlere Molekulargewicht M_{w} betrug 10 Mio bis 20 Mio g/mol.

### Copolymer 5:

### Copolymer aus 69 Gew.-% Acrylamid, 30 Gew.-% Na-Acrylat und 1 % Gew.-% Makromonomer 4

**Makromonomer 4:**

| | |
|---|---|
| H₂C=CH-O-(CH₂)₄-O-(EO)₂₂(PeO)_{9,7}[(PeO)_{0,1}(EO)₁₂]-H | ca. 75 mol% |
| H₂C=CH-O-(CH₂)₄-O-(EO)₂₂(PeO)_{9,7}⁻H | ca. 25 mol% |

In einem Plastikeimer mit Magnetrührer, pH-Meter und Thermometer wurden 101,8 g einer 35 %igen wässrigen Lösung von Na-Acrylat vorgelegt und anschließend nacheinander 111,6 g destilliertes Wasser, 0,4 g eines handelsüblichen Entschäumers auf Siliconbasis (Dow Corning® Antifoam Emulsion RD), 1,2 g Makromonomer 4, 163,3 g Acrylamid (50 %ige Lösung in Wasser), 4 g einer 4 %igen Lösung von 4,4'-Azobis(4-cyanovaleric acid) (gelöst in 5 %iger Natriumhydroxid-Lösung), 1,2 g einer 5 %igen wässrigen Lösung von Diethylentriaminpentaessigsäure, Pentanatriumsalz und 1,2 g des nichtionischen Tensids iC₁₃-(EO)₁₅H zugegeben.

Nach Einstellen auf pH 6,75 mit einer 5 %igen Natriumhydroxid-Lösung und Zugabe des restlichen Wassers zum Erreichen der Monomer-Zielkonzentration von 30 % (Gesamtwassermenge abzüglich der bereits zugegebenen Wassermenge, abzüglich der benötigten Menge an Säure), wurde die Monomerlösung auf die Starttemperatur von 4 °C eingestellt. Anschließend wurde die Reaktionslösung in eine Thermoskanne umgefüllt, der Thermofühler für die Temperaturaufzeichnung angebracht, 45 Minuten mit Stickstoff gespült und mit 4 g einer 4 %igen methanolischen Lösung des Azo-Initiators 2,2'-Azobis(2-methylpropionitril), 0,16 ml einer 1 %igen t-BHPO-Lösung und 0,24 ml einer 1 %igen Natriumsulfit-Lösung die Polymerisation gestartet. Mit dem Anspringen der Polymerisation stieg die Temperatur auf 80-90 °C innerhalb von 40-50 min. Es wurde ein festes Polymergel erhalten.

Nach dem Abkühlen wurde der Gel-Block mit Hilfe eines Fleischwolfs zerkleinert, und das erhaltene Gel-Granulat wurde in einen Wirbelschichttrockner bei 55 °C für zwei Stunden getrocknet. Man erhielt dabei ein weißes, hartes Granulat, welches mittels Zentrifugalmühle in einen pulverförmigen Zustand überführt wurde.

Das gewichtsmittlere Molekulargewicht M_{w} betrug 10 Mio bis 20 Mio g/mol.

### Copolymer 6:

### Copolymer aus 98 Gew.-% Acrylamid und 2 Gew-% Makromonomer 1

**Makromonomer 1:**

| | | |
|---|---|---|
| H₂C=CH-O-(CH₂)₄-O-(EO)_{24,5}(BuO)_{15,8}[(BuO)_{0,3}(EO)_{5,8}]-H | (B1) | ca. 60 mol% |
| H₂C=CH-O-(CH₂)₄-O-(EO)_{24,5}(BuO)_{15,8}-H | (B2) | ca. 40 mol% |

In einem Plastikeimer mit Magnetrührer, pH-Meter und Thermometer wurden 140 g destilliertes Wasser vorgelegt sowie 231,27 g Acrylamid (50%-ige Lösung), 0,4 g eines handelsüblichen Entschäumers auf Siliconbasis (Dow Corning® Antifoam Emulsion RD), 4 g einer 4 %igen Lösung von 4,4'-Azobis(4-cyanovaleric acid) (gelöst in 5 %iger Natriumhydroxid-Lösung), 1,2 g einer 5 %-igen wässrigen Lösung von Diethylentriaminpentaessigsäure, Pentanatriumsalz, 1,2 g des nichtionischen Tensids iC₁₃-(EO)₁₅H sowie 2,36 g Makromonomer 1 zugegeben.
Nach Einstellen auf pH 6 mit einer 20%igen bzw. 2%igen Schwefelsäure-Lösung und Zugabe des restlichen Wassers (Gesamtwassermenge abzüglich der bereits zugegebenen Wassermenge, abzüglich der benötigten Menge an Säure um einen Gehalt an Monomeren von 30 % einzustellen) wurde die Monomerlösung auf die Starttemperatur von 4°C eingestellt. Die Lösung wurde in eine Thermoskanne umgefüllt, der Thermofühler für die Temperaturaufzeichnung angebracht, 30 Minuten mit Stickstoff gespült und mit 4,0 ml einer 4%-igen AIBN-Lösung in Methanol, 0,48 g einer 1 %-igen Ammoniumperoxodisulfat-Lösung und 0,80 g einer 1 %igen Ammoniumeisensulfat-Lösung die Polymerisation gestartet. Es wurde ein festes Polymergel erhalten.

Nach der Polymerisation wurde das Gel bis auf ca. 50°C abkühlen lassen, und der der Gel-Block wurde mit Hilfe eines Fleischwolfs zerkleinert. Das erhaltene Gel-Granulat wurde in einen Wirbelschichttrockner bei 55 °C für zwei Stunden getrocknet. Man erhielt dabei ein weißes, hartes Granulat, welches mittels Zentrifugalmühle in einen pulverförmigen Zustand überführt wurde.

### Copolymer 7:

### Copolymer aus 56 Gew.-% Acrylamid, 29,7 Gew.-% Na-Acrylat, 12,3 Gew.-% Na-ATBS sowie 2 Gew.-% Makromonomer 1

**Makromonomer 1:**

| | | |
|---|---|---|
| H₂C=CH-O-(CH₂)₄-O-(EO)_{24,5}(BuO)_{15,8}[(BuO)_{0,3}(EO)_{5,8}]-H | (B1) | ca. 60 mol% |
| H₂C=CH-O-(CH₂)₄-O-(EO)_{24,5}(BuO)_{15,8}-H | (B2) | ca. 40 mol% |

In einem Plastikeimer mit Magnetrührer, pH-Meter und Thermometer wurden 90 g destilliertes Wasser vorgelegt sowie nacheinander 50,64 g einer Natriumacrylat-Lösung (35 %ig in Wasser), 86,24 g einer NatriumATBS Lösung (50 %ig in Wasser),0,4 g eines handelsüblichen Entschäumers auf Siliconbasis (Dow Corning® Antifoam Emulsion RD), 155,53 g Acrylamid (52%ige Lösung), 1,2 g einer 5 %-igen wässrigen Lösung von Diethylentriaminpentaessigsäure, Pentanatriumsalz, 3,14 g Makromonomer 1 und 3 g des nichtionischen Tensids iC₁₃-(EO)₁₅H sowie zugegeben.

Nach Einstellen auf pH 6 mit einer 20%igen bzw. 2%igen Schwefelsäure-Lösung und Zugabe des restlichen Wassers (Gesamtwassermenge abzüglich der bereits zugegebenen Wassermenge, abzüglich der benötigten Menge an Säure um einen Gehalt an Monomeren von 37 % einzustellen) wurde die Monomerlösung auf die Starttemperatur von 4°C eingestellt. Die Lösung wurde in eine Thermoskanne umgefüllt, der Thermofühler für die Temperaturaufzeichnung angebracht, 30 Minuten mit Stickstoff gespült und mit 2,4 ml einer 10%-igen Lösung von 2,2'-Azobis(2-methylpropionamidine)dihydrochlorid in Wasser, 0,12 g einer 1 %-igen TBHP-Lösung und 0,24 g einer 1 %igen Natriumsulfit-Lösung die Polymerisation gestartet. Es wurde ein festes Polymergel erhalten.

Nach der Polymerisation wurde das Gel bis auf ca. 50°C abkühlen lassen, und der der Gel-Block wurde mit Hilfe eines Fleischwolfs zerkleinert. Das erhaltene Gel-Granulat wurde in einen Wirbelschichttrockner bei 55 °C für zwei Stunden getrocknet. Man erhielt dabei ein weißes, hartes Granulat, welches mittels Zentrifugalmühle in einen pulverförmigen Zustand überführt wurde.

### Copolymer V1:

### Copolymer aus 50 Gew.-% Acrylamid, 48 Gew.-% Na-ATBS (Natriumsalz der 2-Acrylamido-2-methylpropansulfonsäure) und 2% Makromonomer V1

**Makromonomer V1:**

| | |
|---|---|
| H₂C=CH-O-(CH₂)₄-O-(EO)₂₂(PeO)₉,₇-H | 100% |

In einem Plastikeimer mit Magnetrührer, pH-Meter und Thermometer wurden 146,5 g einer 50 %igen wässrigen Lösung von Na-ATBS vorgelegt und anschließend nacheinander 105 g destilliertes Wasser, 0,4 g eines handelsüblichen Entschäumers auf Siliconbasis (Dow Corning® Antifoam Emulsion RD), 2,8 g Makromonomer V1, 137,4 g Acrylamid (50 %ige Lösung in Wasser), 1,2 g einer 5 %igen wässrigen Lösung von Diethylentriaminpentaessigsäure, Pentanatriumsalz und 3,0 g des nichtionischen Tensids iC₁₃-(EO)₁₅H zugegeben.

Nach Einstellen auf pH 6 mit einer 20 %igen Natriumhydroxid-Lösung und Zugabe des restlichen Wassers zum Erreichen der Monomer-Zielkonzentration von 37 % (Gesamtwassermenge abzüglich der bereits zugegebenen Wassermenge, abzüglich der benötigten Menge an Säure) wurde die Monomerlösung auf die Starttemperatur von 4 °C eingestellt. Die Lösung wurde in eine Thermoskanne umgefüllt, der Thermofühler für die Temperaturaufzeichnung angebracht und 45 Minuten mit Stickstoff gespült und mit 1,6 ml einer 10 %igen wässrigen Lösung des wasserlöslichen Azo-Initiators 2,2'-Azobis(2-methylpropionamidin)dihydrochlorid (Wako V-50), 0,12 ml einer 1 %igen t-BHPO-Lösung und 0,24 ml einer 1 %igen Natriumsulfit-Lösung die Polymerisation gestartet. Mit dem Anspringen der Polymerisation stieg die Temperatur auf 80-90 °C innerhalb von ca. 25 min. Es wurde ein festes Polymergel erhalten.

Nach dem Abkühlen auf ca. 50 °C wurde der Gel-Block mit Hilfe eines Fleischwolfs zerkleinert, und das erhaltene Gel-Granulat wurde in einen Wirbelschichttrockner bei 55 °C für zwei Stunden getrocknet. Man erhielt dabei ein weißes, hartes Granulat, welches mittels Zentrifugalmühle in einen pulverförmigen Zustand überführt wurde.

Das gewichtsmittlere Molekulargewicht M_{w} betrug 8 Mio bis 14 Mio g/mol.

### Copolymer V2:

### Copolymer aus 50 Gew.-% Acrylamid, 48 Gew.-% Na-ATBS (Natriumsalz der 2-Acrylamido-2-methylpropansulfonsäure) und 2% Makromonomer V2

### Makromonomer V2:

H₂C=CH-O-(CH₂)₄-O-(EO)_{24,5}(BuO)_{15,8}-H 100%

In einem Plastikeimer mit Magnetrührer, pH-Meter und Thermometer wurden 146,5 g einer 50 %igen wässrigen Lösung von Na-ATBS vorgelegt und anschließend nacheinander 105 g destilliertes Wasser, 0,4 g eines handelsüblichen Entschäumers auf Siliconbasis (Dow Corning® Antifoam Emulsion RD), 2,8 g Makromonomer V2, 137,4 g Acrylamid (50 %ige Lösung in Wasser), 1,2 g einer 5 %igen wässrigen Lösung von Diethylentriaminpentaessigsäure, Pentanatriumsalz und 3,0 g des nichtionischen Tensids iC₁₃-(EO)₁₅H zugegeben.

Nach Einstellen auf pH 6 mit einer 20 %igen Natriumhydroxid-Lösung und Zugabe des restlichen Wassers zum Erreichen der Monomer-Zielkonzentration von 37 % (Gesamtwassermenge abzüglich der bereits zugegebenen Wassermenge, abzüglich der benötigten Menge an Säure) wurde die Monomerlösung auf die Starttemperatur von 4 °C eingestellt. Die Lösung wurde in eine Thermoskanne umgefüllt, der Thermofühler für die Temperaturaufzeichnung angebracht und 45 Minuten mit Stickstoff gespült und mit 1,6 ml einer 10 %igen wässrigen Lösung des wasserlöslichen Azo-Initiators 2,2'-Azobis(2-methylpropionamidin)dihydrochlorid (Wako V-50), 0,12 ml einer 1 %igen t-BHPO-Lösung und 0,24 ml einer 1 %igen Natriumsulfit-Lösung die Polymerisation gestartet. Mit dem Anspringen der Polymerisation stieg die Temperatur auf 80-90 °C innerhalb von ca. 25 min. Es wurde ein festes Polymergel erhalten.

Nach dem Abkühlen auf ca. 50 °C wurde der Gel-Block mit Hilfe eines Fleischwolfs zerkleinert, und das erhaltene Gel-Granulat wurde in einen Wirbelschichttrockner bei 55 °C für zwei Stunden getrocknet. Man erhielt dabei ein weißes, hartes Granulat, welches mittels Zentrifugalmühle in einen pulverförmigen Zustand überführt wurde.

Das gewichtsmittlere Molekulargewicht M_{w} betrug 8 Mio bis 14 Mio g/mol.

### Copolymer V3:

Kommerziell erhältliches Copolymer zum Polymerfluten aus ca. 50 Gew.-% Acrylamid und ca. 50 Gew.-% 2-Acrylamido-2-methylpropansulfonsäure mit einem gewichtsmittleren Molekulargewicht M_{w} von ca. 8 bis 13*10⁶ g/mol.

### Copolymer V4:

Kommerziell erhältliches Copolymer zum Polymerfluten aus ca. 75 mol% Acrylamid und ca. 25 mol% Na-Acrylateinheiten mit einem gewichtsmittleren Molekulargewicht M_{w} von ca. 20 000 000 g/mol.

### Copolymer V5:

### Copolymer aus 69 Gew.-% Acrylamid, 30 Gew.-% Na-Acrylat sowie 1 Gew. % Makromonomer V3

### Makromonomer V3:

H₂C=CH-O-(CH₂)₄-O-(EO)₂₂(PeO)₁₂-H 100%

### Es wurde wie bei Copolymer 5 vorgegangen, nur wurde anstelle des Makromonomer 4 Makromonomer V3 eingesetzt.

### Anwendungstechnische Tests:

### Viskositätsmessungen

Die Viskositätsmessungen wurden mit einem Haake RS 80 Viskosimeter bei einer Scherrate von 7 s⁻¹ durchgeführt.

Für die Viskositätsmessungen wurden wässrige Lösungen der Polymere eingesetzt. Zum Lösen der Polymere wurden die folgenden wässrigen Medien eingesetzt:
Leitungswasser:
   Gesamtsalinität 123 mg/l
Meerwasser (synthetisch):
   Gesamtsalinität: ca. 35 000 mg/l
   Na⁺ 10 692 mg/l, K⁺ 420 mg/l, Mg²⁺ 1295 mg/l, Ca²⁺ 422 mg/l, Cl⁻19 218 mg/l, HCO₃⁻ 145 mg/l, SO₄²⁻ 2697 mg/l
   Verhältnis Alkalimetallionen / Erdalkalimetallionen: 6,2
Lagerstättenwasser (synthetisch):
   Gesamtsalinität: 185 548 mg/l
   Na⁺ 52 079 mg/l, Mg²⁺ 2681 mg/l, Ca²⁺ 15 383 mg/l, Cl⁻ 115 105 mg/l, Borat 117 mg/l, SO₄²⁻ 183 mg/l.
   Verhältnis Alkalimetallionen / Erdalkalimetallionen: 2,9; Lagerstättenwaser mit hohem Ca²⁺- Anteil.

Es wurden die folgenden Tests durchgeführt:
Von den erfindungsgemäßen Copolymeren sowie den Vergleichspolymeren wurden jeweils Lösungen in Leitungswasser, Meerwasser und Lagerstättenwasser bei verschiedenen Konzentrationen im Bereich von 500 ppm bis 3000 ppm angesetzt, Es wurde jeweils die Viskosität bei verschiedenen Temperaturen gemessen.

Die Ergebnisse sind in den Abbildungen 1 bis 7 dargestellt. Die jeweils getesteten Polymere, die Art der wässrigen Phase sowie die Konzentration der eingesetzten Polymere sind in den Abbildungen angegeben.

**Verzeichnis der Abbildungen:**

| | |
|---|---|
| Abbildungen 1a,1b: | Abhängigkeit der Viskosität von Lösungen der Copolymere V1 (50% AM, 48% Na-ATBS, 2% Makromonomer V1), V3 (50% AM, 50% ATBS)und V4 (75 mol% AM, 25 mol% Na-Acrylat) von der Temperatur |
| Abbildung 2a: | Viskosität von Lösungen von Copolymer V2 (50% AM, 48% Na-ATBS, 2% Makromonomer V2) verschiedener Konzentration bei 60°C. |
| Abbildungen 2b, 2c, 2d: | Abhängigkeit der Viskosität von Lösungen von Copolymer V2 von der Temperatur. |
| Abbildung 3a: | Viskosität von Lösungen von Copolymer 1 (50% AM, 48% Na-ATBS, 2% Makromonomer 1) verschiedener Konzentration bei 60 °C. |
| Abbildungen 3b, 3c, 3d: | Abhängigkeit der Viskosität von Lösungen von Copolymer 1 von der Temperatur. |
| Abbildung 4a: | Viskosität von Lösungen von Copolymer 2 (50% AM, 48% Na-ATBS, 2% Makromonomer 2) verschiedener Konzentration bei 60 °C. |
| Abbildungen 4b, 4c, 4d: | Abhängigkeit der Viskosität von Lösungen von Copolymer 2 von der Temperatur. |
| Abbildung 5a: | Viskosität von Lösungen von Copolymer 3 (50% AM, 48% Na-ATBS, 2% Makromonomer 3) verschiedener Konzentration bei 60 °C. |
| Abbildungen 5b, 5c, 5d: | Abhängigkeit der Viskosität von Lösungen von Copolymer 3 von der Temperatur. |
| Abbildung 6a: | Viskosität von Lösungen von Copolymer 4 (69% AM, 30% Na-Acrylat, 1% Makromonomer 1) verschiedener Konzentration bei 60 °C. |
| Abbildungen 6b, 6c: | Abhängigkeit der Viskosität von Lösungen von Copolymer 4 von der Temperatur. |
| Abbildung 7a: | Viskosität von Lösungen von Copolymer 5 (69% AM, 30% Na-Acrylat, 1 % Makromonomer 4) verschiedener Konzentration bei 60 °C. |
| Abbildungen 7b, 7c: | Abhängigkeit der Viskosität von Lösungen von Copolymer 5 von der Temperatur. |
| Abbildung 8a: | Viskosität von Lösungen von Copolymer 6 (98% AM, 2% Makromonomer 1) verschiedener Konzentration bei 60 °C. |
| Abbildungen 8b, 8c: | Abhängigkeit der Viskosität von Lösungen von Copolymer 6 von der Temperatur. |
| Abbildung 9a: | Viskosität von Lösungen von Copolymer 7 (56 Gew.-% AM, 29,7 Gew.-% Na-Acrylat, 12,3 Gew.-% Na-ATBS, 2 Gew.-% Makromonomer 1) verschiedener Konzentration bei 60 °C. |
| Abbildungen 9b, 9c, 9d: | Abhängigkeit der Viskosität von Lösungen von Copolymer 7 von der Temperatur. |
| Abbildung 10a: | Viskosität von Lösungen von Copolymer V5 (69% AM, 30% Na-Acrylat, 1 % Makromonomer 4) verschiedener Konzentration bei 60 °C. |
| Abbildungen 10b, 10c: | Abhängigkeit der Viskosität von Lösungen von Copolymer V5 von der Temperatur. |
| Abbildung 11: | Teilweise konischer Reaktor zur Herstellung der erfindungsgemäßen Copolymere |
| Abbildung 12: | Vollständig konischer Reaktor zur Herstellung der erfindungsgemäßen Copolymere. |

Kommentare zu den Versuchen:
Abbildungen 1a und 1b zeigen jeweils die Abhängigkeit der Viskosität wässriger Lösungen verschiedener Copolymere von der Temperatur auf, und zwar die Viskosität zweier handelsüblicher, nicht assoziativer Copolymere (Copolymere V3 und V4) sowie weiterhin eines assoziativen Copolymers (Copolymer V1) mit dem Makromonomer V1. Bei den beiden handelsüblichen, nicht assoziativen Copolymeren nimmt die Viskosität mit zunehmender Temperatur ab. Bei dem assoziativen Copolymer nimmt die Viskosität der wässrigen Lösungen zunächst deutlich zu, verläuft bei ca. 60 °C durch ein Maximum und nimmt danach wieder ab.

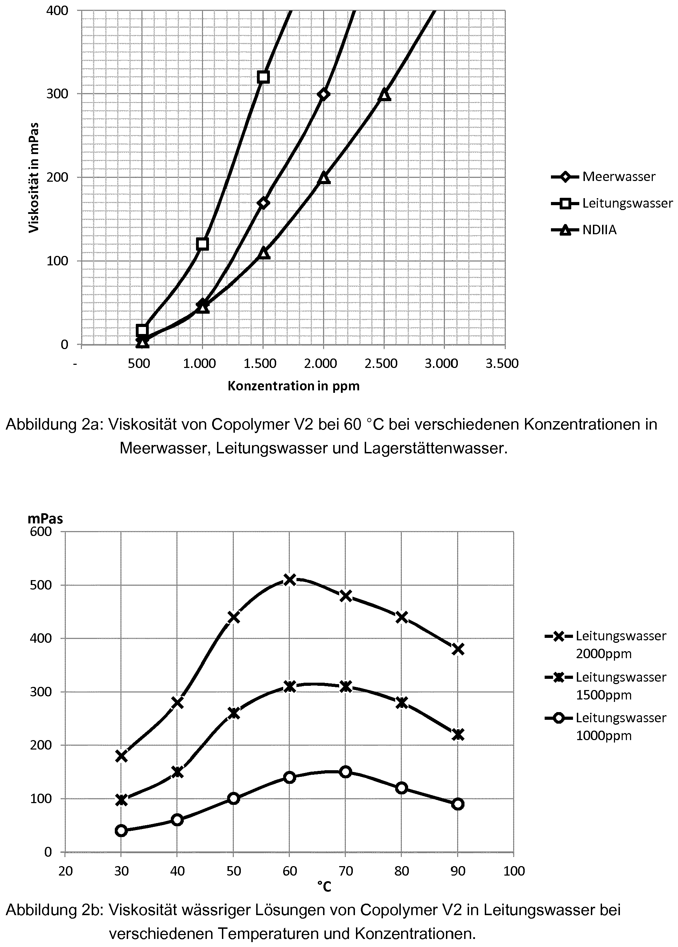

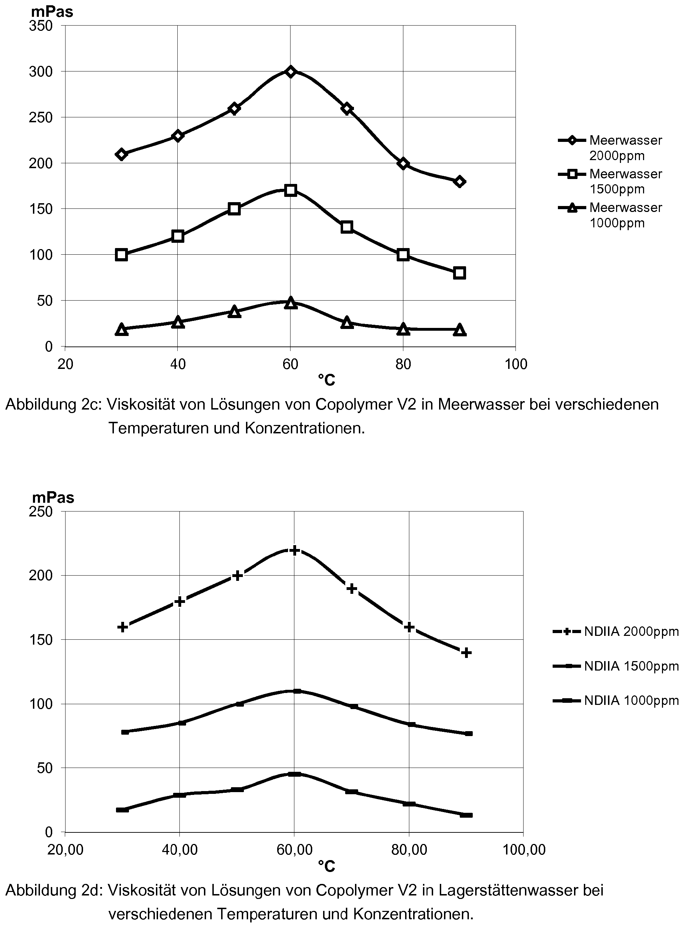

Abbildungen 2a bis 2d zeigen jeweils die Abhängigkeit der Viskosität wässriger Lösungen des Copolymers V2 in Anhängigkeit der Temperatur bzw. der Konzentration. Das Copolymer V2 enthält nicht die erfindungsgemäße Mischung aus den Makromonomeren (B1) und (B2), sondern nur das Makromonomer (B2), welches keine terminale -[-(R⁴O)_{c}(R⁵O)_{d(1+x)}]-H -Gruppe aufweist. Der Viskositätsverlauf in Abhängigkeit der Temperatur ist ähnlich wie bei Copolymer V1, d.h. die Viskosität erreicht ein Maximum bei etwa 60 °C und nimmt danach wieder ab.

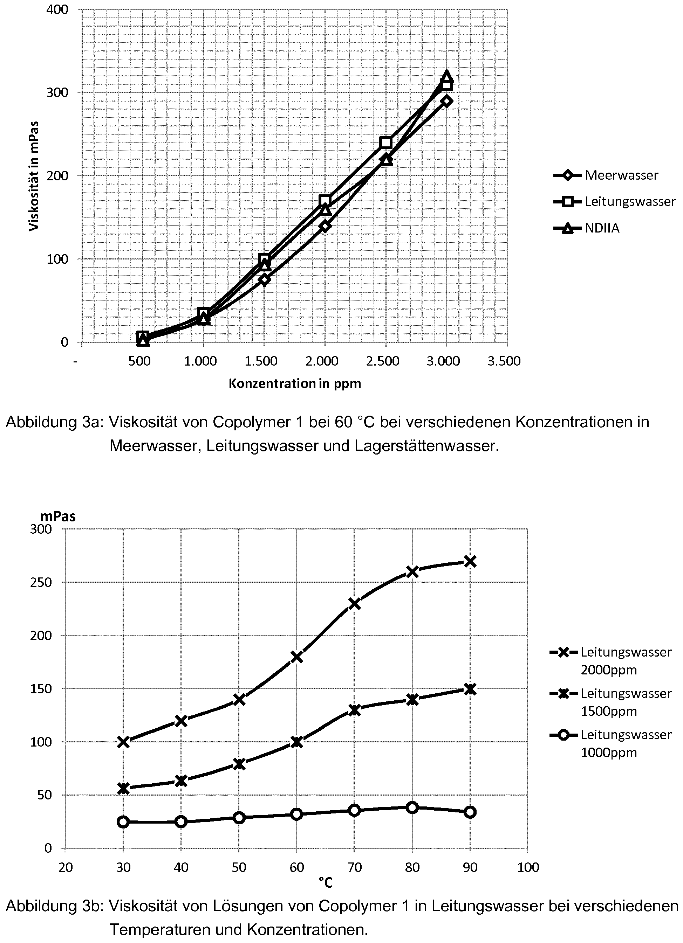

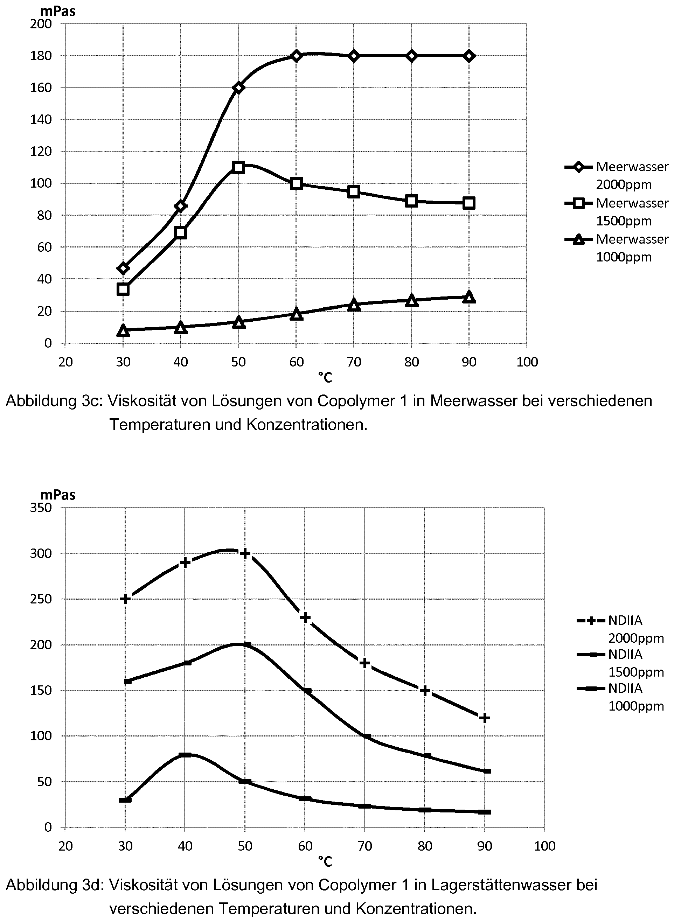

Abbildungen 3a bis 3d zeigen jeweils die Abhängigkeit der Viskosität wässriger Lösungen des erfindungsgemäßen, Sulfonsäuregruppen aufweisenden Copolymers 1 (50 Gew.-% Acrylamid, 48 Gew.-%, ATBS, 2 Gew.-% Makromonomer) in Anhängigkeit der Temperatur bzw. der Konzentration. Die in Leitungswasser gemessene Viskosität steigt von 30 °C bis 90 °C kontinuierlich an und nimmt überhaupt nicht ab. In Meerwasser nimmt die Viskosität nach dem Erreichen des Maximums bei ca. 50 °C nicht oder nur unwesentlich wieder ab, d.h. sie bleibt bis 90 °C mehr oder weniger konstant. In Lagerstättenwasser nimmt die Viskosität nach dem Erreichen des Maximums zwar ab, aber die Viskosität ist als beim Polymer V1.

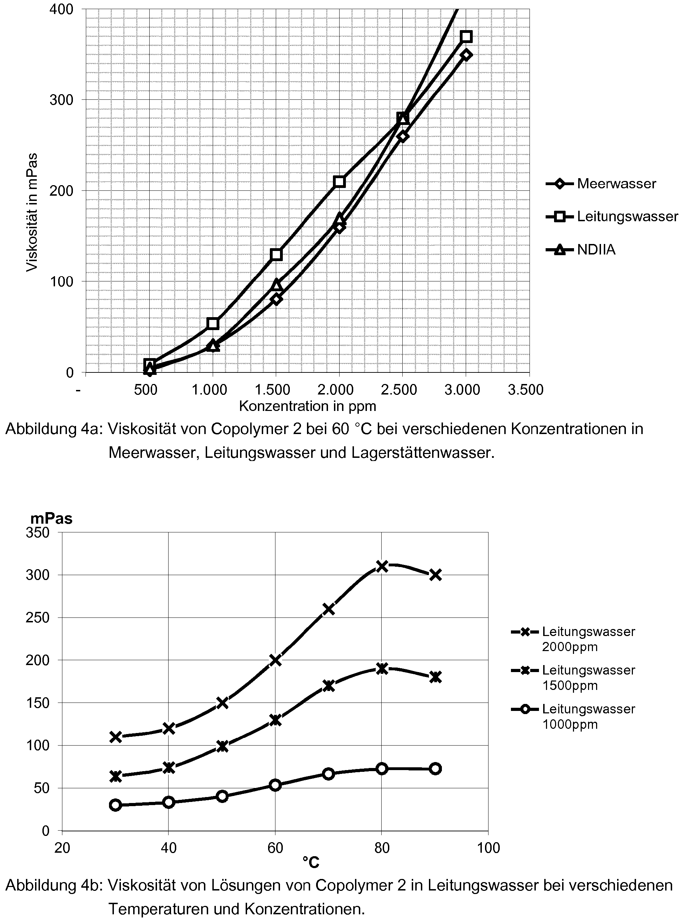

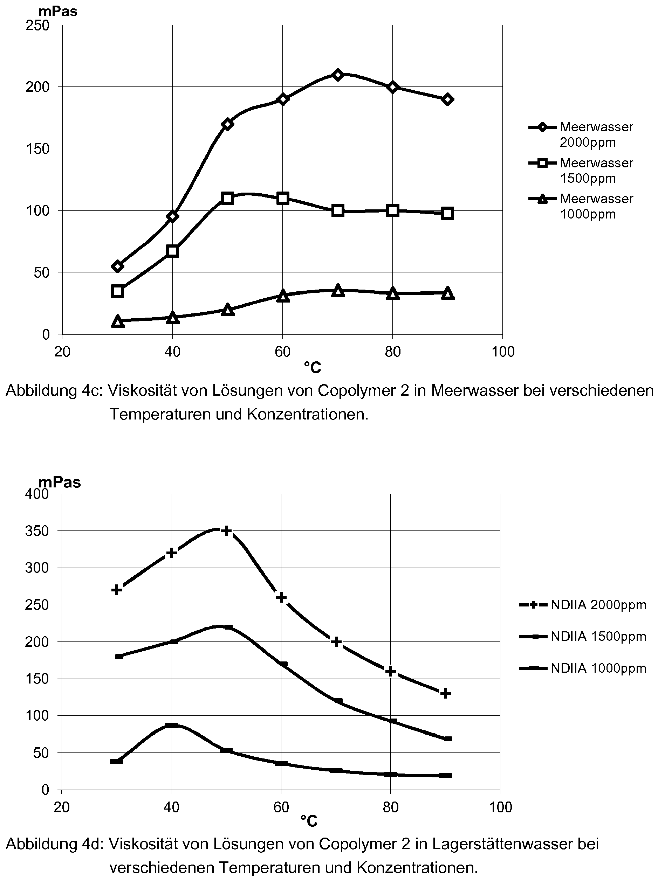

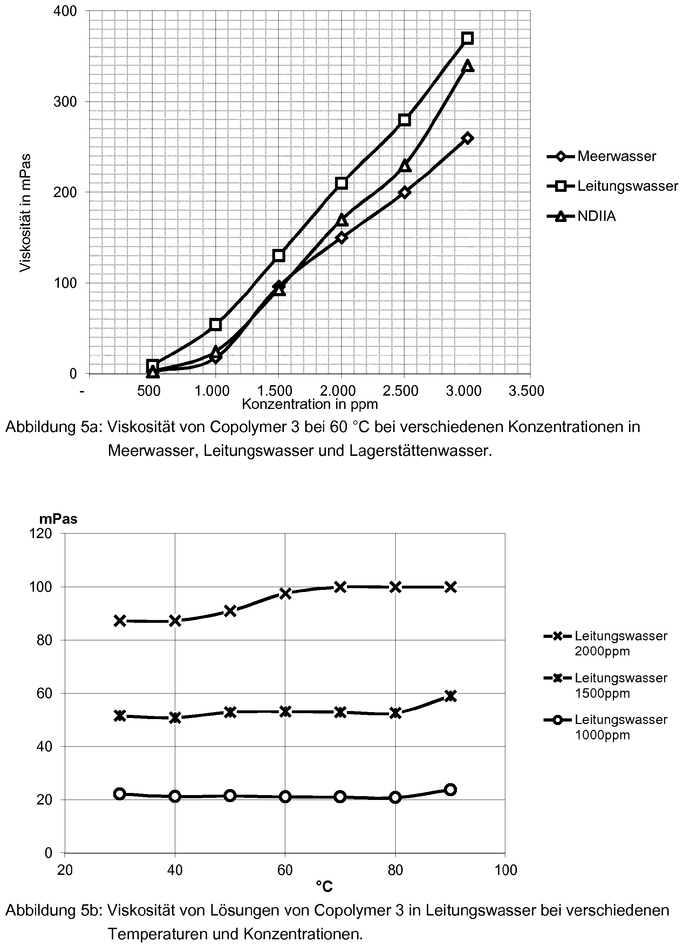

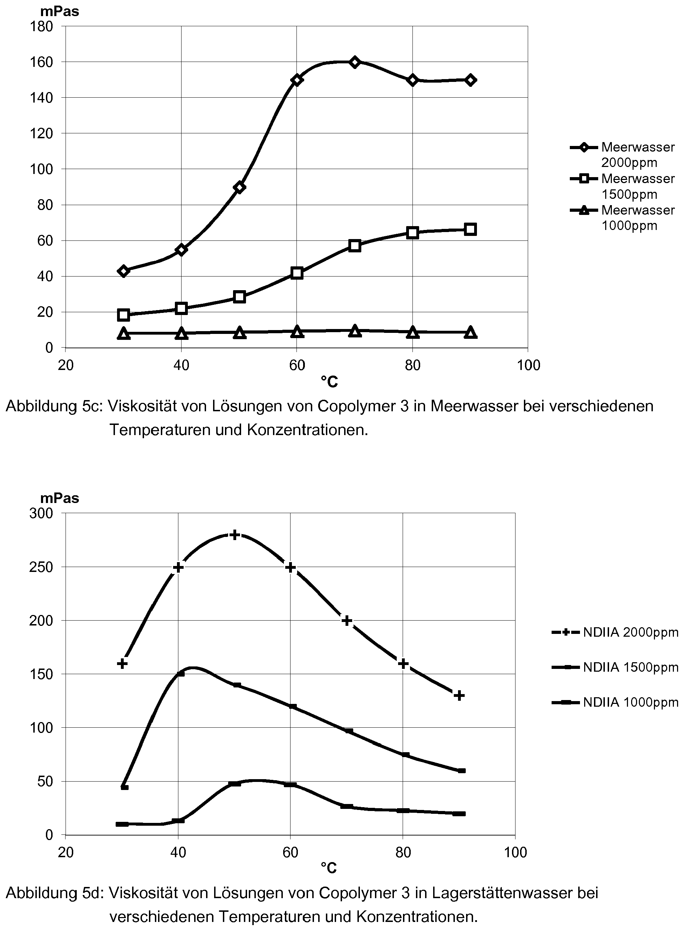

Die Abbildungen 4a bis 4d sowie 5a bis 5d stellen die Testergebnisse für zwei andere, Sulfonsäuregruppen aufweisende Copolymere (Copolymere 2 und 3) umfassend 50 Gew.-% Acrylamid, 48 Gew.-%, ATBS sowie 2 Gew.-% Makromonomer dar, wobei jeweils andere Makromonomere (B) eingesetzt wurden. Die Ergebnisse sind sehr ähnlich zu den Ergebnissen mit Copolymer 1.

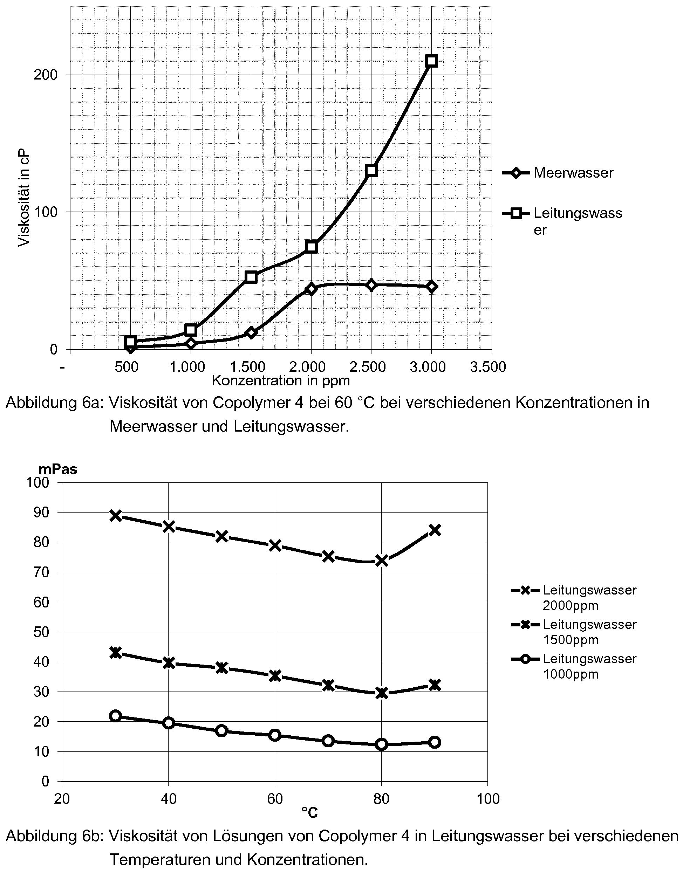

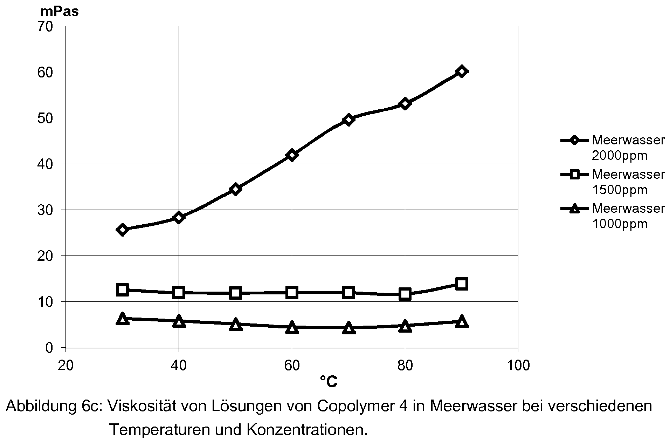

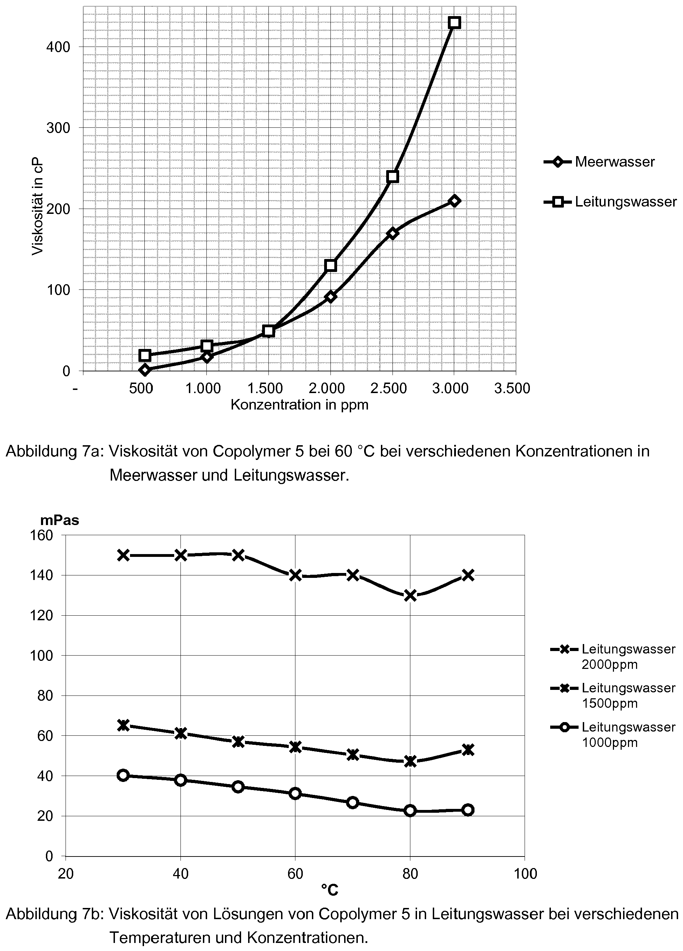

Die Abbildungen 6a bis 6c sowie 7a bis 7c stellen jeweils Testergebnisse mit -COOH Gruppen aufweisenden Copolymeren dar, nämlich Copolymeren umfassend 69 Gew.-% Acrylamid, 30 Gew.-% Natriumacrylat sowie 1 Gew.-% Makromonomer (Copolymere 4 und 5). Die Zusammensetzung entspricht weitgehend der von Copolymer V4, nur dass Copolymer V4 kein Makromonomer enthält. Die Messungen der Viskosität in Anhängigkeit der Konzentration zeigen erwartungsgemäß deutlichere Unterschiede zwischen der Verwendung von Leitungswasser und der Verwendung von Meerwasser als bei den Sulfonsäuregruppen aufweisenden Copolymeren. Die Viskosität von Copolymer 4 in Leitungswasser nimmt im Bereich von 30 bis 90 °C leicht ab, beginnt aber bei 80 °C wieder leicht zu steigen. In Meerwasser ist die Viskosität bei niedrigeren Konzentrationen mehr oder weniger temperaturunabhängig, bei 2000 ppm nimmt die Viskosität jedoch stark mit der Temperatur zu. Das Verhalten wässriger Lösungen von Copolymer 5 ist ähnlich. -COOH Gruppen aufweisende Copolymere sind somit bei moderaten Salinitäten wie Meerwasser gut zum Polymerfluten geeignet.

Verhalten im porösen Medium (Kernflutversuch):
Mit Copolymer 1 wurden Kernflutversuche durchgeführt. Hierzu wurden Lösungen von Copolymer 1 in synthetischem Meerwasser (Zusammensetzung siehe oben) eingesetzt, und zwar mit einer Polymerkonzentration von 300 ppm, 500 ppm und 1000 ppm. Für die Kernflutversuche wurde Bentheimer Sandstein einer Permeabilität von ca. 2 Darcy eingesetzt. Die Versuche wurden jeweils bei 60°C durchgeführt.
In einem ersten Schritt wurde zunächst synthetisches Meerwasser ohne Polymer bei einer Flussrate von 1 ml/min durch den Kern gepumpt und der Differenzdruck über den Kern gemessen. Anschließend wurden die Polymerlösungen einer Flussrate von 1 ml/min durch den Kern gepumpt und jeweils der Differenzdruck bestimmt.

Aus dem Verhältnis des Differenzdrucks der Polymerlösung und des reinen Meerwassers wurde dann der sogenannte Resistance Factor (RF) berechnet. Ein hoher RF zeigt eine effektive Verdickung der wässrigen Lösung durch das gelöste Polymer an. Die RF-Werte des Copolymers 1 sind in der nachfolgenden Tabelle zusammengefasst:

| Polymerkonzentration [ppm] | Resistance Factor (RF) |
|---|---|
| 300 | 139 |
| 500 | 393 |
| 1000 | 721 |

Die Ergebnisse zeigen, dass das Copolymer 1 auch noch bei der geringen Konzentration von 300 ppm einen recht hohen RF-Wert aufweist.

## Patentansprüche

1. Verfahren zur Förderung von Erdöl aus unterirdischen Erdöllagerstätten, bei dem man eine wässrige Formulierung umfassend mindestens ein verdickendes, wasserlösliches Copolymer (P) durch mindestens eine Injektionsbohrung in eine Erdöllagerstätte injiziert und der Lagerstätte durch mindestens eine Produktionsbohrung Rohöl entnimmt, wobei das wasserlösliche Copolymer (P) mindestens
(A) 35 bis 99,5 Gew.-% mindestens eines neutralen, monethylenisch ungesättigten, hydrophilen Monomers (A), ausgewählt aus der Gruppe von (Meth)acrylamid, N-Methyl(meth)acrylamid, N,N'-Dimethyl(meth)acrylamid oder N-Methylol(meth)acrylamid,
(B) 0,01 bis 15 Gew.-% mindestens eines monoethylenisch ungesättigten Makromonomers (B), mindestens umfassend -neben der monoethylenisch ungesättigten Gruppe- eine hydrophile Gruppe und eine hydrophobe Gruppe, sowie
(C) 0,1 bis 69,99 Gew.-% mindestens eines hydrophilen, anionischen mono-ethylenisch ungesättigten Monomers (C), umfassend mindestens eine saure Gruppe ausgewählt aus der Gruppe von -COOH, -SO₃H oder -PO₃H₂-Gruppen bzw. Salzen davon umfasst,
**dadurch gekennzeichnet, dass** es sich bei mindestens einem Makromonomer (B) um eine Mischung umfassend Makromonomere (B1) und (B2) der allgemeinen Formeln
(B1)
H₂C=C(R¹)-R²-O-(R³O)ₐ-(R⁴O)_{b}-[(R⁴O)_{c}(R⁵O)_{d}]-H (I)
sowie
(B2)
H₂C=C(R¹)-R²-O-(R³O)ₐ-(R⁴O)_{b}-H (II),
handelt, wobei die Mengenangaben der Monomere jeweils auf die Gesamtmenge aller Monomere im Copolymer (P) bezogen sind, der molare Anteil x der Makromonomere (B1) bezüglich der Summe von (B1) und (B2) 0,1 bis 0,99 beträgt, und wobei die Reste und Indices die folgende Bedeutung haben:
R¹: H oder Methyl,
R²: eine Einfachbindung oder eine zweiwertige verknüpfende Gruppe -OR³⁵-, wobei R³⁵ für eine Alkylengruppe mit 1 bis 6 Kohlenstoffatomen steht,
R³: unabhängig voneinander Ethylengruppen -CH₂CH₂-, 1,2-Propylengruppen - CH₂-CH(CH₃)- oder Alkylengruppen R⁴, mit der Maßgabe, dass es sich bei mindestens 90 mol% der Reste R³ um Ethylengruppen handelt,
R⁴: unabhängig voneinander Alkylengruppen -CR⁶(R⁷)-CR⁸(R⁹)-, wobei die Reste R⁶, R⁷, R⁸ und R⁹ unabhängig voneinander für H oder einen linearen oder verzweigten Alkylrest mit 1 bis 8 Kohlenstoffatomen stehen, mit der Maßgabe, dass nicht alle Reste für H stehen und die Summe der Kohlenstoffatome der Reste R⁶, R⁷, R⁸ und R⁹ 2 bis 8 beträgt,
R⁵ eine Ethylengruppe -CH₂CH₂-,
a eine Zahl von 10 bis 35,
b eine Zahl von 5 bis 30,
c eine Zahl von 0 bis 2,
d eine Zahl von 1 bis 15
und wobei weiterhin
• das Copolymer ein gewichtsmittleres Molekulargewicht M_{w} von 1*10⁶ g/mol bis 30*10⁶ g/mol aufweist,
• die Menge des Copolymers in der wässrigen Formulierung 0,02 bis 2 Gew.-% beträgt, und
• die Temperatur der Erdöllagerstätte 20 °C bis 120 °C beträgt.

2. Verfahren gemäß Anspruch 1, **dadurch gekennzeichnet, dass** die Temperatur der Lagerstätte 35 bis 120 °C beträgt.

3. Verfahren gemäß Anspruch 1, **dadurch gekennzeichnet, dass** die Temperatur der Lagerstätte 40 bis 100 °C beträgt.

4. Verfahren gemäß einem der Ansprüche 1 bis 3, **dadurch gekennzeichnet, dass** die wässrige Formulierung Salze umfasst.

5. Verfahren gemäß Anspruch 4, **dadurch gekennzeichnet, dass** die Konzentration der Salze 5000 ppm bis 250000 ppm bezüglich der Summe aller Komponenten der Formulierung beträgt.

6. Verfahren gemäß einem der Ansprüche 1 bis 5, **dadurch gekennzeichnet, dass** 2 oder 3 der Reste R⁶, R⁷, R⁸ und R⁹ für H stehen und die Summe der Kohlenstoffatome der Reste R⁶, R⁷, R⁸ und R⁹ 2 oder 3 beträgt.

7. Verfahren gemäß einem der Ansprüche 1 bis 6, **dadurch gekennzeichnet, dass** die Anzahl b+c der Reste R⁴O mit der Maßgabe gewählt wird, dass die Summe aller Kohlenstoffatome aller vorhandenen Reste R⁶, R⁷, R⁸ und R⁹ 25 bis 50 beträgt.

8. Verfahren gemäß einem der Ansprüche 1 bis 7, **dadurch gekennzeichnet, dass** der molare Anteil x der Monomere (B1) 0,4 bis 0,95 bezüglich der Summe aus (B1) und (B2) beträgt.

9. Verfahren gemäß einem der Ansprüche 1 bis 8, **dadurch gekennzeichnet, dass** es sich bei dem Verfahren um Alkali-Polymer-Fluten handelt, und die zum Injizieren verwendete wässrige Formulierung zusätzlich mindestens eine Base umfasst.

10. Verfahren gemäß einem der Ansprüche 1 bis 8, **dadurch gekennzeichnet, dass** es sich bei dem Verfahren um Alkali-Tensid-Polymer-Fluten handelt, und die zum Injizieren verwendete wässrige Formulierung zusätzlich mindestens eine Base und mindestens ein Tensid umfasst.

11. Verfahren gemäß Anspruch 9 oder 10, **dadurch gekennzeichnet, dass** die wässrige Formulierung einen pH-Wert von 9 bis 13 aufweist.

12. Verfahren gemäß Anspruch 10 oder 11, **dadurch gekennzeichnet, dass** es sich bei mindestens einem der Tenside um ein anionisches Tensid der allgemeinen Formel
R²⁴-O-(R²⁸O)ₙ(R²⁹O)ₘ(R³⁰O)ₗ-R²⁵-YM (XII)
handelt, wobei die Reste und Indices die nachfolgende Bedeutung haben:
R²⁴: eine aliphatische, cycloaliphatische und/oder aromatische Kohlenwasserstoffgruppe mit 10 bis 36 Kohlenstoffatomen,
R²⁸: unabhängig voneinander für voneinander Butylengruppen -CR³¹(R³²)-CR³³(R³⁴)-, wobei die Reste R³¹, R³², R³³ und R³⁴ unabhängig voneinander für H, Methyl oder Ethyl stehen, mit der Maßgabe, dass die Summe der Kohlenstoffatome R³¹, R³², R³³ und R³⁴ jeweils 2 beträgt, und wobei bei mindestens 70 mol% der Einheiten R²⁸ R³¹, R³² und R³³ für H und R³⁴ für Ethyl stehen,
R29: 1,2-Propylengruppen -CH₂-CH(CH₃)-,
R³⁰: -CH₂CH₂-,
R²⁵: eine Einfachbindung oder eine Alkylengruppe mit 2 bis 6 Kohlenstoffatomen, welche optional auch noch mit OH-Gruppen substituiert sein kann,
Y eine Gruppe ausgewählt aus der Gruppe von Sulfatgruppen, Sulfonatgruppen, Carboxylatgruppen und Phosphatgruppen,
M H oder ein Kation,
n 0 bis 25,
m 0 bis 35,
l 0 bis 75,und
n+m+l 3 bis 75.

13. Verfahren gemäß Anspruch 12, **dadurch gekennzeichnet, dass** es sich bei den Resten R²⁴ um lineare aliphatische Kohlenwasserstoffeste R^{24a} mit 12 bis 22 Kohlenstoffatomen handelt.

14. Verfahren gemäß Anspruch 12, **dadurch gekennzeichnet, dass** es sich bei den Resten R²⁴ verzweigte aliphatische Kohlenwasserstoffreste R^{24b} mit 12 bis 28 Kohlenstoffatomen handelt.

15. Verfahren gemäß Anspruch 10 oder 11, **dadurch gekennzeichnet, dass** es sich bei mindestens einem der Tenside um Olefinsulfonate handelt.

16. Verfahren gemäß einem der Ansprüche 1 bis 15, **dadurch gekennzeichnet, dass** die Formulierung zusätzlich mindestens einen Komplexbildner umfasst.

17. Verfahren gemäß einem der Ansprüche 1 bis 16 **dadurch gekennzeichnet, dass** die Formulierung zusätzlich mindestens einen Radikalfänger umfasst.

18. Verfahren gemäß einem der Ansprüche 1 bis 17, **dadurch gekennzeichnet, dass** die Formulierung zusätzlich mindestens einen Sauerstofffänger umfasst.

19. Verfahren gemäß einem der Ansprüche 1 bis 18, **dadurch gekennzeichnet, dass** die Formulierung zusätzlich mindestens ein Opferreagens umfasst.

20. Verfahren gemäß einem der Ansprüche 1 bis 19, **dadurch gekennzeichnet, dass** es sich bei dem Copolymer (P) um ein Copolymer (P1) handelt, welches
• 40 bis 60 Gew.-% (Meth)acrylamid als Monomer (A), sowie
• 0,1 bis 5 Gew.-% Makromonomere (B1) und (B2) umfasst, wobei der molare Anteil der Makromonomere (B1) bezüglich der Summe von (B1) und (B2) 0,3 bis 0,95 beträgt und wobei die Reste und Indices in den Formeln (I) und (II) die nachfolgende Bedeutung haben
R¹: H oder Methyl,
R²: eine zweiwertige verknüpfende Gruppe -OR³⁵-, wobei R³⁵ für eine lineare 1,ω-Alkylengruppe mit 1 bis 6 Kohlenstoffatomen steht,
R³: Ethylengruppen -CH₂CH₂-,
R⁴: unabhängig voneinander Alkylengruppen -CR⁶(R⁷)-CR⁸(R⁹)-, wobei die Summe der Kohlenstoffatome R⁶, R⁷, R⁸ und R⁹ jeweils 2 beträgt, und wobei bei mindestens 70 mol% der Einheiten -CR⁶(R⁷)CR⁸(R⁹)- R⁶, R⁷ und R⁸ für H und R⁹ für Ethyl stehen,
R⁵ eine Ethylengruppe -CH₂CH₂-,
a eine Zahl von 20 bis 28,
b eine Zahl von 10 bis 25,
c eine Zahl von 0 bis 1,5,
d eine Zahl von 1,5 bis 10,
und weiterhin
• 40 bis 60 Gew.-% mindestens eines hydrophilen, anionischen monoethylenisch ungesättigten Monomers (C) umfassend SO₃H-Gruppen bzw. deren Salze, wobei die Mengen der Monomere jeweils auf die Mengen alle Monomere im Copolymer (P1) bezogen sind.

21. Verfahren gemäß Anspruch 20, **dadurch gekennzeichnet, dass** die wässrige Formulierung Salze in einer Konzentration von 5000 ppm bis 250000 ppm bezüglich der Summe aller Komponenten der Formulierung umfasst.

22. Verfahren gemäß Anspruch 20 oder 21, **dadurch gekennzeichnet, dass** die Lagerstättentemperatur 50 °C bis 120 °C beträgt.

23. Verfahren gemäß einem der Ansprüche 1 bis 19, **dadurch gekennzeichnet, dass** es sich bei dem Copolymer (P) um ein Copolymer (P2) handelt, welches
• 50 bis 85 Gew.-% (Meth)acrylamid als Monomer (A), sowie
• 0,1 bis 10 Gew.-% Makromonomere (B1) und (B2) umfasst, wobei der molare Anteil der Makromonomere (B1) bezüglich der Summe von (B1) und (B2) 0,3 bis 0,95 beträgt und wobei die Reste und Indices in den Formeln (I) und (II) die nachfolgende Bedeutung haben
R¹: H oder Methyl,
R²: eine zweiwertige verknüpfende Gruppe -OR³⁵-, wobei R³⁵ für eine lineare 1,ω-Alkylengruppe mit 1 bis 6 Kohlenstoffatomen steht,
R³: Ethylengruppen -CH₂CH₂-,
R⁴: unabhängig voneinander Alkylengruppen -CR⁶(R⁷)-CR⁸(R⁹)-, wobei die Summe der Kohlenstoffatome R⁶, R⁷, R⁸ und R⁹ jeweils 2 beträgt, und wobei bei mindestens 70 mol% der Einheiten -CR⁶(R⁷)CR⁸(R⁹)- R⁶, R⁷ und R⁸ für H und R⁹ für Ethyl stehen,
R⁵ eine Ethylengruppe -CH₂CH₂-,
a eine Zahl von 20 bis 28,
b eine Zahl von 10 bis 25,
c eine Zahl von 0 bis 2,
d eine Zahl von 1,5 bis 10,
und weiterhin
• 5 bis 45 Gew.-% mindestens eines hydrophilen, anionischen monoethylenisch ungesättigten Monomers (C) umfassend COOH-Gruppen bzw. deren Salze, wobei die Mengen der Monomere jeweils auf die Mengen alle Monomere im Copolymer (P2) bezogen sind.

24. Verfahren gemäß Anspruch 23, **dadurch gekennzeichnet, dass** die wässrige Formulierung Salze in einer Konzentration von 2000 ppm bis 60000 ppm bezüglich der Summe aller Komponenten der Formulierung umfasst.

25. Verfahren gemäß Anspruch 23 oder 24, **dadurch gekennzeichnet, dass** die Lagerstättentemperatur 35 °C bis 90 °C beträgt.

26. Verfahren gemäß einem der Ansprüche 1 bis 19, **dadurch gekennzeichnet, dass** es sich bei dem Copolymer (P) um ein Copolymer (P3) handelt, welches
• 30 bis 85 Gew.-% (Meth)acrylamid als Monomer (A), sowie
• 0,1 bis 10 Gew.-% Makromonomere (B1) und (B2) umfasst, wobei der molare Anteil der Makromonomere (B1) bezüglich der Summe von (B1) und (B2) 0,3 bis 0,95 beträgt und wobei die Reste und Indices in den Formeln (I) und (II) die nachfolgende Bedeutung haben
R¹: H oder Methyl,
R²: eine zweiwertige verknüpfende Gruppe -OR³⁵-, wobei R³⁵ für eine lineare 1,ω-Alkylengruppe mit 1 bis 6 Kohlenstoffatomen steht,
R³: Ethylengruppen -CH₂CH₂-,
R⁴: unabhängig voneinander Alkylengruppen -CR⁶(R⁷)-CR⁸(R⁹)-, wobei die Summe der Kohlenstoffatome R⁶, R⁷, R⁸ und R⁹ jeweils 2 beträgt, und wobei bei mindestens 70 mol% der Einheiten -CR⁶(R⁷)CR⁸(R⁹)- R⁶, R⁷ und R⁸ für H und R⁹ für Ethyl stehen,
R⁵ eine Ethylengruppe -CH₂CH₂-,
a eine Zahl von 20 bis 28,
b eine Zahl von 10 bis 25,
c eine Zahl von 0 bis 2,
d eine Zahl von 1,5 bis 10,
und weiterhin
• mindestens zwei hydrophile, anionische monoethylenisch ungesättigte Monomere (C) umfassend 5 bis 40 Gew.-% mindestens eines COOH-Gruppen bzw. deren Salze umfassenden Monomern (C1), sowie 5 bis 40 Gew.-% mindestens eines - SO₃H Gruppen bzw. deren Salze umfassenden Monomers (C2), wobei die Mengen der Monomere jeweils auf die Mengen alle Monomere im Copolymer (P3) bezogen sind.

27. Verfahren gemäß Anspruch 26, **dadurch gekennzeichnet, dass** die wässrige Formulierung Salze in einer Konzentration von 5000 ppm bis 150000 ppm bezüglich der Summe aller Komponenten der Formulierung umfasst.

28. Verfahren gemäß Anspruch 26 oder 27, **dadurch gekennzeichnet, dass** die Lagerstättentemperatur 40 °C bis 100 °C beträgt.

29. Wasserlösliches Copolymer (P) umfassend mindestens
(A) 35 bis 99,5 Gew.-% mindestens eines neutralen, monethylenisch ungesättigten, hydrophilen Monomers (A), ausgewählt aus der Gruppe von (Meth)acrylamid, N-Methyl(meth)acrylamid, N,N'-Dimethyl(meth)acrylamid oder N-Methylol(meth)acrylamid,
(B) 0,01 bis 15 Gew.-% mindestens eines monoethylenisch ungesättigten Makromonomers (B), mindestens umfassend - neben der monoethylenisch ungesättigten Gruppe - eine hydrophile Gruppe und eine hydrophobe Gruppe, sowie
(C) 0,1 bis 69,99 Gew.-% mindestens eines hydrophilen, anionischen mono-ethylenisch ungesättigten Monomers (C), umfassend mindestens eine saure Gruppe ausgewählt aus der Gruppe von -COOH, -SO₃H oder -PO₃H₂-Gruppen bzw. Salzen davon umfasst,
**dadurch gekennzeichnet, dass** es sich bei dem mindestens einen Makromonomeren (B) um eine Mischung umfassend Makromonomere (B1) und (B2) der allgemeinen Formeln
(B1)
H₂C=C(R¹)-R²-O-(R³O)ₐ-(R⁴O)_{b}-[-(R⁴O)_{c}(R⁵O)_{d}]-H (I)
sowie
(B2)
H₂C=C(R¹)-R²-O-(R³O)ₐ-(R⁴O)_{b}-H (II)
,
handelt, wobei die Mengenangaben der Monomere jeweils auf die Gesamtmenge aller Monomere im Copolymer (P) bezogen sind, der molare Anteil x der Makromonomere (B1) bezüglich der Summe von (B1) und (B2) 0,1 bis 0,99 beträgt, und wobei die Reste und Indices die folgende Bedeutung haben:
R¹: H oder Methyl,
R²: eine Einfachbindung oder eine zweiwertige verknüpfende Gruppe -OR³⁵-, wobei R³⁵ für eine Alkylengruppe mit 1 bis 6 Kohlenstoffatomen steht,
R³: unabhängig voneinander Ethylengruppen -CH₂CH₂-, 1,2-Propylengruppen oder Alkylengruppen R⁴, mit der Maßgabe, dass es sich bei mindestens 90 mol% der Reste R³ um Ethylengruppen handelt,
R⁴: unabhängig voneinander Alkylengruppen -CR⁶(R⁷)-CR⁸(R⁹)-, wobei die Reste R⁶, R⁷, R⁸ und R⁹ unabhängig voneinander für H oder einen linearen oder verzweigten Alkylrest mit 1 bis 8 Kohlenstoffatomen stehen, mit der Maßgabe, dass nicht alle Reste für H stehen und die Summe der Kohlenstoffatome der Reste R⁶, R⁷, R⁸ und R⁹ 2 bis 8 beträgt,
R⁵ eine Ethylengruppe -CH₂CH₂-,
a eine Zahl von 10 bis 35,
b eine Zahl von 5 bis 30,
c eine Zahl von 0 bis 2,
d eine Zahl von 1 bis 15,
und wobei das Copolymer ein gewichtsmittleres Molekulargewicht M_{w} von 1*10⁶ g/mol bis 30*10⁶ g/mol aufweist.

30. Copolymer (P) gemäß Anspruch 29, **dadurch gekennzeichnet, dass** es um ein Copolymer (P1) handelt, welches
• 40 bis 60 Gew.-% (Meth)acrylamid als Monomer (A), sowie
• 0,1 bis 5 Gew.-% Makromonomere (B1) und (B2) umfasst, wobei der molare Anteil der Makromonomere (B1) bezüglich der Summe von (B1) und (B2) 0,3 bis 0,95 beträgt und wobei die Reste und Indices in den Formeln (I) und (II) die nachfolgende Bedeutung haben
•
R¹: H oder Methyl,
R²: eine zweiwertige verknüpfende Gruppe -OR³⁵-, wobei R³⁵ für eine lineare 1,ω-Alkylengruppe mit 1 bis 6 Kohlenstoffatomen steht,
R³: Ethylengruppen -CH₂CH₂-,
R⁴: unabhängig voneinander Alkylengruppen -CR⁶(R⁷)-CR⁸(R⁹)-, wobei die Summe der Kohlenstoffatome R⁶, R⁷, R⁸ und R⁹ jeweils 2 beträgt, und wobei bei mindestens 70 mol% der Einheiten -CR⁶(R⁷)CR⁸(R⁹)- R⁶, R⁷ und R⁸ für H und R⁹ für Ethyl stehen,
R⁵ eine Ethylengruppe -CH₂CH₂-,
a eine Zahl von 20 bis 28,
b eine Zahl von 10 bis 30,
c eine Zahl von 0 bis 2,
d eine Zahl von 1,5 bis 10,
und weiterhin
• 40 bis 60 Gew.-% mindestens eines hydrophilen, anionischen monoethylenisch ungesättigten Monomers (C) umfassend SO₃H-Gruppen bzw. deren Salze, wobei die Mengen der Monomere jeweils auf die Mengen alle Monomere im Copolymer (P1) bezogen sind.

31. Copolymer (P) gemäß Anspruch 29, **dadurch gekennzeichnet, dass** es sich um ein Copolymer (P2) handelt, welches
• 50 bis 85 Gew.-% (Meth)acrylamid als Monomer (A), sowie
• 0,1 bis 10 Gew.-% Makromonomere (B) umfasst, wobei der molare Anteil der Makromonomere (B1) bezüglich der Summe von (B1) und (B2) 0,3 bis 0,95 beträgt und wobei die Reste und Indices in den Formeln (I) und (II) die nachfolgende Bedeutung haben
R¹: H oder Methyl,
R²: eine zweiwertige verknüpfende Gruppe -OR³⁵-, wobei R³⁵ für eine lineare 1,ω-Alkylengruppe mit 1 bis 6 Kohlenstoffatomen steht,
R³: Ethylengruppen -CH₂CH₂-,
R⁴: unabhängig voneinander Alkylengruppen -CR⁶(R⁷)-CR⁸(R⁹)-, wobei die Summe der Kohlenstoffatome R⁶, R⁷, R⁸ und R⁹ jeweils 2 beträgt, und wobei bei mindestens 70 mol% der Einheiten -CR⁶(R⁷)CR⁸(R⁹)- R⁶, R⁷ und R⁸ für H und R⁹ für Ethyl stehen,
R⁵ eine Ethylengruppe -CH₂CH₂-,
a eine Zahl von 20 bis 28,
b eine Zahl von 10 bis 25,
c eine Zahl von 0 bis 2,
d eine Zahl von 1,5 bis 10,
und weiterhin
• 5 bis 45 Gew.-% mindestens eines hydrophilen, anionischen monoethylenisch ungesättigten Monomers (C) umfassend COOH-Gruppen bzw. deren Salze, wobei die Mengen der Monomere jeweils auf die Mengen alle Monomere im Copolymer (P2) bezogen sind.

32. Copolymer (P) gemäß Anspruch 29, **dadurch gekennzeichnet, dass** es sich um ein Copolymer (P3) handelt, welches
• 30 bis 85 Gew.-% (Meth)acrylamid als Monomer (A), sowie
• 0,1 bis 10 Gew.-% Makromonomere (B) umfasst, wobei der molare Anteil der Makromonomere (B1) bezüglich der Summe von (B1) und (B2) 0,3 bis 0,95 beträgt und wobei die Reste und Indices in den Formeln (I) und (II) die nachfolgende Bedeutung haben
R¹: H oder Methyl,
R²: eine zweiwertige verknüpfende Gruppe -OR³⁵-, wobei R³⁵ für eine lineare 1,ω-Alkylengruppe mit 1 bis 6 Kohlenstoffatomen steht,
R³: Ethylengruppen -CH₂CH₂-,
R⁴: unabhängig voneinander Alkylengruppen -CR⁶(R⁷)-CR⁸(R⁹)-, wobei die Summe der Kohlenstoffatome R⁶, R⁷, R⁸ und R⁹ jeweils 2 beträgt, und wobei bei mindestens 70 mol% der Einheiten -CR⁶(R⁷)CR⁸(R⁹)- R⁶, R⁷ und R⁸ für H und R⁹ für Ethyl stehen,
R⁵ eine Ethylengruppe -CH₂CH₂-,
a eine Zahl von 20 bis 28,
b eine Zahl von 10 bis 25,
c eine Zahl von 0 bis 2,
d eine Zahl von 1,5 bis 10,
und weiterhin
• mindestens zwei hydrophile, anionische monoethylenisch ungesättigte Monomere (C) umfassend 5 bis 40 Gew.-% mindestens eines COOH-Gruppen bzw. deren Salze umfassendes Monomer (C1), sowie 5 bis 40 Gew.-% mindestens eines SO₃H-Gruppen bzw. deren Salze umfassendes Monomer (C2), wobei die Mengen der Monomere jeweils auf die Mengen alle Monomere im Copolymer (P3) bezogen sind.

33. Wässrige Formulierung umfassend mindestens ein verdickendes, wasserlösliches Copolymer (P) gemäß einem der Ansprüche 29 bis 32, **dadurch gekennzeichnet, dass** die Menge des Copolymers in der wässrigen Formulierung 0,02 bis 2 Gew.-% beträgt.

34. Verfahren zur Herstellung eines wasserlöslichen Copolymers (P) gemäß Anspruch 29 umfassend mindestens die folgenden Verfahrensschritte
(a) Bereitstellen einer wässrigen Monomerlösung umfassend mindestens
• Wasser,
• 35 bis 99,5 Gew.-% mindestens eines neutralen, monethylenisch ungesättigten, hydrophilen Monomers (A), ausgewählt aus der Gruppe von (Meth)acrylamid, N-Methyl(meth)acrylamid, N,N'-Dimethyl(meth)acrylamid oder N-Methylol(meth)acrylamid,
• 0,01 bis 15 Gew.-% mindestens eines monoethylenisch ungesättigten Makromonomers (B), mindestens umfassend -neben der monoethylenisch ungesättigten Gruppe- eine hydrophile Gruppe und eine hydrophobe Gruppe, wobei es sich bei mindestens einem Makromonomer (B) um eine Mischung umfassend Makromonomere (B1) und (B2) der allgemeinen Formeln
(B1)
H₂C=C(R¹)-R²-O-(R³O)ₐ-(R⁴O)_{b}-[(R⁴O)_{c}(R⁵O)_{d}]-H (I)
sowie
(B2)
H₂C=C(R¹)-R²-O-(R³O)ₐ-(R⁴O)_{b}-H (II),
handelt, wobei die Mengenangaben der Monomere jeweils auf die Gesamtmenge aller Monomere im Copolymer (P) bezogen sind, der molare Anteil x der Makromonomere (B1) bezüglich der Summe von (B1) und (B2) 0,1 bis 0,99 beträgt, und wobei die Reste und Indices in den Formeln (I) und (II) die in Anspruch 34 definierte Bedeutung haben, sowie
• 0,1 bis 69,99 Gew.-% mindestens eines hydrophilen, anionischen mono-ethylenisch ungesättigten Monomers (C), umfassend mindestens eine saure Gruppe ausgewählt aus der Gruppe von -COOH, -SO₃H oder -PO₃H₂-Gruppen bzw. Salzen davon,
wobei die Konzentration aller Monomere zusammen 10 bis 60 Gew.-% bezüglich der wässrigen Monomerlösung beträgt,
(b) Abkühlen der wässrigen Monomerlösung auf eine Temperatur von weniger als +10°C,
(c) Zugabe mindestens eines thermischen Initiators für die radikalische Polymerisation zu der wässrigen Monomerlösung, wobei mindestens einer der Initiatoren eine radikalische Polymerisation bei Temperaturen von weniger als + 10 °C auslösen kann,
(d) Polymerisieren der Monomermischung unter im Wesentlichen adiabatischen Bedingungen, wobei sich die Mischung unter dem Einfluss der gebildeten Polymerisatonswärme erwärmt und ein Polymergel gebildet wird,
(e) Zerkleinern des gebildeten Polymergels,
(f) Trocknen des Polymergels.

35. Verfahren gemäß Anspruch 34, **dadurch gekennzeichnet, dass** die wässrige Monomerlösung weiterhin eine nicht-polymerisierbare, oberflächenaktive Verbindung (T) umfasst.

36. Verfahren gemäß Anspruch 34 oder 35, **dadurch gekennzeichnet, dass** man die Polymerisation in einem konischen Reaktor durchführt, wobei es sich bei dem konischen Reaktor um einen Rohrreaktor (1) mit einem Durchmesser D1 handelt, der am unteren Ende eine konische Verjüngung (2) aufweist, wobei der Durchmesser am Ende der konischen Verjüngung D2 beträgt, das Verhältnis D1 / D2 2:1 bis 25:1 und der Winkel α zwischen der Wandung im zylindrischen Teil (1) und der Wandung im Bereich der konischen Verjüngung (2) mehr als 120° und weniger als 180° beträgt und der Reaktor weiterhin eine am unteren Ende der konischen Verjüngung angeordnete Absperrvorrichtung (3) sowie mindestens eine Zuführung (4) auf der Oberseite des Reaktors umfasst, wobei man
• die Schritte (a) und (b) in geeigneten Misch- und Kühlvorrichtungen außerhalb des konischen Reaktors vornimmt,
• von dort aus die gekühlte Monomerlösung durch die Zuführung (4) in den Reaktor überführt, und
• nach der Polymerisation durch Öffnen der Absperrvorrichtung (3) und Einpressen mindestens eines Gases durch die Zuführung (4) das gebildete Polymergel (5) durch die geöffnete Absperrvorrichtung aus dem Reaktor presst.

## Claims

1. A process for producing mineral oil from underground mineral oil deposits, in which an aqueous formulation comprising at least one thickening, water-soluble copolymer (P) is injected into a mineral oil deposit through at least one injection well and crude oil is withdrawn from the deposit through at least one production well, said water-soluble copolymer (P) comprising at least
(A) 35 to 99.5% by weight of at least one uncharged, monoethylenically unsaturated, hydrophilic monomer (A) selected from the group of (meth)acrylamide, N-methyl(meth)acrylamide, N,N'-dimethyl(meth)acrylamide and N-methylol(meth)acrylamide,
(B) 0.01 to 15% by weight of at least one monoethylenically unsaturated macromonomer (B) at least comprising - as well as the monoethylenically unsaturated group - a hydrophilic group and a hydrophobic group, and
(C) 0.1 to 69.99% by weight of at least one hydrophilic, anionic, monoethylenically unsaturated monomer (C) comprising at least one acidic group selected from the group of - COOH, -SO₃H and -PO₃H₂ groups or salts thereof,
wherein at least one macromonomer (B) is a mixture comprising macromonomers (B1) and (B2) of the general formulae
(B1)
H₂C=C(R¹)-R²-O-(R³O)ₐ-(R⁴O)_{b}-[(R⁴O)_{c}(R⁵O)_{d}]-H (I)
and
(B2)
H₂C=C(R¹)-R²-O-(R³O)ₐ-(R⁴O)_{b}-H (II),
where the stated amounts of the monomers are each based on the total amount of all the monomers in the copolymer (P), the molar proportion x of the macromonomers (B1) based on the sum total of (B1) and (B2) is 0.1 to 0.99, and where the radicals and indices are each defined as follows:
R¹: H or methyl,
R²: a single bond or a divalent linking group - OR³⁵- where R³⁵ is an alkylene group having 1 to 6 carbon atoms,
R³: independently ethylene groups -CH₂CH₂-, 1,2-propylene groups -CH₂-CH(CH₃)- or alkylene groups R⁴, with the proviso that at least 90 mol% of the R³ radicals are ethylene groups,
R⁴: independently alkylene groups -CR⁶(R⁷)-CR⁸(R⁹)- where the R⁶, R⁷, R⁸ and R⁹ radicals are each independently H or a linear or branched alkyl radical having 1 to 8 carbon atoms, with the proviso that not all radicals are H and the sum total of the carbon atoms in the R⁶, R⁷, R⁸ and R⁹ radicals is 2 to 8,
R⁵ an ethylene group -CH₂CH₂-,
a a number from 10 to 35,
b a number from 5 to 30,
c a number from 0 to 2,
d a number from 1 to 15
and where, in addition,
• the copolymer has a weight-average molecular weight M_{W} of 1*10⁶ g/mol to 30*10⁶ g/mol,
• the amount of the copolymer in the aqueous formulation is 0.02 to 2% by weight, and
• the temperature of the mineral oil deposit is 20°C to 120°C.

2. The process according to claim 1, wherein the temperature of the deposit is 35 to 120°C.

3. The process according to claim 1, wherein the temperature of the deposit is 40 to 100°C.

4. The process according to any of claims 1 to 3, wherein the aqueous formulation comprises salts.

5. The process according to claim 4, wherein the concentration of the salts is 5000 ppm to 250 000 ppm based on the sum total of all the components in the formulation.

6. The process according to any of claims 1 to 5, wherein 2 or 3 of the R⁶, R⁷, R⁸ and R⁹ radicals are H and the sum total of the carbon atoms in the R⁶, R⁷, R⁸ and R⁹ radicals is 2 or 3.

7. The process according to any of claims 1 to 6, wherein the number b+c of the R⁴O radicals is selected with the proviso that the sum total of all the carbon atoms in all the R⁶, R⁷, R⁸ and R⁹ radicals present is 25 to 50.

8. The process according to any of claims 1 to 7, wherein the molar proportion x of the monomers (B1) is 0.4 to 0.95 based on the sum total of (B1) and (B2).

9. The process according to any of claims 1 to 8, which involves alkali-polymer flooding, and wherein the aqueous formulation used for injection additionally comprises at least one base.

10. The process according to any of claims 1 to 8, which involves alkali-surfactant-polymer flooding, and wherein the aqueous formulation used for injection additionally comprises at least one base and at least one surfactant.

11. The process according to claim 9 or 10, wherein the aqueous formulation has a pH of 9 to 13.

12. The process according to claim 10 or 11, wherein at least one of the surfactants is an anionic surfactant of the general formula
R²⁴-O-(R²⁸O)ₙ(R²¹O)ₘ(R³⁰O)₁-R²⁵-YM (XII)
where the radicals and indices are each defined as follows:
R²⁴: an aliphatic, cycloaliphatic and/or aromatic hydrocarbyl group having 10 to 36 carbon atoms,
R²⁸: independently butylene groups -CR³¹(R³²)-CR³³(R³⁴)- where the R³¹, R³², R³³ and R³⁴ radicals are each independently H, methyl or ethyl, with the proviso that the sum total of the carbon atoms R³¹, R³², R³³ and R³⁴ is 2 in each case, and where, in at least 70 mol% of the R²⁸ units, R³¹, R³² and R³³ are each H and R³⁴ is ethyl,
R²⁹: 1,2-propylene groups -CH₂-CH(CH₃)-,
R³⁰: -CH₂CH₂-,
R²⁵: a single bond or an alkylene group which has 2 to 6 carbon atoms and may optionally also be substituted by OH groups,
Y a group selected from the group of sulfate groups, sulfonate groups, carboxylate groups and phosphate groups,
M H or a cation,
n 0 to 25,
m 0 to 35,
l 0 to 75, and
n+m+l 3 to 75.

13. The process according to claim 12, wherein the R²⁴ radicals are linear aliphatic hydrocarbyl radicals R^{24a} having 12 to 22 carbon atoms.

14. The process according to claim 12, wherein the R²⁴ radicals are branched aliphatic hydrocarbyl radicals R^{24b} having 12 to 28 carbon atoms.

15. The process according to claim 10 or 11, wherein at least one of the surfactants is an olefinsulfonate.

16. The process according to any of claims 1 to 15,
wherein the formulation additionally comprises at least one complexing agent.

17. The process according to any of claims 1 to 16
wherein the formulation additionally comprises at least one free-radical scavenger.

18. The process according to any of claims 1 to 17,
wherein the formulation additionally comprises at least one oxygen scavenger.

19. The process according to any of claims 1 to 18,
wherein the formulation additionally comprises at least one sacrificial reagent.

20. The process according to any of claims 1 to 19,
wherein the copolymer (P) is a copolymer (P1) comprising
• 40 to 60% by weight of (meth)acrylamide as monomer (A), and
• 0.1 to 5% by weight of macromonomers (B1) and (B2), where the molar proportion of the macromonomers (B1) based on the sum total of (B1) and (B2) is 0.3 to 0.95 and where the radicals and indices in the formulae (I) and (II) are defined as follows:
R¹: H or methyl,
R²: a divalent linking group -OR³⁵- where R³⁵ is a linear 1,ω-alkylene group having 1 to 6 carbon atoms,
R³: ethylene groups -CH₂CH₂-,
R⁴: independently alkylene groups -CR⁶(R⁷)-CR⁸(R⁹)-, where the sum total of the carbon atoms R⁶, R⁷, R⁸ and R⁹ is 2 in each case, and where, in at least 70 mol% of the -CR⁶(R⁷)CR⁸(R⁹)- units, R⁶, R⁷ and R⁸ are each H and R⁹ is ethyl,
R⁵ an ethylene group -CH₂CH₂-,
a a number from 20 to 28,
b a number from 10 to 25,
c a number from 0 to 1.5,
d a number from 1.5 to 10,
and, in addition,
• 40 to 60% by weight of at least one hydrophilic, anionic, monoethylenically unsaturated monomer (C) comprising SO₃H groups or salts thereof, where the amounts of the monomers are each based on the amounts of all the monomers in the copolymer (P1).

21. The process according to claim 20, wherein the aqueous formulation comprises salts in a concentration of 5000 ppm to 250 000 ppm based on the sum total of all the components in the formulation.

22. The process according to claim 20 or 21, wherein the deposit temperature is 50°C to 120°C.

23. The process according to any of claims 1 to 19, wherein the copolymer (P) is a copolymer (P2) comprising
• 50 to 85% by weight of (meth)acrylamide as monomer (A), and
• 0.1 to 10% by weight of macromonomers (B1) and (B2), where the molar proportion of the macromonomers (B1) based on the sum total of (B1) and (B2) is 0.3 to 0.95 and where the radicals and indices in the formulae (I) and (II) are each defined as follows:
R¹: H or methyl,
R²: a divalent linking group -OR³⁵- where R³⁵ is a linear 1,ω-alkylene group having 1 to 6 carbon atoms,
R³: ethylene groups -CH₂CH₂-,
R⁴: independently alkylene groups -CR⁶(R⁷)-CR⁸(R⁹)-, where the sum total of the carbon atoms R⁶, R⁷, R⁸ and R⁹ is 2 in each case, and where, in at least 70 mol% of the -CR⁶(R⁷)CR⁸(R⁹)- units, R⁶, R⁷ and R⁸ are each H and R⁹ is ethyl,
R⁵ an ethylene group -CH₂CH₂-,
a a number from 20 to 28,
b a number from 10 to 25,
c a number from 0 to 2,
d a number from 1.5 to 10,
and, in addition,
• 5 to 45% by weight of at least one hydrophilic, anionic, monoethylenically unsaturated monomer (C) comprising COOH groups or salts thereof, where the amounts of the monomers are each based on the amounts of all the monomers in the copolymer (P2).

24. The process according to claim 23, wherein the aqueous formulation comprises salts in a concentration of 2000 ppm to 60 000 ppm based on the sum total of all the components in the formulation.

25. The process according to claim 23 or 24, wherein the deposit temperature is 35°C to 90°C.

26. The process according to any of claims 1 to 19, wherein the copolymer (P) is a copolymer (P3) comprising
• 30 to 85% by weight of (meth)acrylamide as monomer (A), and
• 0.1 to 10% by weight of macromonomers (B1) and (B2), where the molar proportion of the macromonomers (B1) based on the sum total of (B1) and (B2) is 0.3 to 0.95, and where the radicals and indices in the formulae (I) and (II) are each defined as follows:
R¹: H or methyl,
R²: a divalent linking group -OR³⁵- where R³⁵ is a linear 1,ω-alkylene group having 1 to 6 carbon atoms,
R³: ethylene groups -CH₂CH₂-,
R⁴: independently alkylene groups -CR⁶(R⁷)-CR⁸(R⁹)-, where the sum total of the carbon atoms R⁶, R⁷, R⁸ and R⁹ is 2 in each case, and where, in at least 70 mol% of the -CR⁶(R⁷)CR⁸(R⁹)- units, R⁶, R⁷ and R⁸ are each H and R⁹ is ethyl,
R⁵ an ethylene group -CH₂CH₂-,
a a number from 20 to 28,
b a number from 10 to 25,
c a number from 0 to 2,
d a number from 1.5 to 10,
and, in addition,
• at least two hydrophilic, anionic, monoethylenically unsaturated monomers (C) comprising 5 to 40% by weight of at least one monomer (C1) comprising COOH groups or salts thereof, and 5 to 40% by weight of at least one monomer (C2) comprising -SO₃H groups or salts thereof, where the amounts of the monomers are each based on the amounts of all the monomers in the copolymer (P3).

27. The process according to claim 26, wherein the aqueous formulation comprises salts in a concentration of 5000 ppm to 150 000 ppm based on the sum total of all the components in the formulation.

28. The process according to claim 26 or 27, wherein the deposit temperature is 40°C to 100°C.

29. A water-soluble copolymer (P) comprising at least
(A) 35 to 99.5% by weight of at least one uncharged, monoethylenically unsaturated, hydrophilic monomer (A) selected from the group of (meth)acrylamide, N-methyl(meth)acrylamide, N,N'-dimethyl(meth)acrylamide and N-methylol(meth)acrylamide,
(B) 0.01 to 15% by weight of at least one monoethylenically unsaturated macromonomer (B) at least comprising - as well as the monoethylenically unsaturated group - a hydrophilic group and a hydrophobic group, and
(C) 0.1 to 69.99% by weight of at least one hydrophilic, anionic, monoethylenically unsaturated monomer (C) comprising at least one acidic group selected from the group of-COOH, -SO₃H and -PO₃H₂ groups or salts thereof,
wherein the at least one macromonomer (B) is a mixture comprising macromonomers (B1) and (B2) of the general formulae
(B1)
H₂C=C(R¹)-R²-O-(R³O)ₐ-(R⁴O)_{b}-[-(R⁴O)_{c}(R⁵O)_{d}]-H (I)
and
(B2)
H₂C=C(R¹)-R²-O-(R³O)ₐ-(R⁴O)_{b}-H (II)
, where the stated amounts of the monomers are each based on the total amount of all the monomers in the copolymer (P), the molar proportion x of the macromonomers (B1) based on the sum total of (B1) and (B2) is 0.1 to 0.99, and where the radicals and indices are each defined as follows:
R¹: H or methyl,
R²: a single bond or a divalent linking group - OR³⁵- where R³⁵ is an alkylene group having 1 to 6 carbon atoms,
R³: independently ethylene groups -CH₂CH₂-, 1,2-propylene groups or alkylene groups R⁴, with the proviso that at least 90 mol% of the R³ radicals are ethylene groups,
R⁴: independently alkylene groups -CR⁶(R⁷)-CR⁸(R⁹) - where the R⁶, R⁷, R⁸ and R⁹ radicals are each independently H or a linear or branched alkyl radical having 1 to 8 carbon atoms, with the proviso that not all radicals are H and the sum total of the carbon atoms in the R⁶, R⁷, R⁸ and R⁹ radicals is 2 to 8,
R⁵ an ethylene group -CH₂CH₂-,
a a number from 10 to 35,
b a number from 5 to 30,
c a number from 0 to 2,
d a number from 1 to 15
and where the copolymer has a weight-average molecular weight M_{W} of 1*10⁶ g/mol to 30*10⁶ g/mol.

30. The copolymer (P) according to claim 29, which is a copolymer (P1) comprising
• 40 to 60% by weight of (meth)acrylamide as monomer (A), and
• 0.1 to 5% by weight of macromonomers (B1) and (B2), where the molar proportion of the macromonomers (B1) based on the sum total of (B1) and (B2) is 0.3 to 0.95 and where the radicals and indices in the formulae (I) and (II) are defined as follows:
R¹: H or methyl,
R²: a divalent linking group -OR³⁵- where R³⁵ is a linear 1,ω-alkylene group having 1 to 6 carbon atoms,
R³: ethylene groups -CH₂CH₂-,
R⁴: independently alkylene groups -CR⁶(R⁷)-CR⁸(R⁹)-, where the sum total of the carbon atoms R⁶, R⁷, R⁸ and R⁹ is 2 in each case, and where, in at least 70 mol% of the -CR⁶(R⁷)CR⁸(R⁹)- units, R⁶, R⁷ and R⁸ are each H and R⁹ is ethyl,
R⁵ an ethylene group -CH₂CH₂-,
a a number from 20 to 28,
b a number from 10 to 30,
c a number from 0 to 2,
d a number from 1.5 to 10,
and, in addition,
• 40 to 60% by weight of at least one hydrophilic, anionic, monoethylenically unsaturated monomer (C) comprising SO₃H groups or salts thereof, where the amounts of the monomers are each based on the amounts of all the monomers in the copolymer (P1).

31. The copolymer (P) according to claim 29, which is a copolymer (P2) comprising
• 50 to 85% by weight of (meth)acrylamide as monomer (A), and
• 0.1 to 10% by weight of macromonomers (B), where the molar proportion of the macromonomers (B1) based on the sum total of (B1) and (B2) is 0.3 to 0.95 and where the radicals and indices in the formulae (I) and (II) are each defined as follows:
R¹: H or methyl,
R²: a divalent linking group -OR³⁵- where R³⁵ is a linear 1,ω-alkylene group having 1 to 6 carbon atoms,
R³: ethylene groups -CH₂CH₂-,
R⁴: independently alkylene groups -CR⁶(R⁷)-CR⁸(R⁹)-, where the sum total of the carbon atoms R⁶, R⁷, R⁸ and R⁹ is 2 in each case, and where, in at least 70 mol% of the -CR⁶(R⁷)CR⁸(R⁹)- units, R⁶, R⁷ and R⁸ are each H and R⁹ is ethyl,
R⁵ an ethylene group -CH₂CH₂-,
a a number from 20 to 28,
b a number from 10 to 25,
c a number from 0 to 2,
d a number from 1.5 to 10,
and, in addition,
• 5 to 45% by weight of at least one hydrophilic, anionic, monoethylenically unsaturated monomer (C) comprising COOH groups or salts thereof, where the amounts of the monomers are each based on the amounts of all the monomers in the copolymer (P2).

32. The copolymer (P) according to claim 29, which is a copolymer (P3) comprising
• 30 to 85% by weight of (meth)acrylamide as monomer (A), and
• 0.1 to 10% by weight of macromonomers (B), where the molar proportion of the macromonomers (B1) based on the sum total of (B1) and (B2) is 0.3 to 0.95, and where the radicals and indices in the formulae (I) and (II) are each defined as follows:
R¹: H or methyl,
R²: a divalent linking group -OR³⁵- where R³⁵ is a linear 1,ω-alkylene group having 1 to 6 carbon atoms,
R³: ethylene groups -CH₂CH₂-,
R⁴: independently alkylene groups -CR⁶(R⁷)-CR⁸(R⁹)-, where the sum total of the carbon atoms R⁶, R⁷, R⁸ and R⁹ is 2 in each case, and where, in at least 70 mol% of the -CR⁶(R⁷)CR⁸(R⁹)- units, R⁶, R⁷ and R⁸ are each H and R⁹ is ethyl,
R⁵ an ethylene group -CH₂CH₂-,
a a number from 20 to 28,
b a number from 10 to 25,
c a number from 0 to 2,
d a number from 1.5 to 10,
and, in addition,
• at least two hydrophilic, anionic, monoethylenically unsaturated monomers (C) comprising 5 to 40% by weight at least one monomer (C1) comprising COOH groups or salts thereof, and 5 to 40% by weight of at least one monomer (C2) comprising -SO₃H groups or salts thereof, where the amounts of the monomers are each based on the amounts of all the monomers in the copolymer (P3).

33. An aqueous formulation comprising at least one thickening, water-soluble copolymer (P) according to any of claims 29 to 32, wherein the amount of the copolymer in the aqueous formulation is 0.02 to 2% by weight.

34. A process for preparing a water-soluble copolymer (P) according to claim 29, comprising at least the process steps of
(a) providing an aqueous monomer solution comprising at least
• water,
• 35 to 99.5% by weight of at least one uncharged, monoethylenically unsaturated, hydrophilic monomer (A) selected from the group of (meth)acrylamide, N-methyl(meth)acrylamide, N,N'-dimethyl(meth)acrylamide and N-methylol(meth)acrylamide,
• 0.01 to 15% by weight of at least one monoethylenically unsaturated macromonomer (B) at least comprising - as well as the monoethylenically unsaturated group - a hydrophilic group and a hydrophobic group, wherein at least one macromonomer (B) is a mixture comprising macromonomers (B1) and (B2) of the general formulae
(B1)
H₂C=C(R¹)-R²-O-(R³O)ₐ-(R⁴O)_{b}-[(R⁴O)_{c}(R⁵O)_{d}]-H (I)
and
(B2)
H₂C=C(R¹)-R₂-O-(R₃O)ₐ-(R⁴O)_{b}-H (II)
, where the stated amounts of the monomers are each based on the total amount of all the monomers in the copolymer (P), the molar proportion x of the macromonomers (B1) based on the sum total of (B1) and (B2) is 0.1 to 0.99, and where the radicals and indices in the formulae (I) and (II) are each as defined in claim 34, and
• 0.1 to 69.99% by weight of at least one hydrophilic, anionic, monoethylenically unsaturated monomer (C) comprising at least one acidic group selected from the group of -COOH, -SO₃H and -PO₃H₂ groups or salts thereof,
where the concentration of all the monomers together is 10 to 60% by weight based on the aqueous monomer solution,
(b) cooling the aqueous monomer solution to a temperature of less than +10°C,
(c) adding at least one thermal initiator for free-radical polymerization to the aqueous monomer solution, at least one of the initiators being able to trigger a free-radical polymerization at temperatures of less than +10°C,
(d) polymerizing the monomer mixture under essentially adiabatic conditions, with heating of the mixture under the influence of the heat of polymerization formed and with formation of a polymer gel,
(e) comminuting the polymer gel formed,
(f) drying the polymer gel.

35. The process according to claim 34, wherein the aqueous monomer solution further comprises a non-polymerizable, surface active compound (T).

36. The process according to claim 34 or 35, wherein the polymerization is conducted in a conical reactor, wherein the conical reactor is a tubular reactor (1) which has a diameter D1 and narrows conically (2) at the lower end, where the diameter at the end of the conical narrowing is D2, the ratio D1 / D2 is 2:1 to 25:1 and the angle α between the wall in the cylindrical section (1) and the wall in the region of the conical narrowing (2) is more than 120° and less than 180°, and the reactor additionally has a shut-off device (3) arranged at the lower end of the conical narrowing and at least one feed (4) at the upper end of the reactor, and
• steps (a) and (b) are undertaken in suitable mixing and cooling apparatuses outside of the conical reactor,
• the cooled monomer solution is transferred from there into the reactor through the feed (4), and
• after the polymerization, by opening the shut-off device (3) and injecting at least one gas through the feed (4), the polymer gel (5) formed is forced out of the reactor through the opened shut-off device.

## Revendications

1. Procédé d'extraction de pétrole à partir de gisements pétrolifères souterrains, selon lequel une formulation aqueuse comprenant au moins un copolymère épaississant soluble dans l'eau (P) est injectée par au moins un forage d'injection dans un gisement pétrolifère et du pétrole brut est extrait du gisement par au moins un forage de production, le copolymère soluble dans l'eau (P) comprenant au moins
(A) 35 à 99,5 % en poids d'au moins un monomère hydrophile neutre monoéthyléniquement insaturé (A) choisi dans le groupe constitué par le (méth)acrylamide, le N-méthyl(méth)acrylamide, le N,N'-diméthyl(méth)acrylamide ou le N-méthylol(méth)acrylamide,
(B) 0,01 à 15 % en poids d'au moins un macromonomère monoéthyléniquement insaturé (B), comprenant au moins, en plus du groupe monoéthyléniquement insaturé, un groupe hydrophile et un groupe hydrophobe, ainsi que
(C) 0,1 à 69,99 % en poids d'au moins un monomère hydrophile, anionique, monoéthyléniquement insaturé (C), comprenant au moins un groupe acide choisi dans le groupe constitué par les groupes -COOH, -SO₃H ou -PO₃H₂ ou leurs sels,
**caractérisé en ce que** ledit au moins un macromonomère (B) consiste en un mélange comprenant les macromonomères (B1) et (B2) des formules générales :
(B1) H₂C=C(R¹)-R²-O-(R₃O)ₐ-(R⁴O)_{b}-[(R⁴O)_{c}(R⁵O)_{d}]-H (I) et
(B2) H₂C=C(R¹)-R₂-O-(R₃O)ₐ-(R⁴O)_{b}-H (II)
les indications de quantité des monomères se rapportant à chaque fois à la quantité totale de tous les monomères dans le copolymère (P), la proportion molaire x des macromonomères (B1) par rapport à la somme de (B1) et (B2) étant de 0,1 à 0,99, et les radicaux et les indices ayant la signification suivante :
R¹ : H ou méthyle,
R² : une simple liaison ou un groupe de liaison bivalent -OR³⁵-, R³⁵ représentant un groupe alkylène de 1 à 6 atomes de carbone,
les R³ : indépendamment les uns des autres, des groupes éthylène -CH₂CH₂-, des groupes 1,2-propylène -CH₂-CH(CH₃)- ou des groupes alkylène R⁴, à condition qu'au moins 90 % en moles des radicaux R³ soient des groupes éthylène,
les R⁴ : indépendamment les uns des autres, des groupes alkylène -CR⁶(R⁷)-CR⁸(R⁹)-, les radicaux R⁶, R⁷, R⁸ et R⁹ représentant indépendamment les uns des autres H ou un radical alkyle linéaire ou ramifié de 1 à 8 atomes de carbone, à condition que tous les radicaux ne représentent pas H et que la somme des atomes de carbone des radicaux R⁶, R⁷, R⁸ et R⁹ soit de 2 à 8,
R⁵: un groupe éthylène -CH₂CH₂-,
a : un nombre de 10 à 35,
b : un nombre de 5 à 30,
c : un nombre de 0 à 2,
d : un nombre de 1 à 15,
et, par ailleurs,
- le copolymère présentant un poids moléculaire moyen en poids M_{w} de 1*10⁶ g/mol à 30*10⁶ g/mol,
- la quantité du copolymère dans la formulation aqueuse étant de 0,02 à 2 % en poids et
- la température du gisement pétrolifère étant de 20 °C à 120 °C.

2. Procédé selon la revendication 1, **caractérisé en ce que** la température du gisement est de 35 à 120 °C.

3. Procédé selon la revendication 1, **caractérisé en ce que** la température du gisement est de 40 à 100 °C.

4. Procédé selon l'une quelconque des revendications 1 à 3, **caractérisé en ce que** la formulation aqueuse comprend des sels.

5. Procédé selon la revendication 4, **caractérisé en ce que** la concentration des sels est de 5 000 ppm à 250 000 ppm par rapport à la somme de tous les composants de la formulation.

6. Procédé selon l'une quelconque des revendications 1 à 5, **caractérisé en ce que** 2 ou 3 des radicaux R⁶, R⁷, R⁸ et R⁹ représentent H et la somme des atomes de carbone des radicaux R⁶, R⁷, R⁸ et R⁹ est de 2 ou 3.

7. Procédé selon l'une quelconque des revendications 1 à 6, **caractérisé en ce que** le nombre b+c des radicaux R⁴O est choisi de sorte que la somme de tous les atomes de carbone de tous les radicaux R⁶, R⁷, R⁸ et R⁹ présents soit de 25 à 50.

8. Procédé selon l'une quelconque des revendications 1 à 7, **caractérisé en ce que** la proportion molaire x des monomères (B1) est de 0, 4 à 0, 95, par rapport à la somme de (B1) et (B2).

9. Procédé selon l'une quelconque des revendications 1 à 8, **caractérisé en ce que** le procédé est une inondation alcali-polymère, et la formulation aqueuse utilisée pour l'injection comprend en outre au moins une base.

10. Procédé selon l'une quelconque des revendications 1 à 8, **caractérisé en ce que** le procédé est une inondation alcali-tensioactif-polymère, et la formulation aqueuse utilisée pour l'injection comprend en outre au moins une base et au moins un tensioactif.

11. Procédé selon la revendication 9 ou 10, **caractérisé en ce que** la formulation aqueuse présente un pH de 9 à 13.

12. Procédé selon la revendication 10 ou 11, **caractérisé en ce qu'**au moins un des tensioactifs est un tensioactif anionique de formule générale
R²⁴-O-(R²⁸O)ₙ(R²⁹O)ₘ(R³⁰O)ₗ-R²⁵-YM (XII)
dans laquelle les radicaux et les indices ont la signification suivante :
R²⁴ : un groupe hydrocarboné aliphatique,
cycloaliphatique et/ou aromatique de 10 à 36 atomes de carbone,
les R²⁸ : indépendamment les uns des autres, des groupes butylène -CR³¹(R³²)-C^{R33}(R³⁴)-, les radicaux R³¹, R³², R³³ et R³⁴ représentant indépendamment les uns des autres H, méthyle ou éthyle, à condition que la somme des atomes de carbone de R³¹, R³², R³³ et R³⁴ soit à chaque fois de 2, et que R²⁸, R³¹, R³² et R³³ représentent H et R³⁴ éthyle dans au moins 70 % en moles des unités,
R²⁹ : des groupes 1, 2-propylène -CH₂-CH(CH₃)-,
R³⁰ : -CH₂CH₂-,
R²⁵ : une simple liaison ou un groupe alkylène de 2 à 6 atomes de carbone, qui peut éventuellement également être substitué avec des groupes OH,
Y : un groupe choisi dans le groupe constitué par les groupes sulfate, les groupes sulfonate, les groupes carboxylate et les groupes phosphate,
M : H ou un cation,
n : 0 à 25,
m : 0 à 35,
1 : 0 à 75, et
n+m+1 : 3 à 75.

13. Procédé selon la revendication 12, **caractérisé en ce que** les radicaux R²⁴ sont des radicaux hydrocarbonés aliphatiques linéaires R^{24a} de 12 à 22 atomes de carbone.

14. Procédé selon la revendication 12, **caractérisé en ce que** les radicaux R²⁴ sont des radicaux hydrocarbonés aliphatiques ramifiés R^{24b} de 12 à 28 atomes de carbone.

15. Procédé selon la revendication 10 ou 11, **caractérisé en ce qu'**au moins un des tensioactifs consiste en des sulfonates d'oléfines.

16. Procédé selon l'une quelconque des revendications 1 à 15, **caractérisé en ce que** la formulation comprend en outre au moins un complexant.

17. Procédé selon l'une quelconque des revendications 1 à 16, **caractérisé en ce que** la formulation comprend en outre au moins un capteur de radicaux.

18. Procédé selon l'une quelconque des revendications 1 à 17, **caractérisé en ce que** la formulation comprend en outre au moins un capteur d'oxygène.

19. Procédé selon l'une quelconque des revendications 1 à 18, **caractérisé en ce que** la formulation comprend en outre au moins un réactif sacrificiel.

20. Procédé selon l'une quelconque des revendications 1 à 19, **caractérisé en ce que** le copolymère (P) est un copolymère (P1), qui comprend :
- 40 à 60 % en poids de (méth)acrylamide en tant que monomère (A) et
- 0,1 à 5 % en poids de macromonomères (B1) et (B2), la proportion molaire des macromonomères (B1) par rapport à la somme de (B1) et (B2) étant de 0,3 à 0,95, et les radicaux et des indices dans les formules (I) et (II) ayant la signification suivante :
R¹ : H ou méthyle,
R² : un groupe de liaison bivalent -OR³⁵-, R³⁵ représentant un groupe 1,ω-alkylène linéaire de 1 à 6 atomes de carbone,
R³ : des groupes éthylène -CH₂CH₂-,
les R⁴ : indépendamment les uns des autres, des groupes alkylène -CR⁶(R⁷)-CR⁸(R⁹)-, la somme des atomes de carbone de R⁶, R⁷, R⁸ et R⁹ étant à chaque fois de 2, et
R⁶, R⁷ et R⁸ représentant H et R⁹ éthyle dans au moins 70 % en moles des unités -CR⁶(R⁷)CR⁸(R⁹)-,
R⁵: un groupe éthylène -CH₂CH₂-,
a : un nombre de 20 à 28,
b : un nombre de 10 à 25,
c : un nombre de 0 à 1,5,
d : un nombre de 1,5 à 10,
et, par ailleurs,
- 40 à 60 % en poids d'au moins un monomère hydrophile, anionique, monoéthyléniquement insaturé (C), comprenant des groupes -SO₃H ou leurs sels, les quantités des monomères se rapportant à chaque fois aux quantités de tous les monomères dans le copolymère (P1).

21. Procédé selon la revendication 20, **caractérisé en ce que** la formulation aqueuse comprend des sels en une concentration de 5 000 ppm à 250 000 ppm par rapport à la somme de tous les composants de la formulation.

22. Procédé selon la revendication 20 ou 21, **caractérisé en ce que** la température du gisement est de 50 °C à 120 °C.

23. Procédé selon l'une quelconque des revendications 1 à 19, **caractérisé en ce que** le copolymère (P) est un copolymère (P2), qui comprend :
- 50 à 85 % en poids de (méth)acrylamide en tant que monomère (A) et
- 0,1 à 10 % en poids de macromonomères (B1) et (B2), la proportion molaire des macromonomères (B1) par rapport à la somme de (B1) et (B2) étant de 0,3 à 0,95, et les radicaux et des indices dans les formules (I) et (II) ayant la signification suivante :
R¹ : H ou méthyle,
R² : un groupe de liaison bivalent -OR³⁵-, R³⁵ représentant un groupe 1,ω-alkylène linéaire de 1 à 6 atomes de carbone,
R³ : des groupes éthylène -CH₂CH₂-,
les R⁴ : indépendamment les uns des autres, des groupes alkylène -CR⁶(R⁷)-CR⁸(R⁹)-, la somme des atomes de carbone de R⁶, R⁷, R⁸ et R⁹ étant à chaque fois de 2, et
R⁶, R⁷ et R⁸ représentant H et R⁹ éthyle dans au moins 70 % en moles des unités -CR⁶(R⁷)CR⁸(R⁹)-,
R⁵: un groupe éthylène -CH₂CH₂-,
a : un nombre de 20 à 28,
b : un nombre de 10 à 25,
c : un nombre de 0 à 2,
d : un nombre de 1,5 à 10,
et, par ailleurs,
- 5 à 45 % en poids d'au moins un monomère hydrophile, anionique, monoéthyléniquement insaturé (C), comprenant des groupes -COOH ou leurs sels, les quantités des monomères se rapportant à chaque fois aux quantités de tous les monomères dans le copolymère (P2).

24. Procédé selon la revendication 23, **caractérisé en ce que** la formulation aqueuse comprend des sels en une concentration de 2 000 ppm à 60 000 ppm par rapport à la somme de tous les composants de la formulation.

25. Procédé selon la revendication 23 ou 24, **caractérisé en ce que** la température du gisement est de 35 °C à 90 °C.

26. Procédé selon l'une quelconque des revendications 1 à 19, **caractérisé en ce que** le copolymère (P) est un copolymère (P3), qui comprend :
- 30 à 85 % en poids de (méth)acrylamide en tant que monomère (A) et
- 0,1 à 10 % en poids de macromonomères (B1) et (B2), la proportion molaire des macromonomères (B1) par rapport à la somme de (B1) et (B2) étant de 0,3 à 0,95, et les radicaux et des indices dans les formules (I) et (II) ayant la signification suivante :
R¹ : H ou méthyle,
R² : un groupe de liaison bivalent -OR³⁵-, R³⁵ représentant un groupe 1,ω-alkylène linéaire de 1 à 6 atomes de carbone,
R³ : des groupes éthylène -CH₂CH₂-,
les R⁴ : indépendamment les uns des autres, des groupes alkylène -CR⁶(R⁷)-CR⁸(R⁹)-, la somme des atomes de carbone de R⁶, R⁷, R⁸ et R⁹ étant à chaque fois de 2, et R⁶, R⁷ et R⁸ représentant H et R⁹ éthyle dans au moins 70 % en moles des unités -CR⁶(R⁷)CR⁸(R⁹)-,
R⁵: un groupe éthylène -CH₂CH₂-,
a : un nombre de 20 à 28,
b : un nombre de 10 à 25,
c : un nombre de 0 à 2,
d : un nombre de 1,5 à 10,
et, par ailleurs,
- au moins deux monomères hydrophiles, anioniques, monoéthyléniquement insaturés (C), comprenant 5 à 40 % en poids d'au moins un monomère (C1) comprenant des groupes -COOH ou leurs sels, et 5 à 40 % en poids d'au moins un monomère (C2) comprenant des groupes -SO₃H ou leurs sels, les quantités des monomères se rapportant à chaque fois aux quantités de tous les monomères dans le copolymère (P3).

27. Procédé selon la revendication 26, **caractérisé en ce que** la formulation aqueuse comprend des sels en une concentration de 5 000 ppm à 150 000 ppm par rapport à la somme de tous les composants de la formulation.

28. Procédé selon la revendication 26 ou 27, **caractérisé en ce que** la température du gisement est de 40 °C à 100 °C.

29. Copolymère soluble dans l'eau (P), comprenant au moins
(A) 35 à 99,5 % en poids d'au moins un monomère hydrophile neutre monoéthyléniquement insaturé (A) choisi dans le groupe constitué par le (méth)acrylamide, le N-méthyl(méth)acrylamide, le N,N'-diméthyl(méth)acrylamide ou le N-méthylol(méth)acrylamide,
(B) 0,01 à 15 % en poids d'au moins un macromonomère monoéthyléniquement insaturé (B), comprenant au moins, en plus du groupe monoéthyléniquement insaturé, un groupe hydrophile et un groupe hydrophobe, ainsi que
(C) 0,1 à 69,99 % en poids d'au moins un monomère hydrophile, anionique, monoéthyléniquement insaturé (C), comprenant au moins un groupe acide choisi dans le groupe constitué par les groupes -COOH, -SO₃H ou -PO₃H₂ ou leurs sels,
**caractérisé en ce que** ledit au moins un macromonomère (B) consiste en un mélange comprenant les macromonomères (B1) et (B2) des formules générales :
(B1) H₂C=C(R¹)-R²-O-(R³O)ₐ-(R⁴O)_{b}-[(R⁴O)_{c}(R⁵O)_{d}]-H (I) et
(B2) H₂C=C(R¹)-R₂-O-(R₃O)ₐ-(R⁴O)_{b}-H (II)
les indications de quantité des monomères se rapportant à chaque fois à la quantité totale de tous les monomères dans le copolymère (P), la proportion molaire x des macromonomères (B1) par rapport à la somme de (B1) et (B2) étant de 0,1 à 0,99, et les radicaux et des indices ayant la signification suivante :
R¹ : H ou méthyle,
R² : une simple liaison ou un groupe de liaison bivalent -OR³⁵-, R³⁵ représentant un groupe alkylène de 1 à 6 atomes de carbone,
les R³ : indépendamment les uns des autres, des groupes éthylène -CH₂CH₂-, des groupes 1,2-propylène ou des groupes alkylène R⁴, à condition qu'au moins 90 % en moles des radicaux R³ soient des groupes éthylène,
les R⁴ : indépendamment les uns des autres, des groupes alkylène -CR⁶(R⁷)-CR⁸(R⁹)-, les radicaux R⁶, R⁷, R⁸ et R⁹ représentant indépendamment les uns des autres H ou un radical alkyle linéaire ou ramifié de 1 à 8 atomes de carbone, à condition que tous les radicaux ne représentent pas H et que la somme des atomes de carbone des radicaux R⁶, R⁷, R⁸ et R⁹ soit de 2 à 8,
R⁵ : un groupe éthylène -CH₂CH₂-,
a : un nombre de 10 à 35,
b : un nombre de 5 à 30,
c : un nombre de 0 à 2,
d : un nombre de 1 à 15,
et le copolymère présentant un poids moléculaire moyen en poids M_{w} de 1*10⁶ g/mol à 30*10⁶ g/mol.

30. Copolymère (P) selon la revendication 29, **caractérisé en ce qu'**il s'agit d'un copolymère (P1), qui comprend :
- 40 à 60 % en poids de (méth)acrylamide en tant que monomère (A) et
- 0,1 à 5 % en poids de macromonomères (B1) et (B2), la proportion molaire des macromonomères (B1) par rapport à la somme de (B1) et (B2) étant de 0,3 à 0,95, et les radicaux et des indices dans les formules (I) et (II) ayant la signification suivante :
R¹ : H ou méthyle,
R² : un groupe de liaison bivalent -OR³⁵-, R³⁵ représentant un groupe 1,ω-alkylène linéaire de 1 à 6 atomes de carbone,
R³ : des groupes éthylène -CH₂CH₂-,
les R⁴ : indépendamment les uns des autres, des groupes alkylène -CR⁶(R⁷)-CR⁸(R⁹)-, la somme des atomes de carbone de R⁶, R⁷, R⁸ et R⁹ étant à chaque fois de 2, et
R⁶, R⁷ et R⁸ représentant H et R⁹ éthyle dans au moins 70 % en moles des unités -CR⁶(R⁷)CR⁸(R⁹)-,
R⁵ : un groupe éthylène -CH₂CH₂-,
a : un nombre de 20 à 28,
b : un nombre de 10 à 30,
c : un nombre de 0 à 2,
d : un nombre de 1,5 à 10,
et, par ailleurs,
- 40 à 60 % en poids d'au moins un monomère hydrophile, anionique, monoéthyléniquement insaturé (C), comprenant des groupes -SO₃H ou leurs sels, les quantités des monomères se rapportant à chaque fois aux quantités de tous les monomères dans le copolymère (P1).

31. Copolymère (P) selon la revendication 29, **caractérisé en ce qu'**il s'agit d'un copolymère (P2), qui comprend :
- 50 à 85 % en poids de (méth)acrylamide en tant que monomère (A) et
- 0,1 à 10 % en poids de macromonomères (B), la proportion molaire des macromonomères (B1) par rapport à la somme de (B1) et (B2) étant de 0,3 à 0,95, et les radicaux et des indices dans les formules (I) et (II) ayant la signification suivante :
R¹ : H ou méthyle,
R² : un groupe de liaison bivalent -OR³⁵-, R³⁵ représentant un groupe 1,ω-alkylène linéaire de 1 à 6 atomes de carbone,
R³ : des groupes éthylène -CH₂CH₂-,
les R⁴ : indépendamment les uns des autres, des groupes alkylène -CR⁶(R⁷)-CR⁸(R⁹)-, la somme des atomes de carbone de R⁶, R⁷, R⁸ et R⁹ étant à chaque fois de 2, et
R⁶, R⁷ et R⁸ représentant H et R⁹ éthyle dans au moins 70 % en moles des unités -CR⁶(R⁷)CR⁸(R⁹)-,
R⁵ : un groupe éthylène -CH₂CH₂-,
a : un nombre de 20 à 28,
b : un nombre de 10 à 25,
c : un nombre de 0 à 2,
d : un nombre de 1,5 à 10,
et, par ailleurs,
- 5 à 45 % en poids d'au moins un monomère hydrophile, anionique, monoéthyléniquement insaturé (C), comprenant des groupes -COOH ou leurs sels, les quantités des monomères se rapportant à chaque fois aux quantités de tous les monomères dans le copolymère (P2).

32. Copolymère (P) selon la revendication 29, **caractérisé en ce qu'**il s'agit d'un copolymère (P3), qui comprend :
- 30 à 85 % en poids de (méth)acrylamide en tant que monomère (A) et
- 0,1 à 10 % en poids de macromonomères (B), la proportion molaire des macromonomères (B1) par rapport à la somme de (B1) et (B2) étant de 0,3 à 0,95, et les radicaux et des indices dans les formules (I) et (II) ayant la signification suivante :
R¹ : H ou méthyle,
R² : un groupe de liaison bivalent -OR³⁵-, R³⁵ représentant un groupe 1,ω-alkylène linéaire de 1 à 6 atomes de carbone,
R³ : des groupes éthylène -CH₂CH₂-,
les R⁴ : indépendamment les uns des autres, des groupes alkylène -CR⁶(R⁷)-CR⁸(R⁹)-, la somme des atomes de carbone de R⁶, R⁷, R⁸ et R⁹ étant à chaque fois de 2, et
R⁶, R⁷ et R⁸ représentant H et R⁹ éthyle dans au moins 70 % en moles des unités -CR⁶(R⁷)CR⁸(R⁹)-,
R⁵ : un groupe éthylène -CH₂CH₂-,
a : un nombre de 20 à 28,
b : un nombre de 10 à 25,
c : un nombre de 0 à 2,
d : un nombre de 1,5 à 10,
et, par ailleurs,
- au moins deux monomères hydrophiles, anioniques, monoéthyléniquement insaturés (C), comprenant 5 à 40 % en poids d'au moins un monomère (C1) comprenant des groupes -COOH ou leurs sels, et 5 à 40 % en poids d'au moins un monomère (C2) comprenant des groupes -SO₃H ou leurs sels, les quantités des monomères se rapportant à chaque fois aux quantités de tous les monomères dans le copolymère (P3).

33. Formulation aqueuse comprenant au moins un copolymère épaississant soluble dans l'eau (P) selon l'une quelconque des revendications 29 à 32, **caractérisée en ce que** la quantité du copolymère dans la formulation aqueuse est de 0,02 à 2 % en poids.

34. Procédé de fabrication d'un copolymère soluble dans l'eau (P) selon la revendication 29, comprenant au moins les étapes de procédé suivantes :
(a) la préparation d'une solution aqueuse de monomères comprenant au moins
- de l'eau,
- 35 à 99,5 % en poids d'au moins un monomère hydrophile neutre monoéthyléniquement insaturé (A) choisi dans le groupe constitué par le (méth)acrylamide, le N-méthyl(méth)acrylamide, le N,N'-diméthyl(méth)acrylamide ou le N-méthylol(méth)acrylamide,
- 0,01 à 15 % en poids d'au moins un macromonomère monoéthyléniquement insaturé (B), comprenant au moins, en plus du groupe monoéthyléniquement insaturé, un groupe hydrophile et un groupe hydrophobe, ledit au moins un macromonomère (B) consistant en un mélange comprenant les macromonomères (B1) et (B2) des formules générales :
(B1)
H₂C=C(R¹)-R²-O-(R³O)ₐ-(R⁴O)_{b}-[(R⁴O)_{c}(R⁵O)_{d}]-H (I)
et
(B2)
H₂C=C(R¹)-R₂-O-(R₃O)ₐ-(R⁴O)_{b}-H (II)
les indications de quantité des monomères se rapportant à chaque fois à la quantité totale de tous les monomères dans le copolymère (P), la proportion molaire x des macromonomères (B1) par rapport à la somme de (B1) et (B2) étant de 0,1 à 0,99, et les radicaux et des indices dans les formules (I) et (II) ayant la signification définie dans la revendication 34, ainsi que
- 0,1 à 69,99 % en poids d'au moins un monomère hydrophile, anionique, monoéthyléniquement insaturé (C), comprenant au moins un groupe acide choisi dans le groupe constitué par les groupes -COOH, -SO₃H ou -PO₃H₂ ou leurs sels,
la concentration de tous les monomères ensemble étant de 10 à 60 % en poids, par rapport à la solution aqueuse de monomères,
(b) le refroidissement de la solution aqueuse de monomères à une température inférieure à +10 °C,
(c) l'ajout d'au moins un initiateur thermique pour la polymérisation radicalaire à la solution aqueuse de monomères, au moins un des initiateurs pouvant déclencher une polymérisation radicalaire à des températures inférieures à +10 °C,
(d) la polymérisation du mélange de monomères dans des conditions essentiellement adiabatiques, le mélange étant chauffé sous l'effet de la chaleur de polymérisation formée et un gel polymère étant formé,
(e) le broyage du gel polymère formé,
(f) le séchage du gel polymère.

35. Procédé selon la revendication 34, **caractérisé en ce que** la solution aqueuse de monomères comprend en outre un composé tensioactif non polymérisable (T).

36. Procédé selon la revendication 34 ou 35, **caractérisé en ce que** la polymérisation est réalisée dans un réacteur conique, le réacteur conique étant un réacteur tubulaire (1) d'un diamètre D1, qui comprend un rétrécissement conique (2) à l'extrémité inférieure, le diamètre à l'extrémité du rétrécissement conique étant D2, le rapport D1/D2 étant de 2:1 à 25:1, et l'angle α entre la paroi dans la partie cylindrique (1) et la paroi dans la zone du rétrécissement conique (2) étant de plus de 120° et de moins de 180°, et le réacteur comprenant en outre un dispositif d'arrêt (3) agencé à l'extrémité inférieure du rétrécissement conique, et au moins une conduite d'alimentation (4) sur le côté supérieur du réacteur,
- les étapes (a) et (b) étant réalisées dans des dispositifs de mélange et de refroidissement appropriés à l'extérieur du réacteur conique,
- la solution de monomères refroidie étant transférée depuis ces dispositifs par la conduite d'alimentation (4) dans le réacteur, et
- le gel polymère formé (5) étant éjecté du réacteur par le dispositif d'arrêt ouvert après la polymérisation par ouverture du dispositif d'arrêt (3) et injection d'au moins un gaz par la conduite d'alimentation (4).
